# EUROPEAN PATENT APPLICATION

(11) **EP 2 849 096 A1**
(43) Date of publication of application: **18.03.2015**
(21) Application number: 14164459.1
(22) Date of filing: 11.04.2014
(51) Int. Cl.: G06F 17/30

(54) **Electronic apparatus, program recommendation system, program recommendation method, and program recommendation program**

(30) Priority: 13.09.2013 JP 2013190683
(71) Applicant: Kabushiki Kaisha Toshiba, Tokyo 105-8001 (JP)
(72) Inventor: Kaneko, Yuki, Tokyo, 105-8001 (JP); Tsuboi, Sougo, Tokyo, 105-8001 (JP); Kataoka, Hideo, Tokyo, 105-8001 (JP)
(74) Representative: Henkel, Breuer & Partner

(57) **Abstract**

According to one embodiment, an electronic apparatus (101, 111, 201, 202) characterized by comprising a group specifying controller (101, 111) configured to specify a cluster group comprising clusters in content being played back, an access controller (101, 111) configured to access a collection of arbitrary cluster groups related to the cluster group specified by the group specification controller, a search controller (101, 111) configured to search for content specified by a first cluster group included in the collection accessed by the access controller, and a content presentation controller (101, 111) configured to present a result of search by the search controller.

## Description

Embodiments described herein relate generally to an electronic apparatus, a program recommendation system, a program recommendation method, and a program recommendation program.

An electronic apparatus which receives and records a program provided by a broadcaster or a distributor and plays back the program according to a request from the user, such as a recording device (hereinafter referred to as a client device or a user) connected to a television receiver or a monitor (display) device, for example, is capable of acquiring a variety of types of information via a network such as the Internet.

The client device (user) is capable of recording a number of programs. Further, the user (client device) can access a variety of databases via the network. For example, the user is capable of acquiring characters, main content, and the like (names of main solo performers and group performers in a music program, for example) of a recorded program from a database (external service/server) on the network on the basis of the program name (program title), broadcasting station (channel name), and broadcast date and time of the program.

A television receiver which prompts the user to record or view a program on the basis of information provided by the network, however, requires the user to enter a variety of elements, such as inputting a keyword and setting a genre, in a process of specifying a program desired by the user.

Even after it becomes possible to specify the name of a group that appears in the program, in order for the user to specify an individual belonging to the group and to be prompted to record or view the program desired, a special input (setting) approach or a complex combination is required in inputting a keyword, setting a genre, or the like.

It is therefore an object of the present invention to provide an electronic apparatus, a program recommendation system, a program recommendation method, and a program recommendation program capable of extracting information relevant to a program being viewed or played back by the user, and prompting the user to set automatic recording of the program or view the program.

A general architecture that implements the various features of the embodiments will now be described with reference to the drawings. The drawings and the associated descriptions are provided to illustrate the embodiments and not to limit the scope of the invention.
FIG. 1 illustrates an exemplary overview of a system configuration according to an embodiment.
FIG. 2 illustrates an exemplary overview of the system configuration according to the embodiment.
FIG. 3 illustrates an exemplary configuration of a relevant program database server of an electronic apparatus according to the embodiment.
FIG. 4A illustrates an example of information provided by a data provider in a system according to the embodiment.
FIG. 4B illustrates an example of information provided by the data provider in the system according to the embodiment.
FIG. 4C illustrates an example of information provided by the data provider in the system according to the embodiment.
FIG. 4D illustrates an example of information provided by the data provider in the system according to the embodiment.
FIG. 5A illustrates an exemplary screen display (cloud service home screen display) of a display device according to the embodiment.
FIG. 5B illustrates an exemplary screen display (cloud service my page screen display) of the display device according to the embodiment.
FIG. 5C is an exemplary screen display (input waiting state on a screen display currently being played back [normal display]) of the display device according to the embodiment.
FIG. 5D illustrates an exemplary screen display (program community service screen) of the display device according to the embodiment.
FIG. 5E illustrates an exemplary screen display (setting screen of the program community service) of the display device according to the embodiment.
FIG. 5F illustrates an exemplary screen display (setting screen of the program community service) of the display device according to the embodiment.
FIG. 5G illustrates an exemplary screen display (display screen of the program community service) of the display device according to the embodiment.
FIG. 5H illustrates an exemplary screen display (display screen of the program community service) of the display device according to the embodiment.
FIG. 6 illustrates an exemplary conception of "automatic recording", which uses a [program community] according to the embodiment.
FIG. 7A illustrates an exemplary conception of "automatic recording", which uses the [program community] according to the embodiment.
FIG. 7B illustrates an example of setting "automatic recording", which uses the [program community] according to the embodiment.
FIG. 7C illustrates an example of setting "automatic recording", which uses the [program community] according to the embodiment.
FIG. 8 illustrates an exemplary conception of "automatic recording" in a plurality of television sets using the [program community] according to the embodiment.
FIG. 9A illustrates an example of [clusters] and a [cluster group] (program community service) stored in a relevant program database according to the embodiment.
FIG. 9B illustrates an example of [clusters] and a [cluster group] (program community service) stored in the relevant program database according to the embodiment.
FIG. 10A illustrates an example of [clusters] and [cluster groups] (program community service) stored in the relevant program database according to the embodiment.
FIG. 10B illustrates an example of [clusters] and [cluster groups] (program community service) stored in the relevant program database according to the embodiment.
FIG. 10C illustrates an example of [clusters] and [cluster groups] (program community service) stored in the relevant program database according to the embodiment.
FIG. 11A illustrates an exemplary screen display of the display device according to the embodiment.
FIG. 11B illustrates exemplary contents of the screen display shown in FIG. 11A.
FIG. 12A illustrates an exemplary screen display of the display device according to the embodiment.
FIG. 12B illustrates exemplary contents of a screen display shown in FIG. 12A.
FIG. 12C illustrates exemplary operations corresponding to button displays on the screen display shown in FIG. 12A.
FIG. 13A illustrates an exemplary screen display of the display device according to the embodiment.
FIG. 13B illustrates exemplary contents of the screen display shown in FIG. 13A.
FIG. 13C illustrates exemplary operations corresponding to button displays on the screen display shown in FIG. 13A.
FIG. 14A illustrates an exemplary screen display of the display device according to the embodiment.
FIG. 14B illustrates exemplary contents of the screen display shown in FIG. 14A.
FIG. 14C illustrates exemplary operations corresponding to button displays on the screen display shown in FIG. 14A.
FIG. 15A illustrates an exemplary screen display of the display device according to the embodiment.
FIG. 15B illustrates exemplary contents of the screen display shown in FIG. 15A.
FIG. 15C illustrates exemplary operations corresponding to button displays on the screen display shown in FIG. 15A.
FIG. 16A illustrates an exemplary screen display of the display device according to the embodiment.
FIG. 16B illustrates exemplary contents of the screen display shown in FIG. 16A.
FIG. 17A illustrates an exemplary screen display of the display device according to the embodiment.
FIG. 17B illustrates exemplary contents of the screen display shown in FIG. 17A.
FIG. 17C illustrates exemplary operations corresponding to button displays on the screen display shown in FIG. 17A.
FIG. 18A illustrates an exemplary screen display of the display device according to the embodiment.
FIG. 18B illustrates exemplary contents of the screen display shown in FIG. 18A.
FIG. 19A illustrates an exemplary screen display of the display device according to the embodiment.
FIG. 19B illustrates exemplary contents of the screen display shown in FIG. 19A.
FIG. 20A illustrates an exemplary screen display of the display device according to the embodiment.
FIG. 20B illustrates exemplary contents of the screen display shown in FIG. 20A.
FIG. 21A illustrates an exemplary screen display of the display device according to the embodiment.
FIG. 21B illustrates exemplary contents of the screen display shown in FIG. 21A.
FIG. 22A illustrates an exemplary screen display of the display device according to the embodiment.
FIG. 22B illustrates exemplary contents of the screen display shown in FIG. 22A.
FIG. 23A illustrates an exemplary screen display of the display device according to the embodiment.
FIG. 23B illustrates exemplary contents of the screen display shown in FIG. 23A.
FIG. 24A illustrates an exemplary screen display of the display device according to the embodiment.
FIG. 24B illustrates exemplary contents of the screen display shown in FIG. 24A.
FIG. 24C illustrates exemplary operations corresponding to button displays on a screen display shown in FIG. 24A.
FIG. 24D illustrates an exemplary screen display of the display device according to the embodiment.
FIG. 24E illustrates an exemplary screen display of the display device according to the embodiment.
FIG. 25A illustrates an exemplary screen display of the display device according to the embodiment.
FIG. 25B illustrates exemplary contents of the screen display shown in FIG. 25A.
FIG. 25C illustrates exemplary operations corresponding to button displays on the screen display shown in FIG. 25A.
FIG. 26 illustrates exemplary contents of the screen display of the display device according to the embodiment.
FIG. 27 illustrates exemplary contents of the screen display of the display device according to the embodiment.
FIG. 28 illustrates exemplary contents of the screen display of the display device according to the embodiment.
FIG. 29 illustrates an exemplary operation in the display device according to the embodiment, in which the user is prompted to make [Automatic recording settings].
FIG. 30 schematically shows a conception of a program community service according to the embodiment.
FIG. 31 illustrates an example of data transfer between the display device and the server (cloud service) in the program community service according to the embodiment.
FIG. 32 illustrates an example of a main configuration of the server (cloud service) according to the embodiment.
FIG. 33 illustrates an example of a configuration of the program community (server) and an automatic recording process according to the embodiment.
FIG. 34 illustrates an example of a process for searching for a target for automatic recording in the program community service according to the embodiment.
FIG. 35 illustrates an exemplary overview of an EPG searcher in the program community service according to the embodiment.
FIG. 36 illustrates an example of search by the EPG searcher in the program community service according to the embodiment.
FIG. 37 illustrates an example of filtering in a first filtering device in the program community service according to the embodiment.
FIG. 38 illustrates an example of filtering in a third filtering device in the program community service according to the embodiment.
FIG. 39 illustrates an example of filtering (condition settings) based on automatic recording condition settings in the program community service according to the embodiment.
FIG. 40 illustrates an example of setting the order of priority for channels to be targets for recording in the automatic recording condition settings in the program community service according to the embodiment.
FIG. 41 illustrates an example of filtering in which an event (scheduled in advance by the user) in the program community service is taken into account, according to the embodiment.
FIG. 42 illustrates an example of timing for update of automatic recording scheduling in the program community service according to the embodiment.
FIG. 43 illustrates an example of setting the order of priority at the time of automatic recording scheduling in the program community service according to the embodiment.
FIG. 44 illustrates an example of setting the order of priority at the time of automatic recording scheduling in the program community service according to the embodiment.
FIG. 45 illustrates an example of a preview display of the automatic recording scheduling in the program community service according to the embodiment.
FIG. 46 illustrates an exemplary configuration of a program list processing application in the program community service according to the embodiment.
FIG. 47 illustrates an exemplary screen display of a shift screen based on a shift of screen displays of the display device according to the embodiment.
FIG. 48 illustrates an exemplary screen display of a shift screen based on a shift of screen displays of the display device according to the embodiment.
FIG. 49 illustrates an exemplary screen display of a shift screen based on a shift of screen displays of the display device according to the embodiment.
FIG. 50 illustrates an exemplary screen display of a shift screen based on a shift of screen displays of the display device according to the embodiment.
FIG. 51 illustrates an exemplary screen display of a shift screen based on a shift of screen displays of the display device according to the embodiment.

Various embodiments will be described hereinafter with reference to the accompanying drawings.

In general, according to one embodiment, an electronic apparatus comprising a group specifying module configured to specify a cluster group including clusters in content being played back, an access module configured to access a collection of arbitrary cluster groups relevant to the cluster group specified by the group specification module, a search module configured to searching for content specified by a cluster group included in the collection accessed by the access module, and a content presentation module configured to present a result of search by the search module.

Embodiments will now be described hereinafter in detail with reference to the accompanying drawings.

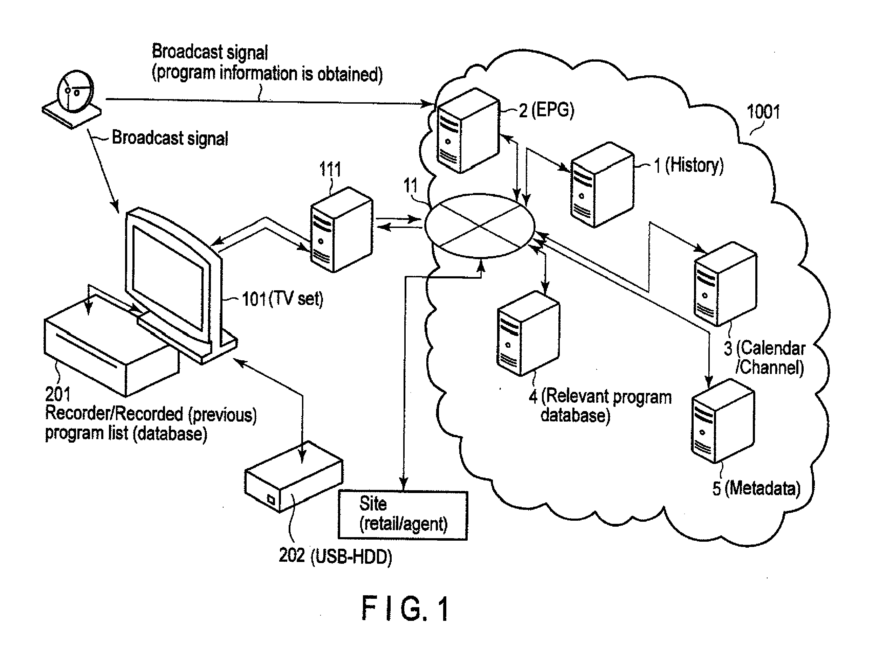

FIG. 1 is a conceptual diagram illustrating connection among an electronic apparatus 101 as a user (client device), a network connected to the electronic apparatus 101 via a data controller 111, such as the Internet 11, and at least one server or a server group (external service mechanism) 1001 positioned on the Internet 11. The external service mechanism 1001 may also be referred to as a cloud service (program community), for example. The data controller 111 may be embedded in the electronic apparatus 101.

The electronic apparatus 101 is a digital television broadcast receiver (hereinafter referred to as a television set) capable of receiving and playing back a program, for example. FIG. 1 shows an example in which a USB hard disk device 202, which records a predetermined program under the control of a recording device 201 or the television set 101, is connected to the television set 101.

When equipped with a recording function, the television set 101 is capable of creating a list of recorded programs stored in the television set 101, recording device 201, or USB hard disk device 202. When not equipped with a recording function, the television set 101 is equipped with a home server function in which the television set 101 functions as a database capable of creating a list of recorded programs stored in the recording device 201 or USB hard disk device 202.

The television set 101 may be any device equipped with a user interface, a wireless or wired communication function (short-distance wireless communications via Bluetooth [registered trademark], for example, communications with the outside via a network [the Internet], or the like), a function of receiving a broadcast, a processing function of processing a received broadcast, i.e., a program, a program output function of outputting the program, a storage (recording) function, or the like. Examples of such devices include a personal computer (PC) equipped with a function of receiving a broadcast, a video display device (monitor device) connected to a video recording device (recording device) including a broadcast receiving device, and a portable device equipped with a broadcast receiving function. The term broadcast includes a broadcast that is provided by a broadcaster (broadcast station) as electromagnetic waves propagating through space, and a broadcast that is distributed by a distributor via a cable or a network such as an Internet Protocol (IP) network. A broadcast includes video, speech, and/or music, for example, and provides a program of a certain time (broadcast time) unit in succession or for a predetermined period (of time). A program will also be referred to as content or a stream. The term video includes a moving image, a still image, text (information represented by characters and symbols represented by coded strings), and an arbitrary combination thereof.

The external service mechanism 1001 includes a history server (preference information database) 1, EPG server (database) 2, calendar/channel data server (database) 3, relevant program database (server) 4, data provision server (metadata server) 5, and the like. The history server 1, relevant program database 4, and EPG server 2 are managed by the manufacturer (maker) of the television set 101 or a contractor therefor, or prepared and managed by a company independent from the manufacturer of the television set 101, for example. The data provision server 5, on the other hand, is usually prepared and managed by a metadata creation mechanism (metadata creation company), for example.

The history server 1 stores the user's preferences, for example, information on programs viewed by the user or recorded programs played back by the user, i.e., a history (log data) and the like. The history server 1 obtains information such as an access history of sites accessed by the television set 101, information on payment for goods purchased on an accessed site, purchased tickets of a concert or the like, and accommodation arrangement, for example. Data transfer between the television set 101 and the history server 1, i.e., supplying (transmitting) information from the television set 101 to the history server 1 and acquiring (receiving) information by the television set 101 from the history server 1, is managed by the data controller 111.

The data controller 111 manages data transfer between the television set 101 and external service mechanism 1001, i.e., each of the history server 1, EPG server 2, calendar/channel data server 3, relevant program database 4, and data provision server 5. The data controller 111 further performs a recommendation process (has a function as a recommendation processing engine [RE]) in which the data controller 111 receives recommendation from the user and processes the received recommendation as preference information.

The data controller 111 further controls connection and data transfer between an arbitrary site (web page) positioned on the Internet 11 and the television set (user) 101. The data controller 111 may be positioned between the television set 101 and the network (Internet 11), or positioned inside the cloud service 1001 (arbitrary position between external service mechanisms 1, ..., N).

The EPG server 2 obtains information on a program received by the television set (user) 101 independently from direct reception by the television set 101, generates a database on the basis of the obtained information, and stores the generated database.

The calendar/channel data server (database) 3 stores the broadcast data and time of a program scheduled for recording by the user, the name of a regional broadcast station (channel) on which a broadcast can be received (viewed/recorded) by the user, or a channel name provided by a distributor, the broadcast schedule of other stations, the broadcast time of which partially overlaps with the broadcast time of the program scheduled for recording by the user, rebroadcast information (including a program scheduled for recording by the user), and the like.

When the user sends a predetermined operation input (control instruction) to the television set 101 via a remote control unit (operation input part/portable device) while the user is viewing a program or playing back a recorded program, the relevant program database 4 extracts programs and data relevant to the program viewed by the user or the program scheduled by the user that is stored in the history server 1 on the basis of a variety of types of data provided by the data provision server 5 and stored in the relevant program database 4, as will be described later.

The data provision server 5 stores a variety of types of information relevant to the above-described programs, i.e., information that is prepared and managed by a metadata creation mechanism (maker) that handles metadata and can be extracted as a keyword received from the user (television set) 101 or the history server 1, or the user's preferences stored in the history server 1, for example, program information on the program viewed by the user or the program scheduled for recording by the user, a "keyword" included in the program, or information registered by the user.

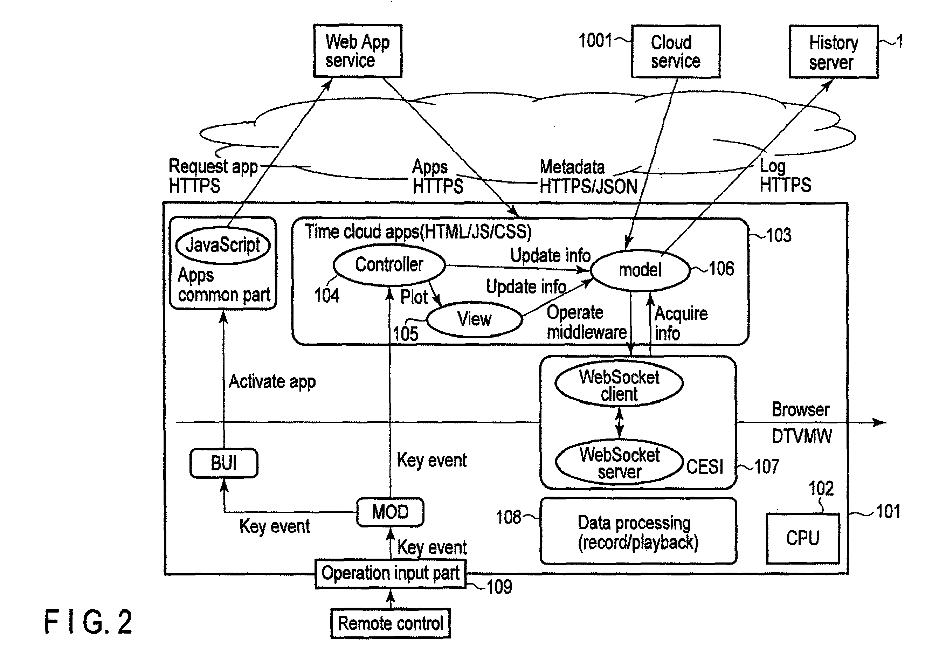

The television set 101 stores a cloud application (HTML/JS/CSS), an example of which is shown in FIG. 2, as firmware of the CPU (processor) 121 included in the television set 101, in order to access the Internet 11 via the data controller 111. The cloud application may be acquired as an application that can be operated by the CPU 121, or stored in a storage medium or the like in advance.

FIG. 2 illustrates an overview of the cloud application (HTML/JS/CSS).

The cloud application (HTML/JS/CSS) 103 includes "Controller" 104 which manages processing of a key event (core event), for example, "View" 105 which manages the screen display, "model" 106 which manages information acquisition from an arbitrary server (external service mechanism 1001) 1, ..., N connected via DTVMW (path to and from a browser [Internet 11]) or the Internet 11 and operation of the television set 101, and the like. The television set 101 further includes: a cloud module (CESI) 107 configured to transfer data to and from the history server 1, EPG server 2, and relevant program database 4 via a network, i.e., extract a recorded program containing information that matches information relevant to information featured in the program currently being viewed or the recorded program currently being played back by the user by referring to information stored in the data provision server 5; a data processing (record and playback) module 108 configured to record and play back a program, search for a program, a scene, or a keyword (product), and the like; an operation input part (remote control reception unit) 109 configured to receive an instruction input from an operator (user), and the like. The operation input part 109 may be a portable device equipped with a predetermined application (software) such that an operation of the television set 101 can be controlled, for example, such as a tablet device or a multi-function communication device (smartphone).

The television set 101 transmits the IP address of the television set 101, preference information, information featured in the program being viewed or the recorded program being played back, and the like to the relevant program database 4 and history server 1 via the data controller 111 and the Internet 11.

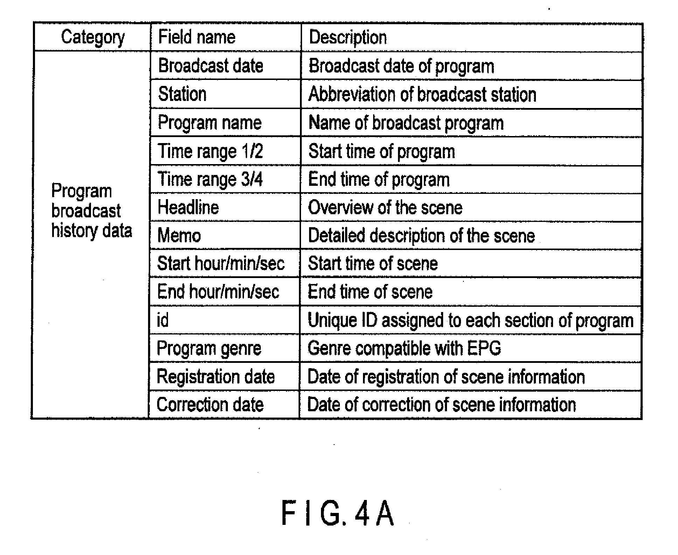

As the examples in FIGS. 4A to 4D show, the relevant program database 4 acquires metadata stored in a metadata creation company, i.e., the data provision server 5, extracts a recorded program containing information matching information featured on the program currently being viewed or the recorded program being played back by the user on the television set 101 or information relevant to the program, and provides the television set 101 with information on the extracted program. The relevant program database 4 reflects the user's preferences specified by a recommendation process. Extraction of a program (scene) can be performed such that a variety of scenes included in the program, for example, a program in which the group "SAB" or members Miss "BCD", Miss "EFG", or Miss "HIJ" of the group individually appears, can be extracted. In this case, the program (scene) of the group "SAB" can be extracted by either including or excluding "SA" or "AB". When the group "SAB" is set as a keyword, however, the inclusion of "SA" or "AB" reduces the failure of extraction, but also increases the extraction of "ABx" and "xSA" (where x is an arbitrary character, number, symbol, or the like), which is not necessarily highly relevant to "SAB", as noise. In order to reduce the extraction of noise, it is important to set exceptional conditions, which, however, requires knowledge and time and trouble. The keyword and genre used in specification of a scene included in a program and the above-described "SAB", Miss "BCD", Miss "EFG", Miss "HIJ", "ABx", and "xSB" will be referred to as [clusters] in a community which will be described later. The community will also be referred to as a [cluster group].

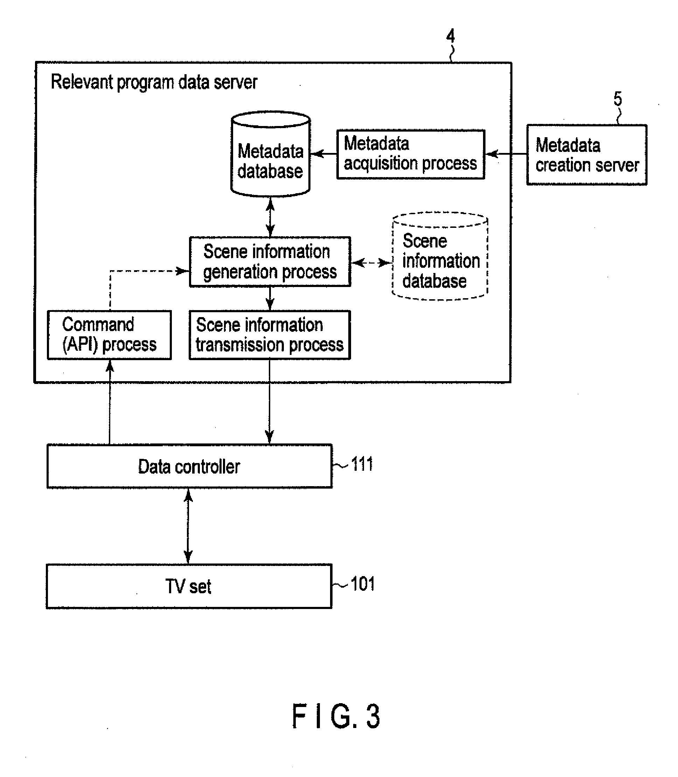

FIG. 3 illustrates an exemplary configuration of the relevant program database according to the embodiment.

A description will now be given on functions provided by the relevant program database 4. In the description that will be given below, by interposing the data controller 111 during transfer of data between the television set (user/client device) 101 and relevant program database 4 or metadata server (data provision server) 5, each of information provided (transmitted) by the user (television set 101) to the data provision server 5 and information provided by the data provision server 5 to the user (received by the user), a corresponding keyword, and the like can be accumulated in the history server 1.

### <Command (WebAPI) Processing>

The relevant program database 4 acquires a variety of types of data, which will be described below, from the metadata server 5, and provides a recorded program list server stored in the television set 101 (may be stored in a recording device 201 or a USB hard disk 202) with the acquired data. Examples of the variety of types of data include "scene information", "relevant program data", and the like.

### <Acquisition of "Scene Information" List>

A "scene information" list of a program matching conditions specified by the user (television set) 101 is acquired. When a plurality of "scene information" lists of the program matching the specified conditions exist, all the lists are acquired. When a "scene information" list that matches the conditions does not exist, a notification is made to that effect.

### <Acquisition of "Program List" Including "Scene Information" List>

A "program list", which gives a list of programs including a "scene information" list that matches the conditions specified by the user (television set) 101, is acquired.

### <Acquisition of List of <Scene Information> Lists>

A "list of scene information lists", which is a list of "scene information" lists registered in a program specified by the user (television set) 101 is acquired.

### <Acquisition of Scene Information List (ID Specification) >

A list of "scene information" of a specified ID is acquired from the "list of scene information lists".

### <Search for "Scene Information">

A "scene information list" containing "scene information" that matches specified search conditions is acquired. In the search conditions, an arbitrary keyword entered by the user can be specified.

### <Acquisition of "Scene Information" based on User's Preferences>

Metadata or the like matching "scene information", i.e., a "keyword" based on the user's preferences managed by the history server 1 is acquired.

### <Metadata Acquisition Process>

Metadata provided by the metadata server 5 is acquired.

The metadata provided by the metadata server 5 is acquired using WebAPI provided by the metadata server 5.

### <"Scene Information" Generation and Transmission Process>

"Scene information" is generated or extracted as "relevant program data" on the basis of metadata acquired from the metadata server 5, and the "scene information" is transmitted to the television set 101.

A description will be given below on a process to be performed during generation of "scene information".
(A) Assignment of Program Information

The television set 101 transmits the following:
(a) Program name (or identification information such as a program ID);
(b) Program broadcast date and time; and
(c) Channel number

The metadata server 5 searches a database in the metadata server 5 on the basis of the (a) program name, (b) program broadcast date and time, and (c) channel number received from the television set 101, and when an appropriate program in which one or more items of "scene information" are registered exists, the one or more items of "scene information" of the program are generated, and then transmitted to the television set 101.

When a plurality of appropriate programs exist, the metadata server 5 transmits all the candidates to the television set 101.

When no appropriate programs exist, the metadata server 5 transmits a notification to the television set 101 to that effect. That is, the television set 101 transmits identification information (the program name, program broadcast date, channel number, and the like) of the program to the metadata server 5, and receives "scene information" corresponding to a scene of the program from the metadata server 5.

### (B) Search for "Scene Information"

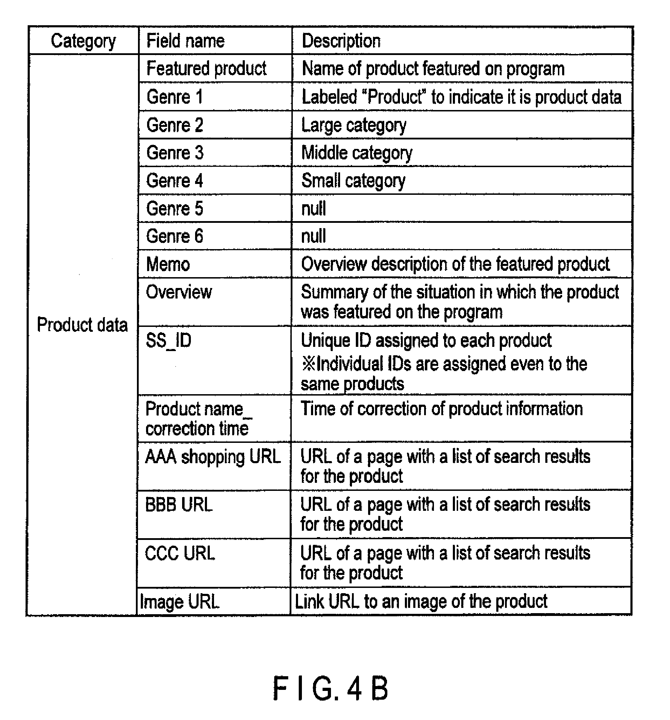

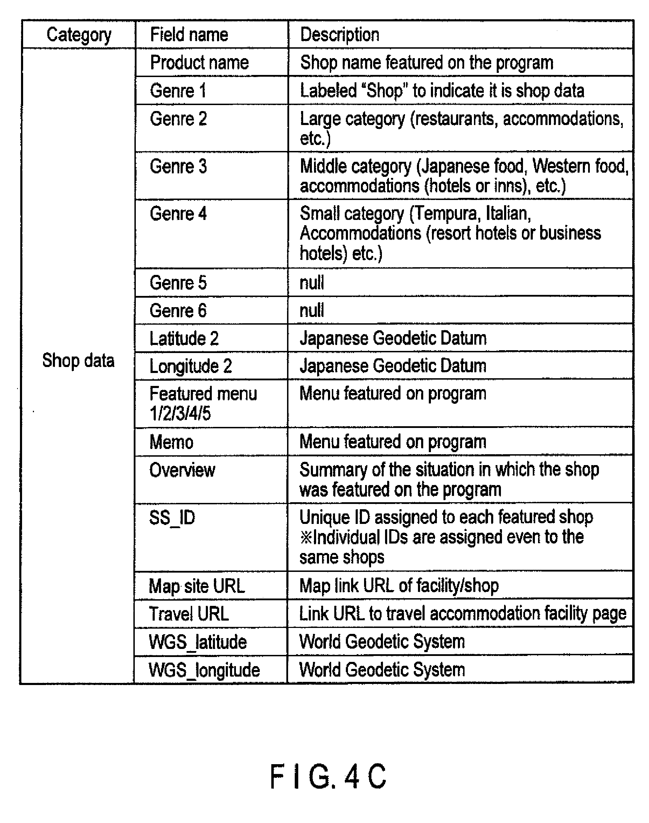

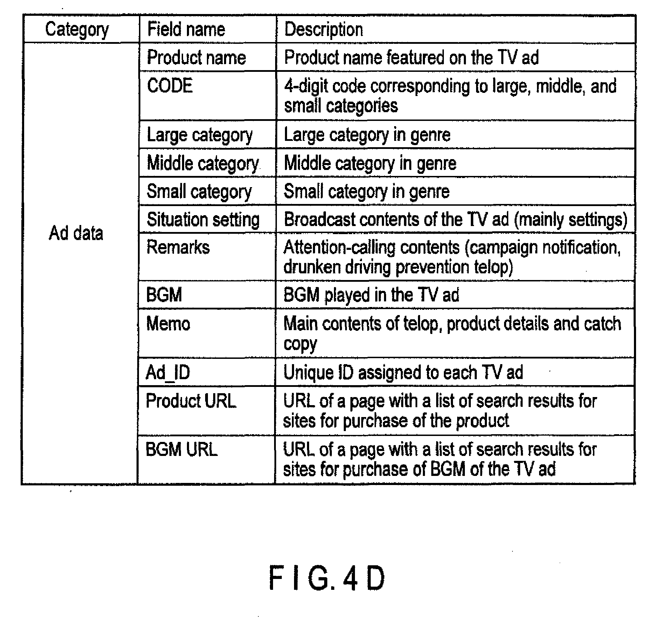

The database in the metadata server 5 is searched for metadata information matching the search conditions received by the television set 101, and a "scene information" list containing the appropriate metadata information is transmitted to the television set 101. The metadata to be searched for includes program broadcast history data, product data, shop data, and TV and broadcast history data, and the like shown in FIGS. 4A, 4B, 4C, and 4D.

### (C) Generation of Scene Information

"Scene information" is generated by associating the broadcast history data, the product data, the shop data, and the TV ad broadcast history data stored in the database of the metadata server 5 with the "scene information". There are cases where product information and shop information do not exist in one item of "scene information". There are also cases where a plurality of items of product data and shop data are associated with one item of "scene information".

### (D) Extraction of Relevant Program Data

The relevant program database 4 sets the search conditions such that information matching information relevant to information featured in the program currently being viewed or the recorded program being played back by the user on the television set 101 can be extracted from a recorded program recorded and stored by the recording device 201 (or the USB hard disk device 202 [television set 101]) from the database in the metadata server 5.

That is, the relevant program database 4 extracts metadata that is relevant to or can be associated with information on recorded programs stored in the television set 101, recording device 201, or USB hard disk device 202 as a recorded program list and information on the program currently being played back by the user from the metadata server 5, and generates a database on the basis of the metadata and stores the database such that the user (television set 101) can access the database.

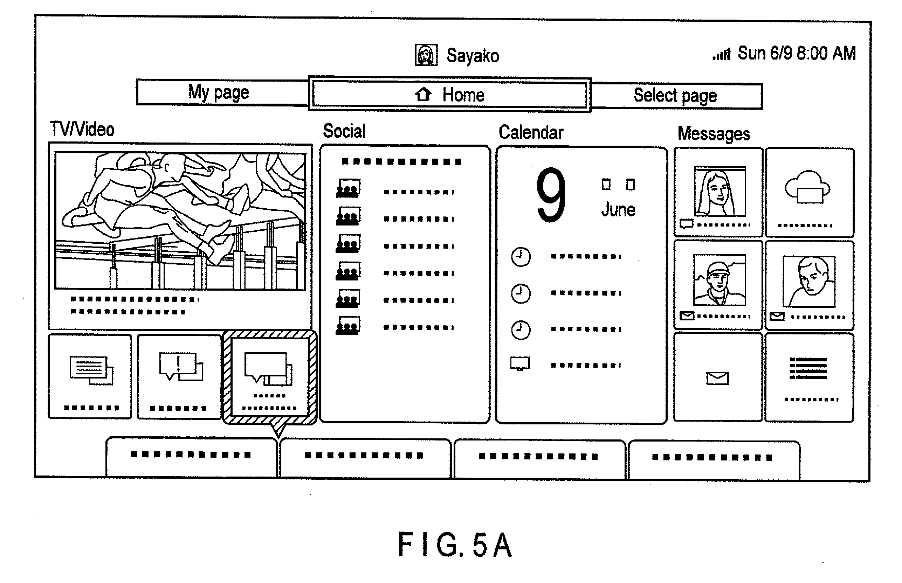

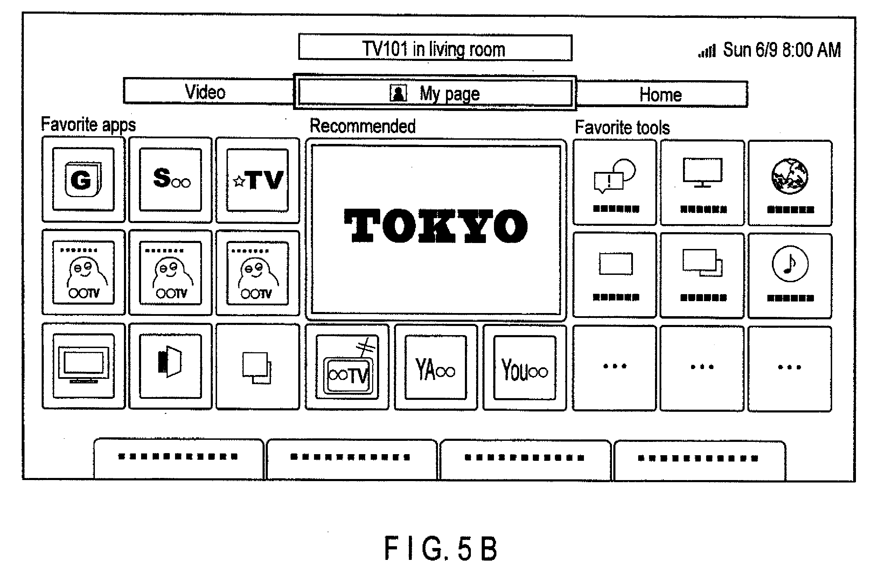

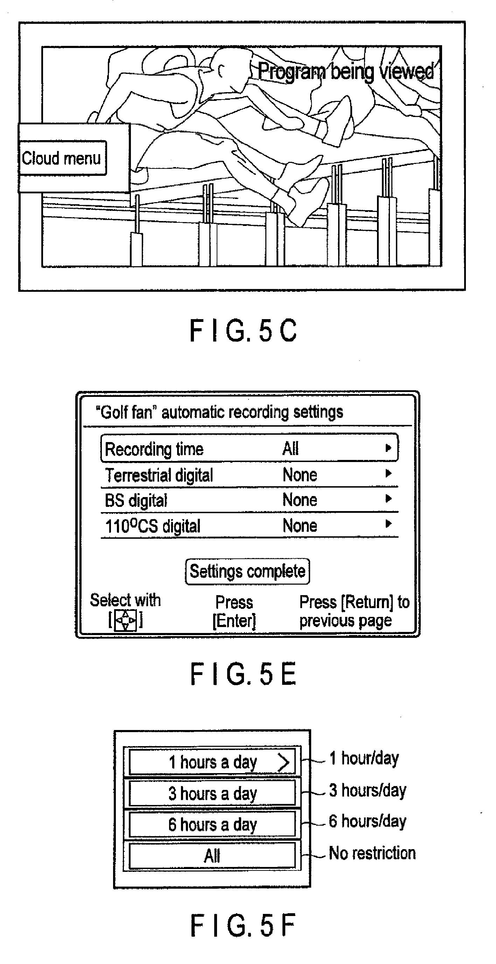

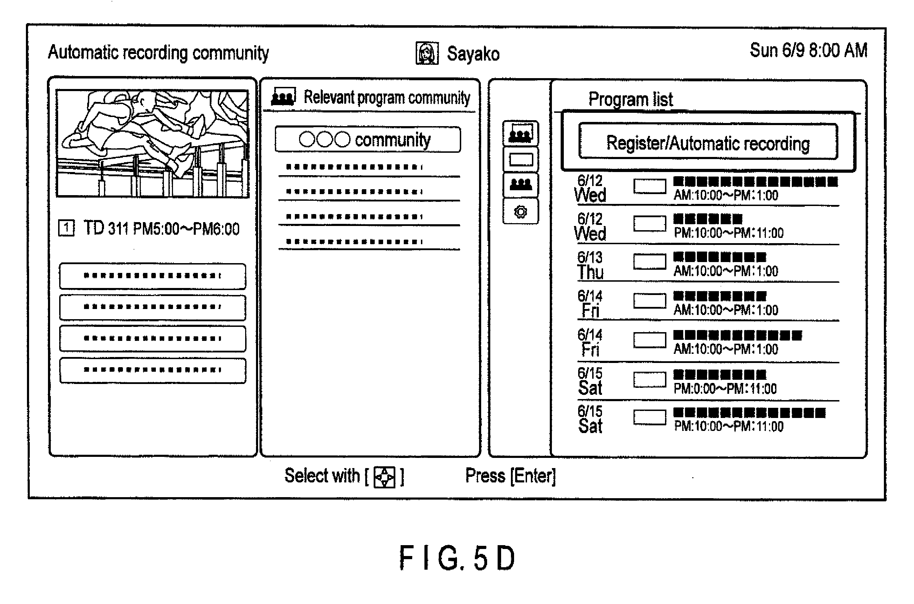

In a state in which the television set 101 (user), recording device (recorded program list database/home server) 201, and data controller 111 described above are connected to the cloud service 1001 (or connected to the cloud service 1001 after start of viewing or playback), by positioning a cursor on an "automatic recording" button 501 on a cloud menu [Home] screen display shown in FIG. 5A of a program currently being broadcast and viewed or a cloud menu [My Page] screen display shown in FIG. 5B and pressing an enter button (of a remote control device), or causing a screen display of a program being played back (viewed) shown in FIG. 5C to display a menu screen by operating a remote control device, selecting "automatic recording", and pressing the enter button, an "automatic recording community" screen display 511 shown in FIG. 5D is displayed. "Automatic recording", which uses the "automatic recording community", can be achieved by registration by the user in a "cloud service (TimeOn)" (subscription to "program community" by the user), which will be described below.

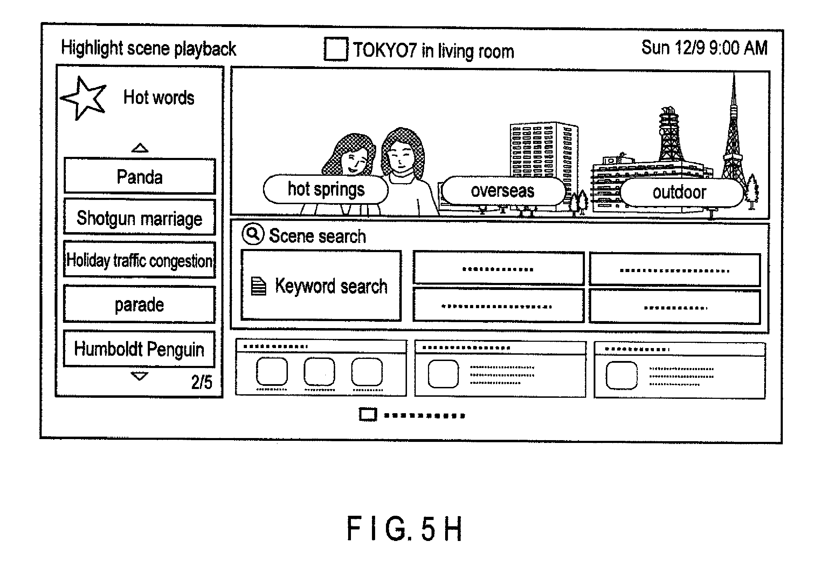

The cloud service (TimeOn) includes services that allow the user to use an "automatic recording community" and participate in (register in) a "program community", create (and change and add) a "program community" as a master, acquire [points] added for creation, change, and addition of the "program community", set "automatic recording" by registering in the "program community", and the like, as shown in FIG. 5D. The cloud service (TimeOn) also allows the user to perform "highlight scene playback", for example, based on a "highlight scene playback" screen display shown in FIG. 5H.

By selecting an arbitrary program from the "[Program Community ([cluster group])" screen display shown in FIG. 5D and turning on "Register/automatic Recording" button (turning on the enter button by positioning a cursor on a bar display), settings for automatic recording (recording of programs in a list made by the community by registering in "automatic recording community ([cluster group])") are completed. It is also possible to make settings on an upper limit on the recording time per day from a setting screen for setting the upper limit, as shown in FIG. 5E, or to make settings on the range of channels to be recorded (regular [terrestrial] broadcasting/BS broadcasting/CS broadcasting) from a setting screen for setting the range of channels, as shown in FIG. 5F. The upper limit setting screen display shown in FIG. 5E and the channel range setting screen display shown in FIG. 5F can be arbitrarily displayed in response to a request for a setting screen display at the time of user registration in the "cloud service (TimeOn)" (subscription by the user to "program community ([cluster group])") or a screen display (setting screen display) at predetermined timing made in accordance with a remote control operation by the user.

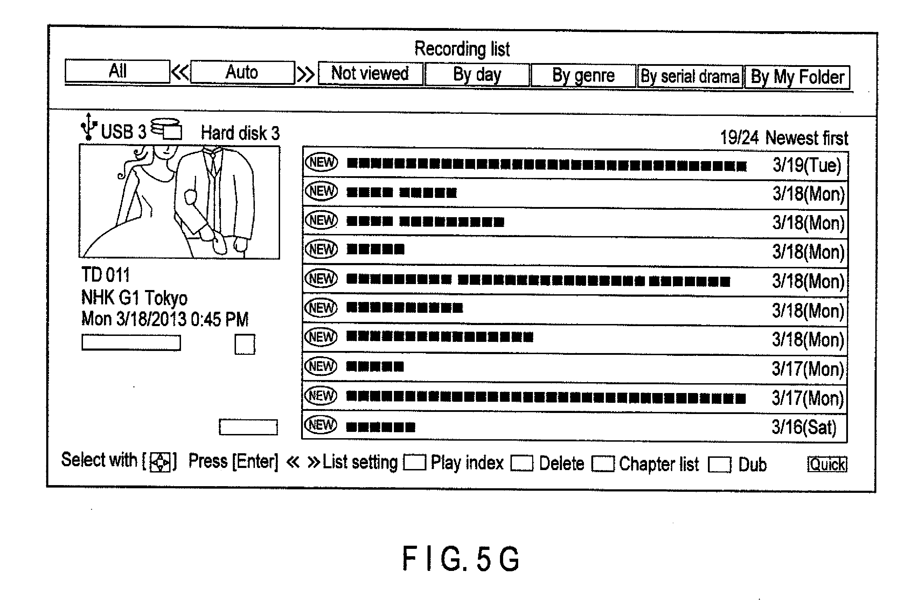

The programs recorded using the "automatic recording community ([cluster group])", i.e., the "automatically recorded" programs are displayed on the television set 101 as an "automatic recording list" shown in FIG. 5G (as described above). The "automatically recorded" programs can be linked with (referred to from) a "highlight scene playback" screen display (FIG. 5H), which will be described later.

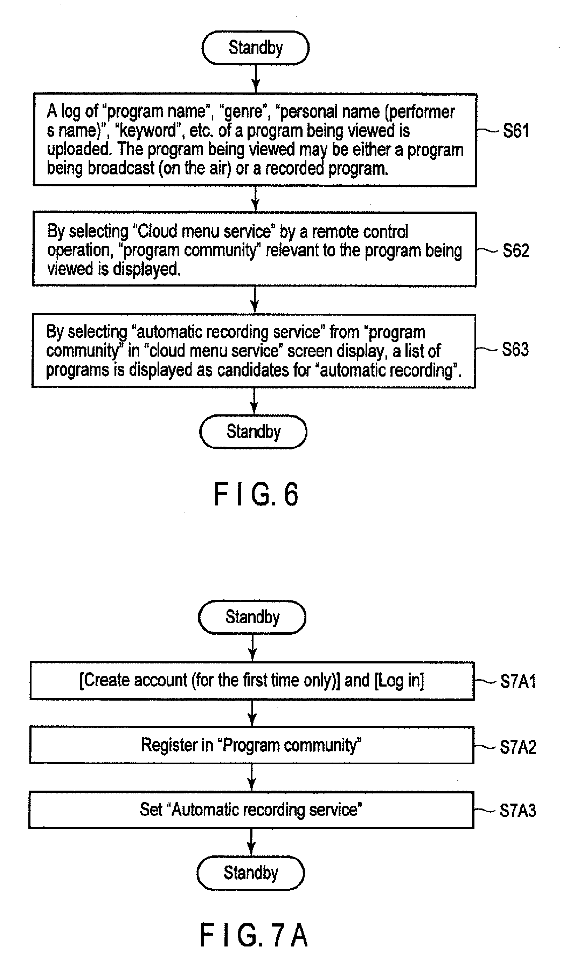

FIG. 6 illustrates an exemplary procedure of registration (setting) in an "automatic recording community ([cluster group])", which achieves "automatic recording".

The procedure starts by uploading a log of the "program name", "genre", "personal name (performer's name)", "keyword", and the like of the program being viewed. The program being viewed may be either a program currently being broadcast (on the air) or a recorded program (S61).

When the user selects "Cloud menu service" by a remote control operation, a "program community" relevant to the program being viewed is displayed (S52).

When an "automatic recording service" is selected from the "program community" in the "cloud menu service" screen display, a list of programs is displayed as candidates for "automatic recording". In this case, the latest list of programs included in the selected [program community ([cluster group]) is displayed as the list of programs as candidates for "automatic recording" (S63).

The programs displayed as candidates for "automatic recording" in the list are set (scheduled) as programs for "automatic recording" in a target television set.

For example, when the user wants to record all of a program community ([cluster group]) [A] for programs in which Mr. A appears, a program community ([cluster group]) [B] for programs in which Mr. B appears, and a drama ranking community ([cluster group]) [C], and there are two television sets that can be used for recording, the communities [A] and [C] can be set to "automatic recording" in the first television set [TV1], and the community [B] can be set to "automatic recording" in the second television set [TV2], for example.

FIGS. 7A to 7C illustrate an overview of settings necessary for achieving "automatic recording".

Basically, "automatic recording" can be set by [Account creation (for the first time only)] and [Log in] (S7A1) shown in FIG. 7A, registration in a "program community" (S7A2), and setting of "automatic recording" (S7A3).

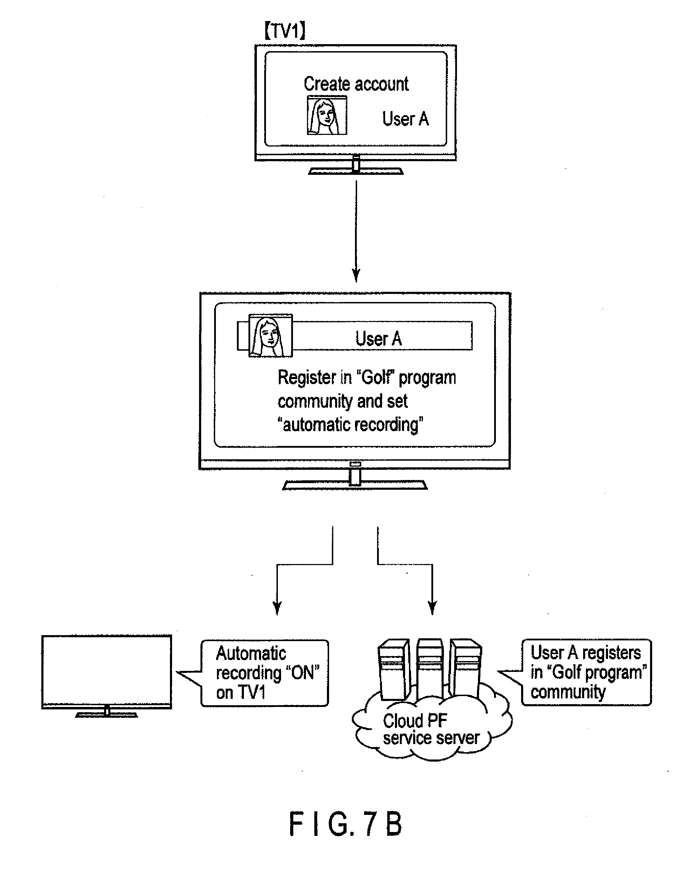

FIG. 7B illustrates an example in which user A performs [Account creation] in the first television set [TV1], registers in a "golf" program community, for example, and sets "automatic recording".

It is thereby possible for the cloud service server to recognize (detect) that user A has registered in (subscribed to) the "golf" program community, and turn on (set) the "automatic recording" in the first television set [TV1].

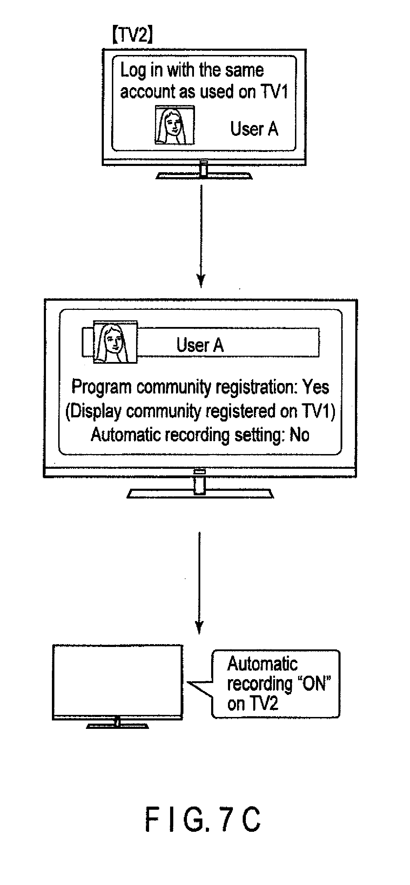

FIG. 7C illustrates a case where user A logs in to the second television set [TV2] with the account same as used in the first television set [TV1] and registers in a program community ([cluster group]), but "automatic recording" is not set.

In this case, the second television set [TV2] is capable of displaying the community registered in the first television set [TV1] and turning on (setting) "automatic recording" in the second television set [TV2].

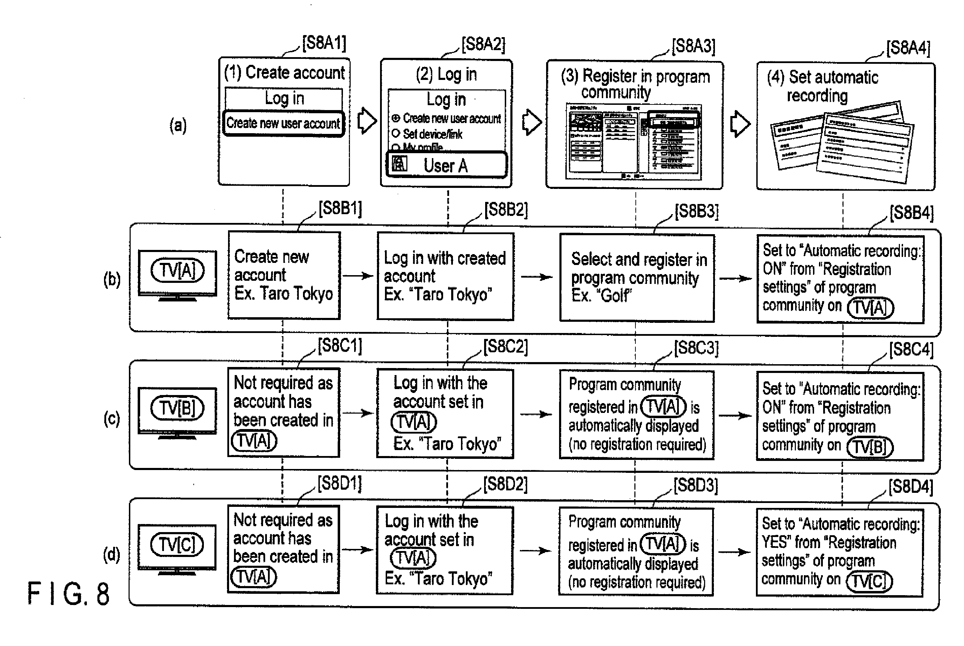

FIGS. 8(a) to 8(d) illustrate an example of setting "automatic recording" in a plurality of television sets.

Basically, "automatic recording" can be set by [Account creation] (S8A1), [Log in] (S8A2), registration in "program community ([cluster group])" (S8A3), and "automatic recording" setting (S8A4) shown in FIG. 8(a). The [account creation] (S8A1) is required only for the first time, and the procedure usually starts from [Log in] (S8A2).

FIG. 8(b) illustrates an example in which user A (Taro Tokyo) performs [Account creation] in the first television set [TV (A)] (S8B1), performs [Log in] with the created account (S8B2), registers in a "golf" program community ([cluster group]) (S8B3), for example, and sets "automatic recording" from registration settings of the program community on the first television set [TV (A)] (S8B4).

FIG. 8(c) illustrates a case where user A logs in to the second television set [TV (B)] with the same account as used in the first television set [TV (A)] (S8C2) and the program community registered in the first television set [TV (A)] is displayed as the program community (S8C3). Since the account has already been created in the first television set [TV (A)], creation of a new account is not required (S8C1).

Thereby, "automatic recording" is set from registration settings of the program community on the second television set [TV (B)]. That is, the second television set [TV (B)] is capable of displaying the community already registered in the first television set [TV (A)] and turning on (setting) "automatic recording" of the second television set [TV (B)] (S8C4).

FIG. 8(d) illustrates a case where user A logs in to the third television set [TV (C)] with the same account as used in the first television set [TV (A)] (S8D2), and the program community registered in the first television set [TV (A)] is displayed as the program community (S8D3). Since the account has already been created in the first television set [TV (A)], creation of a new account is not required (S8D1).

Thereby, "automatic recording" is set from the program community registration settings on the third television set [TV (C)]. That is, the third television set [TV (C)] is capable of displaying the community registered in the first television set [TV (A)] and turning on (setting) "automatic recording" of the third television set [TV (C)] (S8D4).

That is, as shown in FIGS. 8(a) to 8(d), when the user logs in to a plurality of television sets with the same account, connection is automatically made to a registered [program community ([cluster group])]. That is, one "program community" can be registered in a plurality of television sets. In this case, "automatic recording" of the "program community" can be performed only on a television set in which "Register" is set. In other words, in order to achieve "automatic recording" in a plurality of television sets, the [program community] should be registered in each of the television sets.

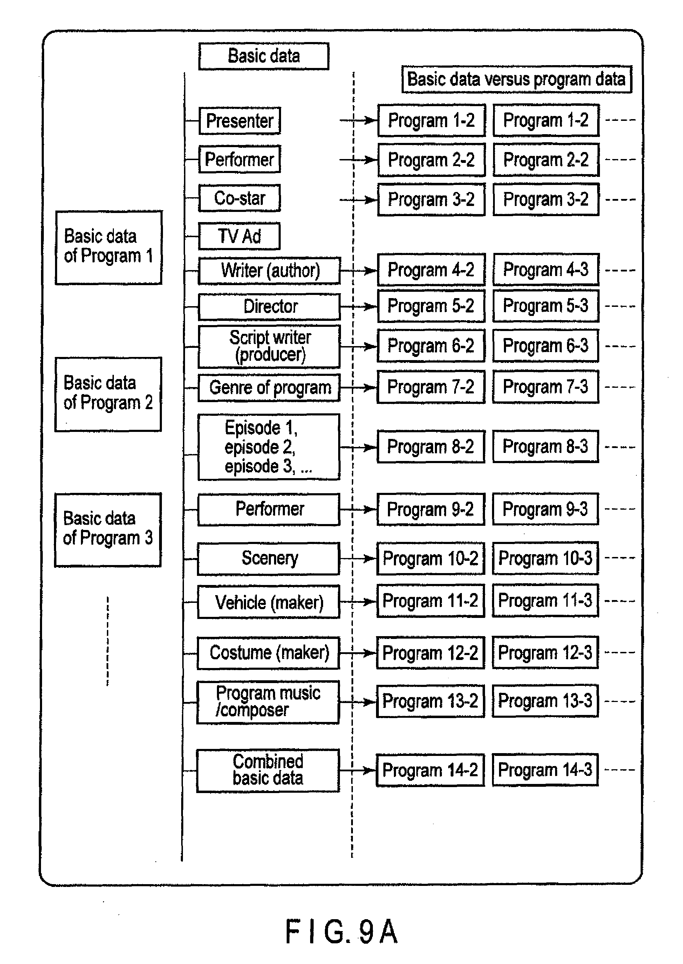

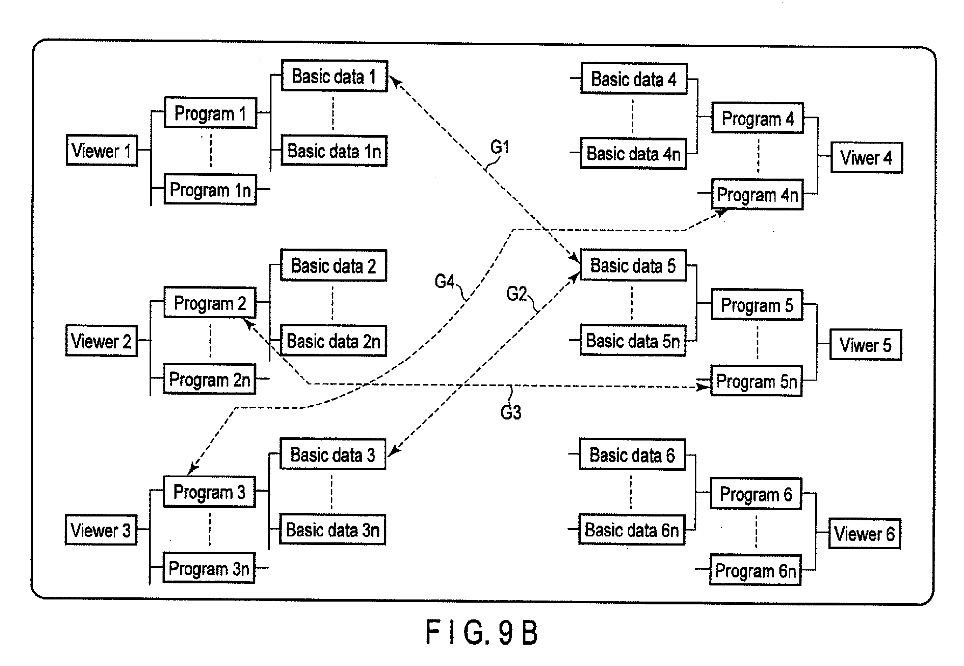

FIGS. 9A and 9B illustrate an example of [clusters] and a [cluster group] used in "automatic recording", which uses a [program community].

FIG. 9A illustrates an example of basic data ([clusters] and a [cluster group]) of a program 1.

As shown in FIG. 9A, the program name, broadcast channel, broadcast time range, and the like, which are unique to the program exist as a variety of [clusters] of the program 1. Examples of the [clusters] also include information on the presenter, performer, co-star [1], co-star [2], ..., and co-star [n] (where n is an arbitrary number), and television advertisement (TV ad) information (such as the sponsor [company name] and product) of the program. Even with a program having the same program name, the information such as the presenter, performer, co-star [1], co-star [2], ..., and co-star [n], and the TV ad information may be changed according to factors such as the broadcast timing (every week/specific date and time [XX Spectacular]/rerun program).

The basic data ([clusters]), on the other hand, includes non-changing data. For example, in a case where the program 1 is a drama program, information such as the writer, director, scriptwriter, and genre of the program is such basic data.

Examples of such basic data further includes information as to whether the program 1 being broadcast is Episode 1 or Episode 2, for example, the performer, the scenery (photography location), a vehicle (maker) that appears in the program, the costume worn (maker) by the performer, the program music, and the composer, for example. Further, combined basic data, formed of a combination of the above-described individual items of basic data, also exist.

Such data may accompany information (program identifying information) on other programs containing the same basic data.

When the program 1 is a music program, and when at least one (group) of the performers belongs to a group and an independent performance time is allocated to at least one of the members of the group (members of the group are performers [co-stars]) too, for example, if the group "SAB" and the members of the group Miss "BCD", Miss "EFG", and Miss "HIJ" individually appear on the (same) program, [clusters] exist for each of the group and the members. For example, when Miss "BCD" and Miss "EFG" form another group, the group is identified as a further independent [cluster]. Even when the group "SAB" does not appear and only Miss "BCD" and Miss "HIJ" appear, Miss "BCD" and Miss "HIJ" are identified as independent [clusters]. A collection (group) of one or more [clusters] can be referred to as a [cluster group].

Sorting or classification (grouping) of a variety of types of data ([clusters]) is presented by way of illustration in FIG. 9A, and is not necessarily limited to the illustrated system. For example, link information (or [clusters] grouping regulations) may be described such that all the files are formed as an integral data file and relevant data is linked between relevant data items ([clusters]). When a [cluster group] including a special [cluster] that should be "always included (never excluded)" is created, for example, the [clusters] grouping regulations (link information) are efficient for preventing lack of such a special [cluster]. The [cluster] grouping regulations are also useful for grouping in which the above-described group "SAB" is excluded and only Miss "BCD", who is a member of the group, is extracted.

FIG. 9B illustrates an example of association routes, i.e., elements of grouping when [cluster groups] are created using the above-described variety of types of data files when a viewer and another viewer are associated (grouped).

For example, an association route ([cluster group]) G1 represents a group in which a part or all of basic data 1 of a program 1 viewed by a viewer 1 is the same as a part or all of basic data of a program 5 viewed by a viewer 5.

A route ([cluster group]) G2 represents a group in which a part or all of basic data 1 of a program 3 viewed by a viewer 3 is the same as a part or all of the basic data of the program 5 viewed by the viewer 5. A route ([cluster group]) G3 illustrates that a program 2 viewed by a viewer 2 and a program 5n viewed by the viewer 5 are the same. Similarly, a route ([cluster group]) G4 illustrates that the program 3 viewed by the viewer 3 and a program 4n viewed by the viewer 4 are the same.

The association routes ([cluster groups]), i.e., grouping at the time of creation of [cluster groups], can be achieved by information stored in a recorded program list server stored in the relevant program database 4, history server 1, and television set 101, and registration (participation) in an "automatic recording community ([cluster group])", for example.

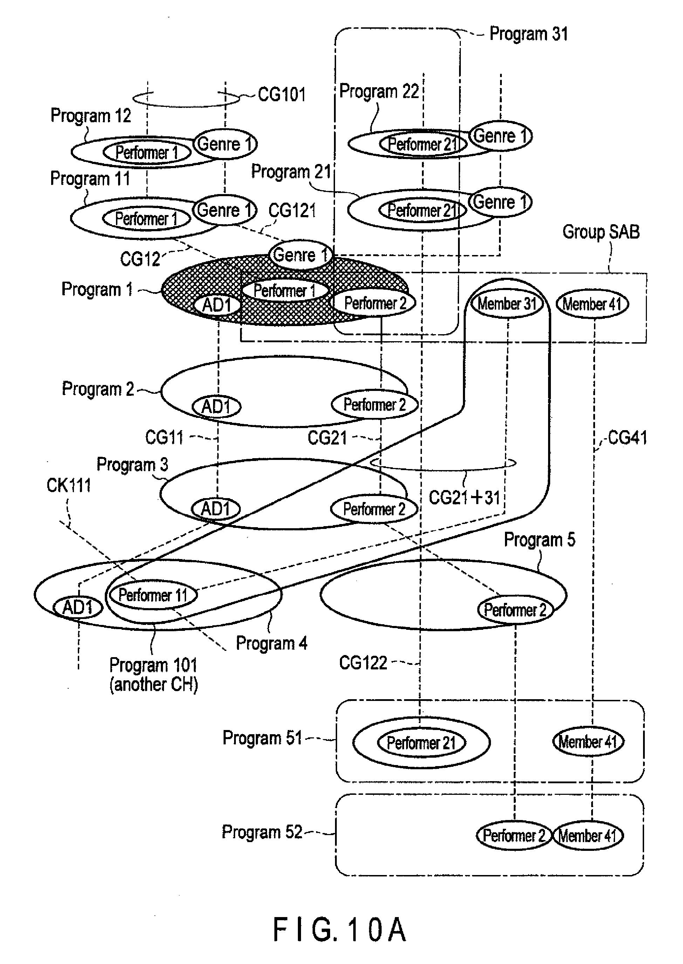

FIG. 10A illustrates an example of [clusters] and [cluster groups], i.e., basic information ([clusters]) relevant to a program and [cluster groups], each formed by associating individual [clusters] of the program or other programs with one another.

As shown in FIGS. 9A and 9B, each program includes basic data, i.e., a variety of [clusters]. Accordingly, the program 1, program 2, program 3, and program 4, including AD1 ([cluster]), for example, which exists as basic data of the program 1, can be associated with one another. The association of the programs 1, 2, 3, and 4 shown in FIG. 10A will be referred to as a [cluster group] CG11, for example. The above-described [cluster group] CG11 can also be referred to as a [program community].

The program 4 can be removed from the [cluster group] CG11 by a combination with a [cluster group ([program community]) CG21, which is centered of the performer [2], for example. It is also possible to search for programs 11 and 12, for example, on the basis of a combination with a [cluster group] CG101 defined by a [cluster group] CG12 of a program in which the performer [1] appears in a program 1 and a [cluster group] CG121 in which a genre [1] is set as a [cluster], with a central focus on the performer [1] who appears in the program 1.

In the example of FIG. 10A, when the two performers [1] and [2] are the members of the group SAB, by setting another member of the group SAB, for example, the member [41] as a [cluster], the programs 51 and 52 in which the member [41] appears can be searched for on the basis of the [cluster group] CG41, into which programs in which the member [41] appears are grouped. Further, the programs 21 and 22 ([cluster group] CG122), in which a performer [21] appears, can be searched for on the basis of the [cluster group] which sets the program 51, in which the member [41] appears, as a [cluster]. Thereby, association between the [cluster group] CG121 including the genre [1] and performer [21] is found. It is thus possible to find that the performer [21] appears in a plurality of programs of the genre [1], which cannot be found by a combination of the performer [1], performer [2], and AD1. At the same time, it becomes possible to associate performer [2] with performer [21] by the genre [1], and to ascertain existence of the program 31 in which performer [2] and performer [21] appear.

In the example of FIG. 10A, when a program 101, which is a program on another channel (station), for example, is extracted by a combination of a [cluster group] CG21, which sets the performer [2] as a [cluster], and a [cluster group] CG31, which sets a member [31] as a [cluster], the program 4, which has been removed using the [cluster group] CG21, which sets performer 2 as a [cluster], from the [cluster group] CG11 which sets AD1 of the program in which performer 1 appears as a [cluster], can be arrived at from the [cluster group] 111 which sets the performer [11] as a [cluster].

Thus, according to formation of [cluster groups] (combination of [clusters]), two or more approaches (search methods) can be taken for one program. At the same time, since the program 52 can be searched for on the basis of the [cluster group] CG21, in which the performer [2] is set as a [cluster], the [cluster group] CG41, in which the member [41] of the group SAB is set as a [cluster], can be found.

That is, it becomes easy for the user to find, from [clusters (basic data)] of a program in which at least one member of the group SAB appears, other programs in which other members of the group appear as solo or in group of two or more, by registering (participating) in a [cluster group (program community)]. This indicates that other programs in which the group SAB does not appear but at least one of the members of the group appears can be searched for on the basis of the [clusters (basic data)] of a program in which anyone of the group SAB appears.

By registering (participating) in the [program community (cluster group)], selecting an arbitrary [cluster], and tracing a [cluster group] to which the [cluster] belongs, inputting a keyword and a variety of settings as narrow-down conditions, for example, becomes essentially unnecessary.

Thus, a [program community] can be provided for each of a [cluster group] centered of an arbitrary [cluster], another [cluster group] centered of another [cluster], yet another [cluster group] which shares one or more common [clusters] of the [cluster group], and the like.

By using the program community ([cluster group]), it is possible to prevent extraction of "SA", "AB", "ABx", or "xSA" (where x is an arbitrary character, number, symbol, or the like), for example, which is similar to a program in which the group "SAB" and Miss "BCD", Miss "EFG", and Miss "HIJ", for example, who are the members of the group, appear as solo or in group of two or more, as noise.

In this case, by registering in an arbitrary [cluster group], i.e., a [program community], it is possible to view relevant scenes such as "idol highlights" and "gourmet highlights" merely by selecting the "program community". As a matter of course, when "automatic recording" is set, a relevant program can be automatically recorded. That is, the need of a user who "never wants to miss a program that the user is interested in" can be filled by registering in a [program community] and setting "automatic recording" such that an arbitrary number of programs associated with the registered [program community] are recorded "automatically". For example, in a "late-night anime" program community, late-night anime programs are recorded one after another, and in a "favorite entertainer" program community, programs in which the entertainer appears are recorded one after another. As a matter of course, when the above-described upper limit is set in relation to a recording capacity, programs are automatically recorded within the range of the upper limit.

The need of a user who "tentatively wants to check out popular programs" can be filled by setting "automatic" recording in a [program community] for "popular programs", "new programs", and the like and finding an "interesting program and/or genre" which the user has not known, for example, even if the user does not have a favorite program genre or a favorite entertainer in particular.

By thus registering in the [program community] including [clusters] or [cluster groups] and setting "automatic recording", the complicated procedure for scheduled recording of obtaining information on popular programs from rankings on the Internet, features of magazines, conversation with friends, and the like, and then searching for a program from program listings and scheduling the program, for example, can be replaced with a simple recording procedure (of setting automatic recording).

Further, the user is not requested, as much as possible, to directly enter information that is to be a target for a program search, for example, keywords such as the name of an entertainer, the name of a group, and appearance information of individual members of the group, and the genre of the program. That is, even when the user wants to record a specific performer, program, or the like, inputting characters and settings specifying whether to "include" or "exclude" something, for example, will be unnecessary merely by searching for the [program community].

Thereby, when the group "SAB" and Miss "BCD", Miss "EFG", and Miss "HIJ", who are members of the group individually appear on the (same) program, or when the group "SAB" does not appear and only Miss "EFG" and Miss "HIJ" appear, for example, the program can be easily recorded by "automatic recording". In this case, when the group "SAB" is set as a keyword, since the [program community] does not include "ABx", "xSA", or the like, which is less relevant to the group "SAB", it is possible to greatly reduce the inclusion of noise, i.e., programs in which an unintended performer appears.

Thus, according to the present program recommendation system and program recommendation method, by registering (participating) in a [cluster group], i.e., a [program community], a number of unspecified programs can be easily associated with one another using [clusters], each becomes a core of the [cluster group].

That is, by using the [cluster group], i.e., the [program community], programs on different centers can be associated with one another from a [cluster] included in one program as a starting point, and a state of association between the programs can be obtained.

In other words, in the present program recommendation system and program recommendation method, basic data ([clusters]) representing a variety of attributes relating to a program is defined in a [cluster group], i.e., a [program community], and by arbitrarily combining [clusters], which are basic data of a plurality of programs according to the user's interests or preferences (selecting a combination presented by the system), the user is capable of recording (scheduling) and viewing a desired program easily, without the need to enter a keyword or set a variety of narrow-down conditions, for example, practically.

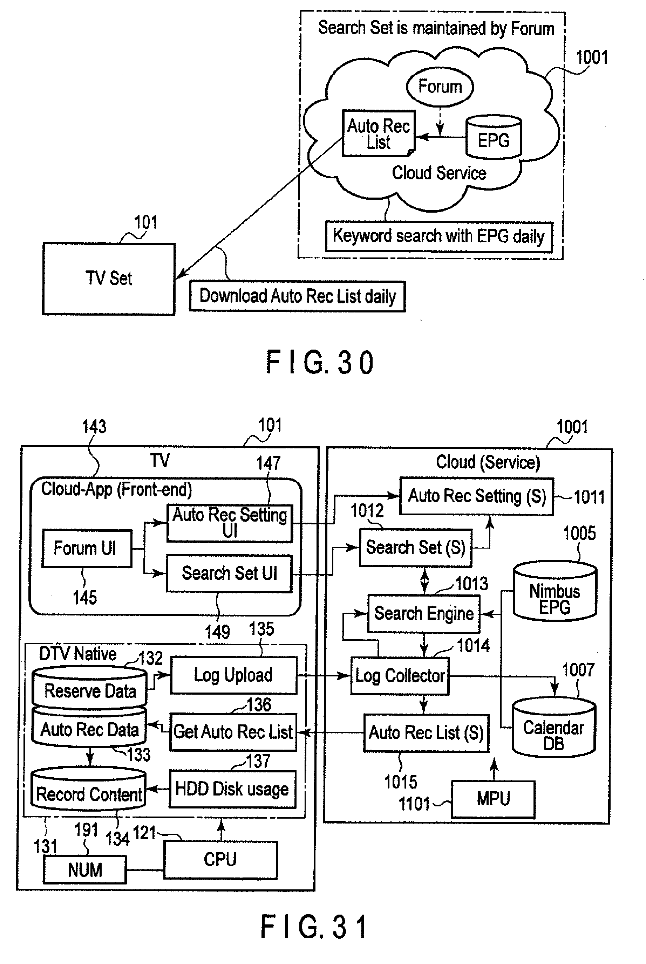

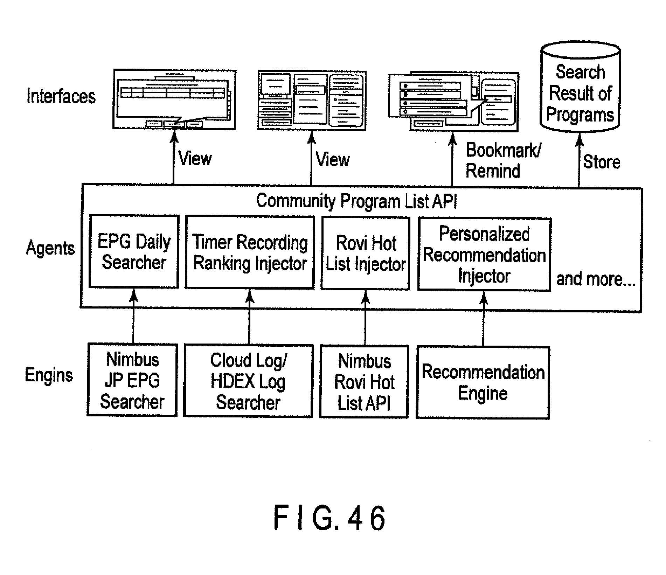

The [clusters] and [cluster groups], i.e., the [program communities], can be edited (modified) by a user on an individual basis in a hardware configuration shown in FIGS. 30 to 46. Further, an arbitrary user can invite other users to a [cluster group] created by the user. Further, an arbitrary user can share a [cluster group] created by another user.

That is, while a program is being viewed or (a recorded program is) being played back by an arbitrary television set registered in advance, by transmitting meta-information of the program from the television set to the server (relevant program database), a [program community ([cluster group]) is provided to the television set 101 as information relevant to the program searched for by the server. The television set 101 displays an arbitrary number of cluster groups (program communities) which have been received (provided by the server).

By selecting an arbitrary [program community] from among the displayed [program communities ([cluster groups])], the user is capable of automatically recording an arbitrary program associated with the [program community] ("automatic recording").

Each of the cluster groups ([program communities]) has peculiar search conditions. Programs, scenes, video on demand (VOD), television advertisements (TV ads), event information, and the like associated on the basis of the search conditions are searched for and listed up.

The search conditions take into account [OR] conditions, [AND] conditions, exceptional conditions, relevant keywords, and the like, of a plurality of keywords, as well as simple keyword search conditions.

Participation and registration in the cluster group ([program community]) allows participants to perform communications with one another, and to perform communications with the owner of the cluster group, and the like. It is thereby possible to view automatic recording, scenes, VOD, TV ads, event information, and the like of listed-up programs.

Further, a plurality of relevant cluster groups ([program communities]) can be displayed on the basis of a program being viewed or played back in a display order based on similarity with the search program, priority, popularity, genre, and the like (specified by a registered user or set by a master [owner]).

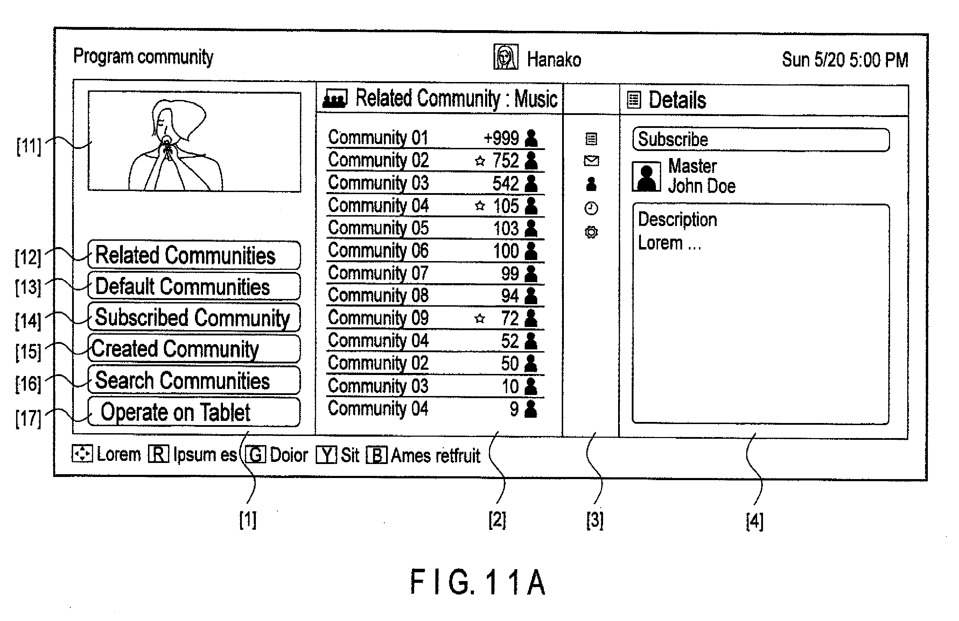

The above-described cluster group ([program community]) can be accessed or updated (modified) by an arbitrary user. More specifically, the user (or the master) is capable of performing edits (modifications) on an individual basis in a software configuration in which a screen display and an input screen shown in FIGS. 11A to 29 are displayed.

For example, the user of the television set 101 is capable of selectively performing an operation to access a cluster group ([program community]) or add or modify information such as search conditions peculiar to the cluster group, using a user interface (UI) displayed as a screen display of the television set 101 (as will be described later with reference to FIGS. 11A to 29).

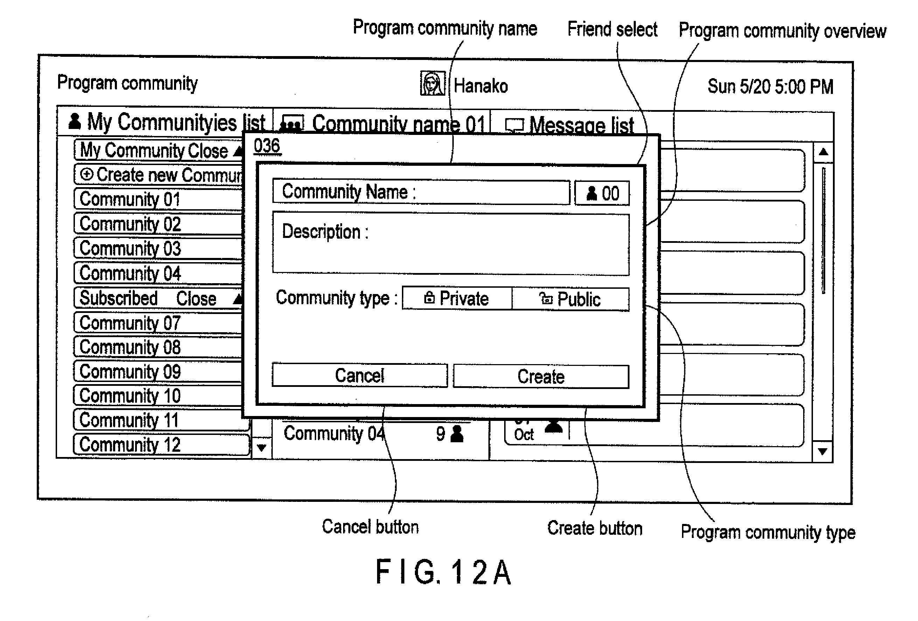

Each of the cluster groups contains a plurality of items of meta-information, and can be modified (edited) or added by the user. Points are given to a user who has modified (edited) or added a cluster group. Such points include points compatible with mileage points prepared by an airline and quasi-currency points compatible with points provided according to the amount of purchase (use) for a card issued by a credit card company, a department store, or the like. When an inappropriate content is included in the modification or addition by a user as a result of analysis of the content, the master, for example, is capable of rejecting or deleting the modification. The cluster group modified (edited) or added by a user can be shared with other users. In this case, the users who can share the modified (edited) or added cluster group can be limited to registered users (set by [Friend select] shown in FIG. 12A) of the [program community] shown in FIGS. 11A to 29, or can be made public such that the modified (edited) or added cluster group is shared by all the users.

A display order in which the program communities ([cluster groups]) are displayed shown in FIGS. 11A to 29 has a profound effect on the program (program community) to be selected by a user. Accordingly, the display order of the program communities is based on a viewing history stored in the history server 1, for example. In contrast, in order to present programs desired by the user, "new arrivals", "popularity (topicality)", i.e., "newsworthiness" that affects the viewing trend of other users, such as a match of top teams in sports, and the like need to be taken into consideration, such that the programs can be arbitrarily set (rearranged) by the user. The rearrangement can be performed in a variety of orders, for example, by date (in a chronological or a reverse chronological order), by title, by genre (type), in descending order of the number of bookmarks, and the like. As a matter of course, it is possible to give priority to the special condition to "always include (never exclude)". A rebroadcast program is usually excluded, but it is also possible to make a setting not to exclude rebroadcast programs for the storage purpose or for a user who has failed to record some of a series of programs.

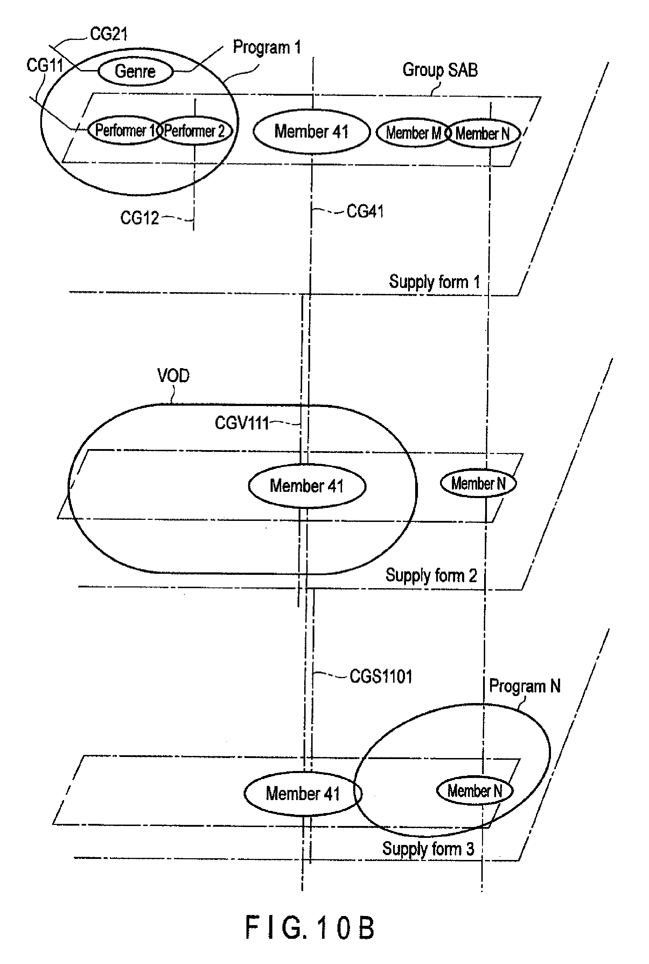

FIG. 10B illustrates an extension example of a [cluster group].

For example, when a [cluster group (program community)] described with reference to FIG. 10A is based on the same program listings, for example, terrestrial digital broadcasting that can be received by a number of television sets 101, a [cluster group] which sets a member [41] of the group SAB as a [cluster], for example, can exist in content (video) distributed by video-on-demand (VOD), i.e., on a network (provision form 2) or another content provision form (provision form 3) such as BS (transmission using a direct broadcast satellite) and CS (transmission using a communications satellite), for example, as illustrated in FIG. 10B.

Therefore, as shown in FIG. 10B, a [cluster group] CG41, in which the member [41] of the group SAB, for example, is set as a [cluster], can be mutually associated with CGV111, which is a [cluster group] of a VOD content, for example, and a [cluster group] CGS1101, which sets a CN (broadcast) program [N], for example, as a [cluster] (which are shown on the same axis for the purpose of illustration in FIG. 10B). Most of the [program communities] can exist over different content provision forms, as shown in FIG. 10B. Thereby, it is possible to advise a user who has similar preferences or interests to record or view even a program (program N) in which a specific member (member N) of the group SAB appears and which is broadcast in a late-night time range in a restrictive area.

Further, as shown in FIG. 10B, by linking the [cluster group (program community)] CG41 with CGV111 or CGS1101, which are different content provision forms, the user can arrive at a program (content) that the user has not noticed.

That is, it is possible to advise the user to record or view a program or content with high relevance that the user does not notice, or has not noticed on the basis of one [cluster].

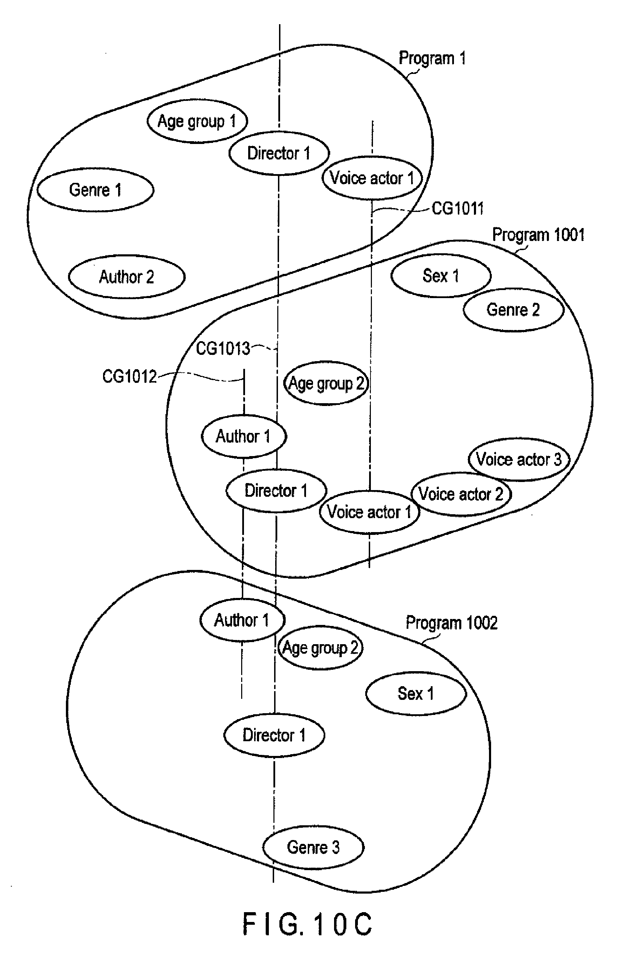

FIG. 10C illustrates an example of development of [cluster groups] from another point of view.

A case is assumed where the program 1 featured in the [cluster group (program community)] described with reference to FIG. 10A is animation, for example, and one of the voice actors is set as a [cluster] in a [cluster group] CG1011, by way of illustration. In this case, since a [cluster group] CG1012 which sets the writer [1] as a [cluster] and a [cluster group] CG1013 which sets the production company or the director as a [cluster], for example, can exist with respect to the program 1, if another program 1001 that has fewer commonalities as to the genre, sex of the target viewers, and age group of the target viewers can be searched for on the basis of the [cluster group] CG1013 of the production company or the director, it is possible to advise registrants of different [program communities] who are interested in the respective programs to record or view programs that the registrants presumably do not usually view.

That is, as shown in FIG. 10C, it is possible to provide advice regarding a program 1002, the writer, target age group, and target sex of which are different from those of the program 1, on the basis of the [cluster group] CG1013 which sets the director of the program 1 as a [cluster], the [cluster group] CG1011 which sets the voice actor [1] as a [cluster], and the [cluster group] CG1012 which sets the writer [1] as a [cluster].

FIGS. 30 to 46 illustrate an exemplary overview of a system according to the embodiment.

FIG. 30 schematically illustrates a conception of a program community service according to the embodiment.

As shown in FIG. 30, an electronic device, such as a television broadcast receiver (hereinafter referred to as a television set, or simply a TV or a TV set) 101 equipped with a recording function downloads an automatic recording list <Auto Rec List> from a server (such as a cloud service <Cloud Service>) 1001, and prepares for recording of a program (content) desired by the user. The television set (TV) 101 may be a display device to which a video recorder (or a recording device) is connected. The server 1001 may be formed of either one server device or a plurality of server devices. The display device may be any device capable of displaying moving images and still images, such as a display device connected to a personal computer (PC), for example, or a portable device called a tablet device, for example. Data transfer between the display device and the recording device may be performed in either a wired or wireless manner.

The server 1001 stores an automatic recording list created on the basis of information that can be acquired from a social networking service (SNS) which is referred to as a program community <community>, for example, and allows users to share information on content (programs) that the users want to view or record, and information contained in electronic program guides (EPG), such that the user can acquire the automatic recording list. The program community is designed to be created for a specific theme by a user, for example, and a one-on-one program list (list of programs to be recorded or viewed) is set for each program community. In other words, the program community is designed to connect a plurality of users via a program list as a center, and is also designed to allow a plurality of users to share the program list. The recording list may be created manually by a user by adding a program one by one, or a program list that matches search conditions set by a user for a program community may be created. When a user registers in the program community, a program list set in the program community is downloaded into the device used by the user. The device performs a recording process and a reproduction process according to the downloaded program list. In the server 1001, a plurality of program communities set by the user or the like exist, and a plurality of users are registered in each of the program communities. A user is capable of registering in a plurality of program communities.

FIG. 31 illustrates an example of data transfer between the television set and the server (cloud service).

As shown in FIG. 31, the television set 101 includes an interface part <Cloud App> 103 which controls transfer of data between the television set 101 and the server 1001, i.e., access to the server 1001, an information storage part <Native <DTV Native>> 131 which stores an acquired automatic recording list and records content (programs) according to the list, and a central processing unit (CPU; processor) 121. A non-volatile memory (NVM) 191, for example, which stores "points", which will be described later, is connected to the CPU 121. The NVM 191 may be connected to a data controller 111, or provided in the server 1001.

The interface part 143 includes an automatic recording user interface <Auto Rec Setting UI> 107 which manages recording settings for automatic recording, a search user interface <Search Set UI> 149 which manages search condition settings for automatic recording, and a program community user interface <Community UI> 145 which controls the both interfaces <activates the both interfaces and manages operation of the both interfaces>, with respect to the program community provided by the server 1001.

The information storage part <Native> 145 includes a data storage part (storage such as a hard disk drive [HDD]) 134 configured to store automatic recording data <Auto Rec Data>, schedule information (data <Reserve Data>), and content (program <Record Content>), and a data storage management part <Hard Disk usage> 137, which manages content stored on the HDDs (storages) 132, 133, and 134. The schedule information (data <Reserve Data>) is data scheduled for recording set in advance in the television set 101, and is a list of scheduled programs, for example. The schedule information (data <Reserve Data>) may include scheduled recording set on the basis of automatic recording data, and scheduled recording set by a user operation on the television set 101.

An upload part <Log Upload> 135 transmits schedule information <Reserve Data> stored in the data storage part 132 to the server 1001. A list acquisition part <Get Auto Rec List> 137 acquires the automatic recording data (automatic recording list <Auto Rec Data>) 1015 from the server 1001.

The data storage part 132 stores automatic recording data (automatic recording list <Auto Rec Data>) acquired by the list acquisition part <Get Auto Rec List> 136. The data storage management part <Hard Disk usage> 137 stores restrictive conditions for recording set in the television set 101. The restrictive conditions refer to restrictions on recording, such as a channel from which a recording can be made, a time range in which recording can be made, and the amount of time per day for which recording can be made. The television set 101 records programs shown in the list on the basis of the acquired automatic recording list. The television set 101 may record a program included in an automatic recording list and given a higher priority preferentially when the remaining capacity of the HDD (data storage parts 132, 133, and 134) is less than a predetermined value. An order of priority for programs to be recorded is determined on the basis of an order of priority for channels carrying the programs, an order of priority for time ranges of the programs, an order of priority for program communities to which the programs belong, an order of priority for users who are registered in the program communities, or the like.

The operation of each of the above-described parts (blocks), interfaces, and the like in the television set 101 is controlled by a central processing unit (CPU) 121.

The server 1001 includes an automatic recording setting part <Auto Rec Setting(s)> 1011, a search condition storage part <Search Set> 1012, a search part <Search Engine> 1013, an EPG data storage part <Nimbus EPG> 1005, a calendar database part <Calendar Database> 1007, an upload reception part <Log Collector> 1014, and an automatic recording list creation part <Auto Rec List> 1015. Each element of the server 1001 is controlled by an MPU (main control block) 1101, for example.

The automatic recording setting part <Auto Rec setting(s)> 1011 makes automatic recording settings according to recording setting (Auto Rec Setting> information, which is an input from the automatic recording user interface 107 of the television set 101 and search condition <Search Set> information, which is an input from the search user interface 149 of the television set 101, and stores the automatic recording settings.

The search condition storage part <Search Set(s)> 1012 receives the search condition <Search Set> information from the television set 101, and provides the automatic recording setting part and the search part with the received information.

The search part <Search Engine> 1013 receives the search conditions from the search condition storage part 1012 and the schedule information <Reserve Data> from the upload part <Log Upload> 135, and searches for content for automatic recording by referring to program information stored in the EPG data storage part 1005 and date and time information managed by the calendar database part 1007. The search part 1013 provides the automatic recording list generation (storage) part <Auto Rec List(s)> 1015 with the searched result via the upload reception part <Log Collector> 1014, such that the searched result can be used as recommended data <Auto Rec Data> for automatic recording. That is, the search part 1013 searches for a program on the basis of search conditions set by a master, for example, for each program community, and provides the automatic recording list generation (storage) part <Auto Rec List(s)> 1015 with the program list obtained by the search. The upload reception part <Log Collector> 1014 collects schedule information <Reserve Data> from the television set 101. The upload reception part <Log Collector> 1014 may acquire schedule information on a user basis, for example. That is, when a user uses a plurality of devices, for example, a television set equipped with a video recorder or a recording function, such as the television set 101, a recording device capable of recording and playing back content, and the like, schedule information may be obtained from the plurality of devices associated with (linked with) the user. In this case, the server 1001 may store a list indicating correspondence between users and devices used by the users. When one recording device is used by a plurality of users, the upload reception part <Log Collector> 1014 may further acquire schedule information on scheduled recording set by each of the plurality of users. The upload reception part <Log Collector> 1014 may further acquire information on scheduled viewing set in the television set 101. The upload reception part <Log Collector> 1014 may further acquire information on restrictive conditions set by the television set 101. The restrictive conditions refer to restrictions on recording set in the television set 101, such as a channel on which recording can be made, a time range in which recording can be made, and the amount of time per day for which recording can be made.

The automatic recording list storage (creation) part 1015 stores the search result by the search part 1013 such that the list acquisition part (television set 101) can acquire the search result as recommended data for automatic recording. That is, the automatic recording list storage (creation) part 1015 makes the automatic recording list set for each program community public to a network, such that the automatic recording list can be accessed by the interface part <Cloud App (Front-end)> 145. The automatic recording list storage creation part 1015 prepares, for each television set 101, an automatic recording list, which is obtained by removing programs overlapping with programs indicated by schedule information acquired by the upload reception part <Log Collector> 1014 from the programs included in the automatic recording list obtained by search of the search part 1013. From the schedule information, the automatic recording list creation part 1015 may remove only programs indicated by information on scheduled recording, or may remove programs indicated by information on scheduled recording and programs indicated by information on scheduled viewing. Further, the automatic recording list creation part 1015 may create an automatic recording list in which programs in the automatic recording list are narrowed down on the basis of the restrictive conditions set in the television set 101.

The automatic recording list storage creation part 1015 transmits the list according to a request from the television set 101 (the television set 101 downloads an automatic recording list stored in the list storage creation part 1015 according to a download request from the television set 101). That is, the server device 1001 is equipped with a function of making the automatic recording list obtained as a search result by the search part 1013 public and a function of transmitting an automatic recording list obtained by arranging the recording list for each television set 101 to the television set 101 (storing the automatic recording list such that the television set or the recording device can download the automatic recording list).

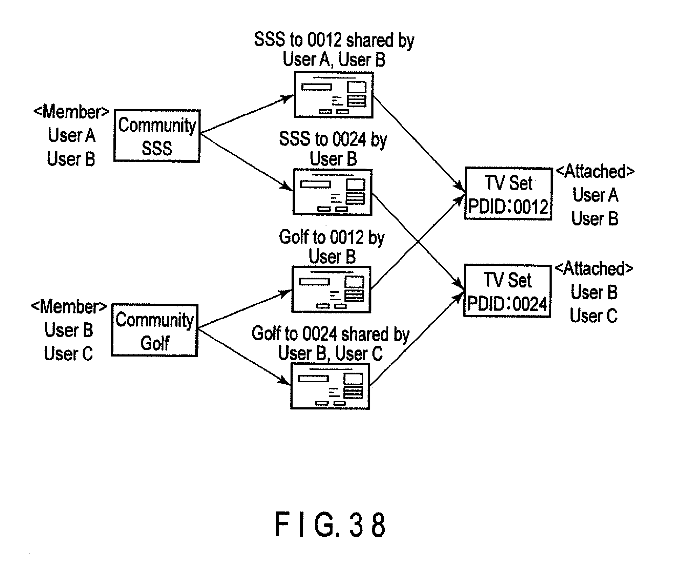

In FIG. 38, one recording (video recorder) device (an HDD, recorder, or television set) is shown, but when more than one recording devices (HDDs and/or television sets) are provided, the server 1001 is capable of preparing recommended data <Auto Rec Data> for automatic recording in each recording device. That is, when a plurality of user accounts are set for a television set 101 (recording device) and the plurality of accounts (users) are registered in different program communities, the automatic recording list creation part 1015 may create an automatic recording list obtained by compiling an automatic recording list of each of the program communities, and transmit the complied automatic recording list to the television set 101 (the automatic recording list is stored such that the television set or recording device can download the automatic recording list). In this case, the automatic recording list creation part 1015 may acquire schedule information from a plurality of devices (television sets equipped with recording devices and/or a video recording function) used by each of the plurality of users, and create an automatic recording list obtained by removing programs overlapping with schedule information from the programs included in the compiled automatic recording list. Therefore, it is also possible to classify recording devices according to the type (whether age restriction is set) and genre <Genre> of content, for example.

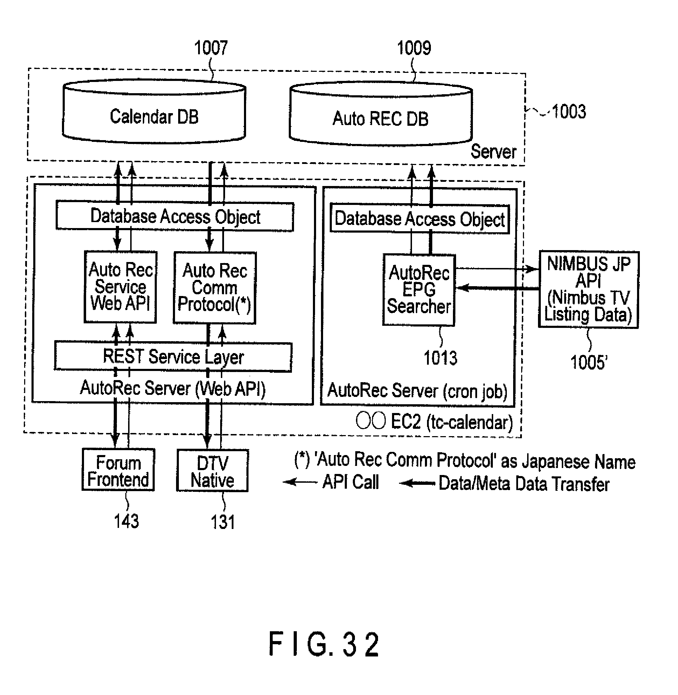

FIG. 32 illustrates a main configuration of a server (cloud service) that embodies a program community <community>.

As shown in FIG. 32, the server 1001 includes a database section 1003 including a calendar database part <Calendar Database> 1007 and an automatic recording base part <Auto Rec Database> 1009.

An automatic recording server <Auto Rec Service (Web API)> and an automatic recording control unit <Auto Rec Service (cron job)> included in an external calendar server <XX EC2 (tc-calendar)> are connected to the database section 1003.

A program community service <Community Front-end> is connected to the database section 1003 via the automatic recording service program (application <Auto Rec Service Web API>) in the automatic recording server of the external calendar server. A television set <DTV Native> 101 is also connected to the database section 1003 via an automatic recording communication controller (Auto Rec Comm Protocol <automatic recording communication protocol>) in the automatic recording control unit of the above-described external calendar server.

Further, the automatic recording base part <Auto Rec Database> 1009 stores a database for automatic recording by referring to EPG data acquired by an automatic recording detection part <Auto Rec EPG Searcher> from an EPG database part <NIMBUS JP API (Nimbus TV Listing Data) > 1005'.

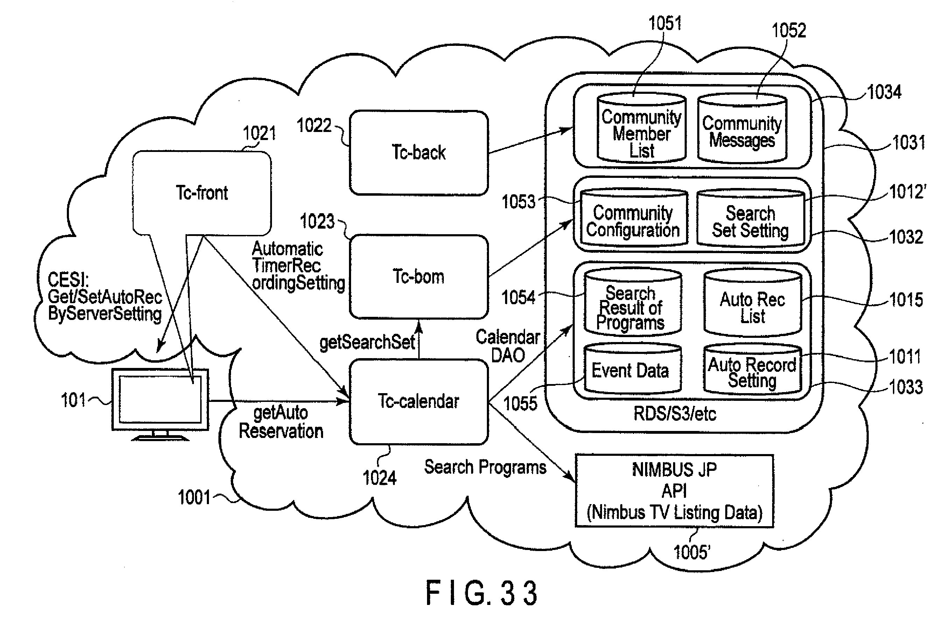

FIG. 33 illustrates an example of a configuration of a program community (server) and an automatic recording process <Backend> in the program community <community> service.

As shown in FIG. 33, the program community (server) 1001 hierarchically includes, for example, a Tc-front server <Tc-front> 1021, a Tc-back server <Tc-back> 1022, a TC-bom server <Tc-bom> 1023, a TC-calendar server <Tc-calendar> 1024, an EPG database part <NIMBUS JP API (Nimbus TV Listing Data)> 1005', a calendar management part <calendar DAO <RDS/S3/etc>> 1031, and the like.

The front server 1021 sets scheduled automatic recording <Automatic Timer Recording Setting> in the television set 101 and the calendar server 1024.

The calendar server 1024 provides the automatic schedules <get Auto Reservation> of the television set 101 to the bom server 1023, the EPG database part <NIMBUS JP API (Nimbus TV Listing Data)> 1005', and the calendar management part 1031.

Further, the calendar server 1024 sets a search result of programs (content [programs]) <Search Result of Programs> 1054, an automatic recording list <Auto Rec List> 1015, event data <Event Data> 1005' such as the start time, end time, broadcast type, channel, and the like of an event specified by EPG or a calendar, i.e., a program corresponding to the search result, scheduled automatic recording <Auto Rec Setting(s)> 1015, and the like.

The bom server 1023 sets a "program community form <Community Configuration>" 1053 and "search conditions <Search Set Setting>" 1021' in the calendar management part 1031.

The back server 1022 sets a "program community members list <Forum Members List>" 1051 and "program community messages <Forum Messages>" 1052 in the calendar management part 1031. A region of the calendar server 1031 that is accessed by the back server 1022 will be referred to as a region 1034, a region of the calendar server 1031 that is accessed by the bom server 1023 will be referred to as a region 1032, and a region of the calendar server 1031 that is accessed by the calendar server 1024 will be referred to as a region 1033.

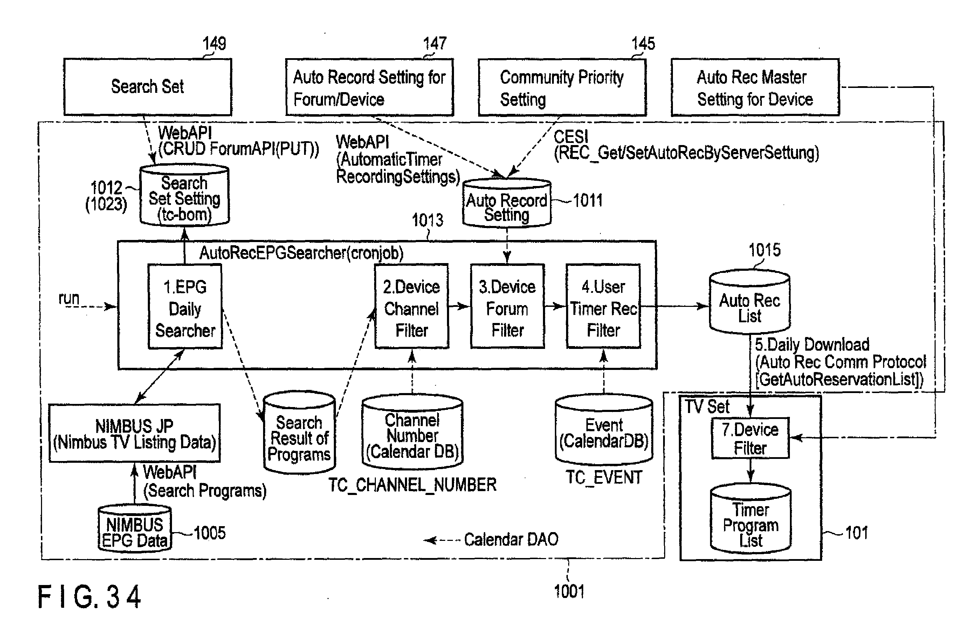

FIG. 34 illustrates a process of searching for programs to be candidates for automatic recording in the program community <community> service.

FIG. 34 schematically shows a screen display displayed on the display part of the television set 101, a shift of screen displays according to a user input (or setting) on the screen display, and a process (data processing) and a flow of the process in a server (program community) shown in FIG. 33.
<1> By referring to search conditions <Search Set Setting (N)> entered from the search condition <Search Set> (screen display) 109 via the bom server 1023, an EPG searcher <EPG Daily Searcher> 1013 searches for candidate programs matching the search conditions from an EPG database part 1005'. Television list data stored in the EPG database part 1005' may contain information on all the broadcast programs of all regions of the country. The search conditions are set for each program community, for example.
<2> The program list <Search Result of Programs> extracted by the EPG searcher <EPG Daily Searcher> 1013 is channel-adjusted by a first filtering device (Device Channel Filter> as necessary. That is, since there are cases where channels of a program differ according to the region in which the television set 101 receives broadcast signals, the first filtering device changes the channel of the program extracted by the EPG searcher 1013 to a channel appropriate for the region of the television set 101 (in which the television set 101 is positioned). The first filtering device <Device Channel Filter> detects a region to which the television set 101 belongs by referring to a channel list <Channel Number> of the calendar database part 1024 and adjusts the channel.
<3> A second filtering device <Device Forum Filter> filters a program to be automatically recoded according to restrictive conditions set in the television set 101, by referring to automatic recording conditions <Auto Record Setting (N)> 1011 entered via the automatic recording setting <Auto Rec Setting for Forum/Device> (screen display) 107 and priority setting <Forum Priority setting> (screen display) 105.
<4> A third filtering device <User Timer Rec Filter> checks to confirm that the program is in a time range in which scheduled recording has not been made (an event does not exist) and scheduled recording can be made. The third filtering device may add a new program to the program list from the second filtering device <Device Community Filter>. In this case, the server 1001 is equipped with a function of causing a user account to register a program recommended by another user account as a program to be recorded. The third filtering device <Device Forum Filter> adds the recommended program (automatic recording <Auto Rec List>) to the program list.

Thereby, the automatic recording list <Auto Rec List> is set in the server 1001 such that the automatic recording list can be used (downloaded) by the television set (recording device) 101. The television set also checks to confirm that scheduled recording can be made on the basis of master settings <Auto Rec Master Setting for Device>.

The television set 101 (TV set or video recorder) downloads the automatic recording list <Auto Rec List> once a day, for example, and performs a recording process according to the automatic recording list <Auto Rec List>. When the HDD capacity is less than a predetermined amount, for example, the television set 101 performs filtering specific to the television set 101 in the automatic recording list <Auto Rec List>, and extracts a program to be recorded from the programs included in the downloaded automatic recording list <Auto Rec List>.

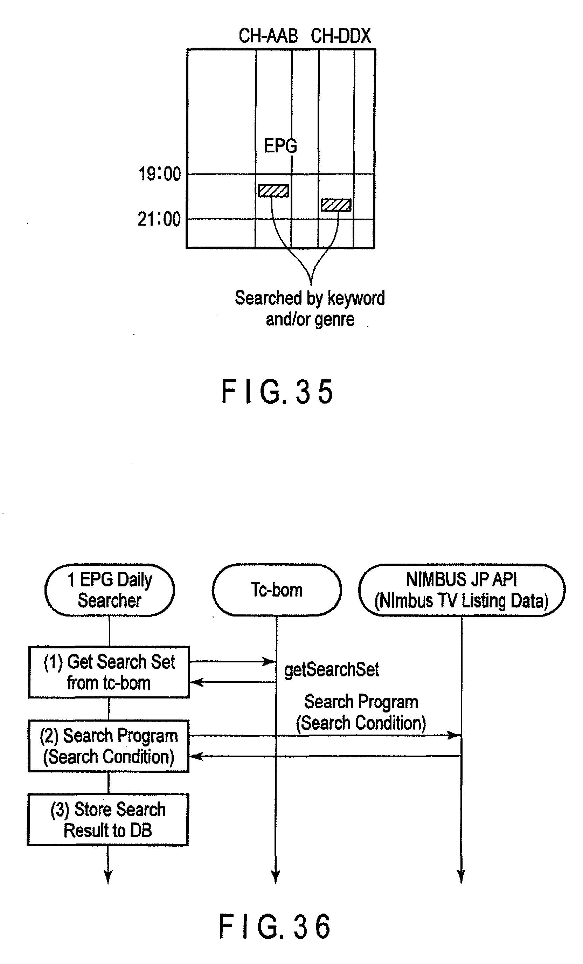

FIG. 35 illustrates an exemplary overview of an EPG searcher <EPG Daily Searcher> in the program community <Community> server.

As shown in FIG. 35, the EPG searcher searches for overlapping programs (candidate channels) in a set recording time <interest>, in one or two sets of search <Search Set (N)>, for example.

The EPG searcher searches for a channel according to an order of priority <Priority>.

The EPG searcher searches for a program according to a set recording time <interest>.

The EPG searcher searches for a program according to a genre <Genre>.

The EPG searcher is capable of removing rebroadcast <Re-broadcast> programs from the target for search.

Data contained in the EPG is also used for the search.

That is, the EPG searcher solves the problem of overlapping of recording time, for example, on the basis of the range of channels described with reference to FIG. 5E, the amount of recording time per day shown in FIG. 5F, the above-described order of priority, or the like.

More specifically, search sets (search conditions) are set in the EPG searcher according to an access to the Tc-bom server by the EPG searcher, as shown in FIG. 36 (the EPG searcher acquires search conditions).

The EPG searcher searches a Nimbus television list database (EPG database part <NIMBUS JP API (Nimbus TV Listing Data)>) for a program appropriate to an input (setting conditions) on the basis of the acquired search conditions (when an appropriate program exists, the program is stored in a database (predetermined storage region).

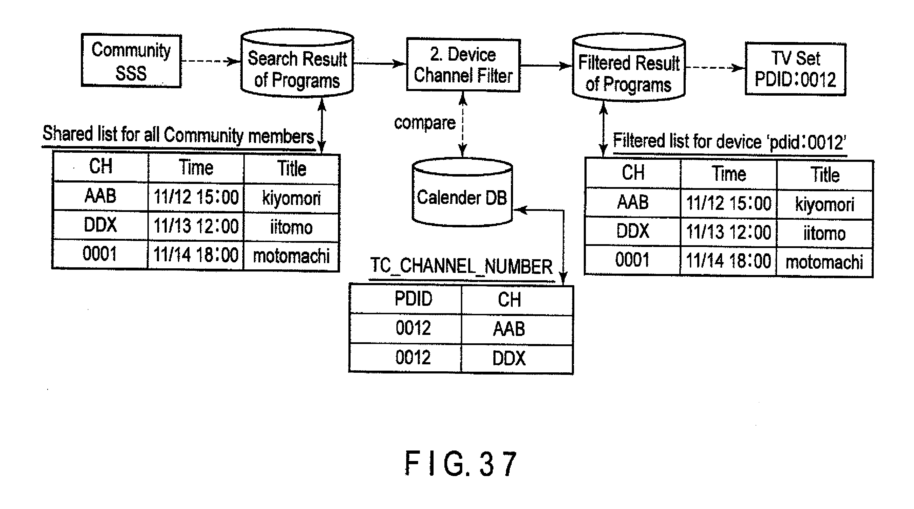

FIG. 37 illustrates an example of filtering performed by the first filtering device <Device Channel Filter>.

For example, in a case where a shared list shared by members of a program community exists, in a non-service area, i.e., in an area where a user who wants to set automatic recording lives but some of the broadcasts, such as programs provided by a broadcast station (distributor) or the like from which broadcasts cannot be received, or programs provided by a broadcaster using satellites, such as BS/CS broadcasts, cannot be received, the scheduled automatic recording of the appropriate program can be not set (not selected) using the channel filter.

FIG. 38 illustrates an example of filtering performed by the third filtering device <User Timer Rec Filter>.

Hereinafter, a case will be described where the number of at least one of the television sets and the users (program community members) is two or more, and a first user (user A) who has registered a user account in a television set with ID (PDID) 0012, for example, a third user (user C) who has registered a user account in a television set with ID (PDID) 0024, for example, and a second user (user B) who has registered a user account in both of the television sets exist, by way of illustration. The server 1001 determines which of the program communities users A, B, and C are registered in. When users A and B are registered in a program community SSS and users B and C are registered in a program community Golf, and scheduled automatic recording is suggested from the two program communities, the program community SSS and the program community Golf, for example, the server 1001 is capable of sorting a program list set in one of the program communities (program community SSS) to which user A belongs and a program list set in the other program community (program community Golf) to which user B belongs into the respective television sets. The program list is, for example, an automatic recording list, a viewing list, or the like.

That is, a list of programs is created according to conditions set by users A and B for the program community SSS as a program list (SSS to 0012 shared by User A, User B). For example, when user A sets a recording restricted to a time range A and user B sets a recording restricted to a time range B in the program community SSS, a list of programs corresponding to both of the time ranges A and B is created as a program list (SSS to 0012 shared by User A, User B). Similarly, a program list is generated that satisfies an OR condition of users B and C as a program list (Golf to 0024 shared by User B, User C).

By downloading the above-described program lists to the television set <TV Set> 0012 and the television set <TV Set> 0024 and combining automatic recording schedules such that the television set 0012, in which the accounts of users A and B are registered, records a program scheduled for automatic recording on the basis of a program list (automatic recording schedules) provided by one of the program communities, and the television set 0024 viewed by users C and B records programs scheduled for automatic recording on the basis of automatic recording schedules provided by the other program community, user B is capable of viewing programs proposed by each of the program communities. Further, user A is capable of viewing a program to be recorded on the basis of a program list from a program community to which user A belongs. Similarly, user C is capable of recording and viewing a program recorded on the basis of a program list from a program community (program community in which user C registers a user account) to which user C belongs.

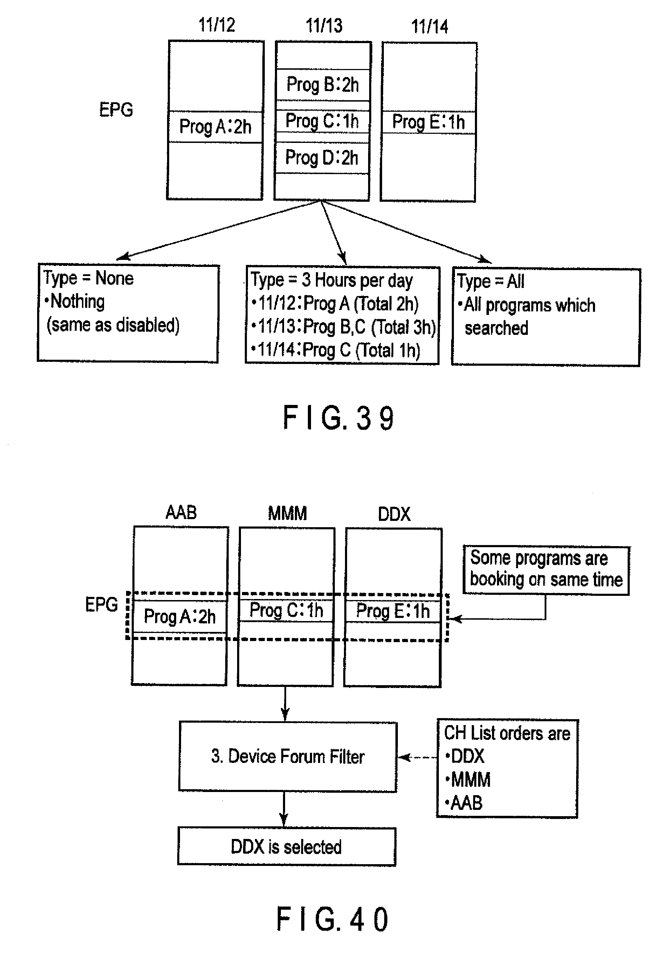

FIG. 39 illustrates an example of filtering (condition settings) based on automatic recording condition settings <"'+++ community' community auto recording setting">.

For example, when the number of programs scheduled for automatic recording on the 12th is one and the length of the program is two hours, the entire program can be recorded with a setting of three hours per day.

For example, when the number of programs scheduled for automatic recording on the 13th is three, the length of the programs is two hours, one hour, and two hours, two of the programs in ascending order of the scheduled time can be recorded (the third program cannot be recorded) with a setting of three hours per day.

FIG. 40 relates to the order of priority for channels as candidates for recording in the automatic recording condition setting. More specifically, programs of a channel given with a higher priority in the EPG searcher shown in FIG. 35 is filtered as candidates for scheduled automatic recording.

That is, in the example of FIG. 40, programs of a channel "CH-DDX" are stored in a scheduled automatic recording list as candidates for scheduled automatic recording.

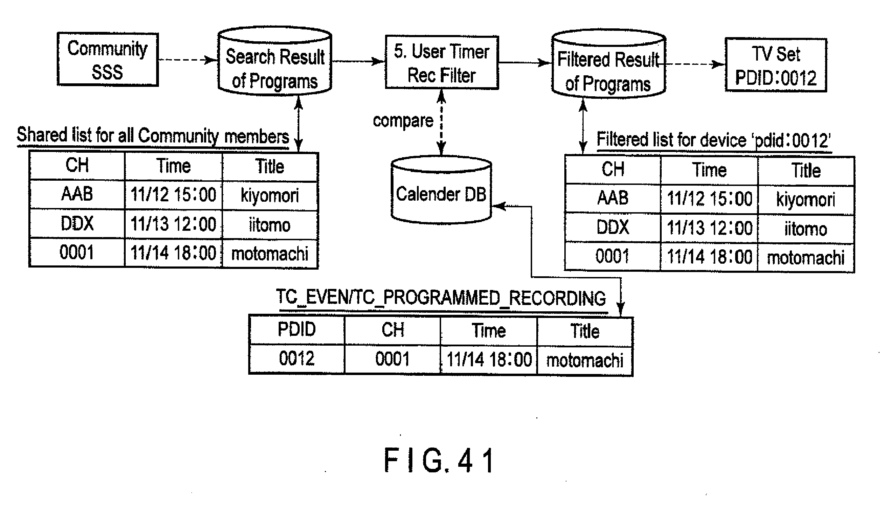

FIG. 41 illustrates an example of filtering in which an event (scheduled in advance by a user) is taken into consideration.

When a shared list shared by members of a program community exists and a program which has been scheduled in advance by a user is included in the list, the program is excluded from the candidates for scheduled automatic recording by the third filtering device <User Timer Rec Filter>.

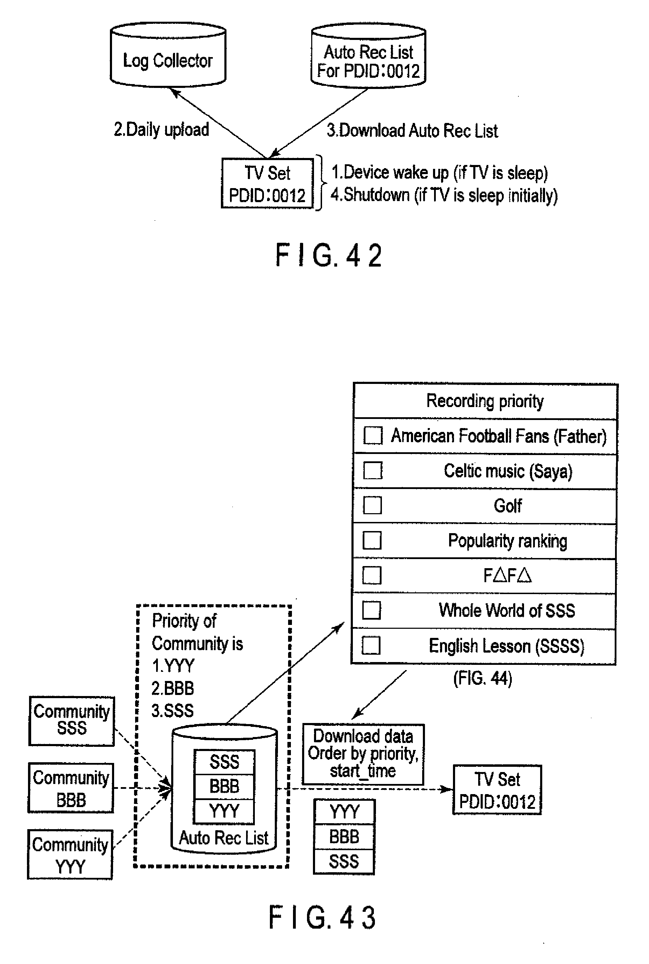

FIG. 42 illustrates an example of timing for update <Upload> of scheduled automatic recording.

A television set acquires an automatic recording list <Auto Rec List> for scheduled automatic recording at least once a day from the server. Accordingly, prior to the update (acquisition), schedule information <Reserve Data> stored in the television set is uploaded to the server. In this case, when the television set is powered off (not powered on) or in a sleep mode, the television set is powered on prior to the upload.

When schedule information <Reserve Data> is uploaded from a television set, an automatic recording schedule list for the television set is prepared in the server. When the television set has not been powered on, the television set is powered off (set to a sleep mode) once downloading of the automatic recording schedule list from the server (acquisition of the list) has been completed.

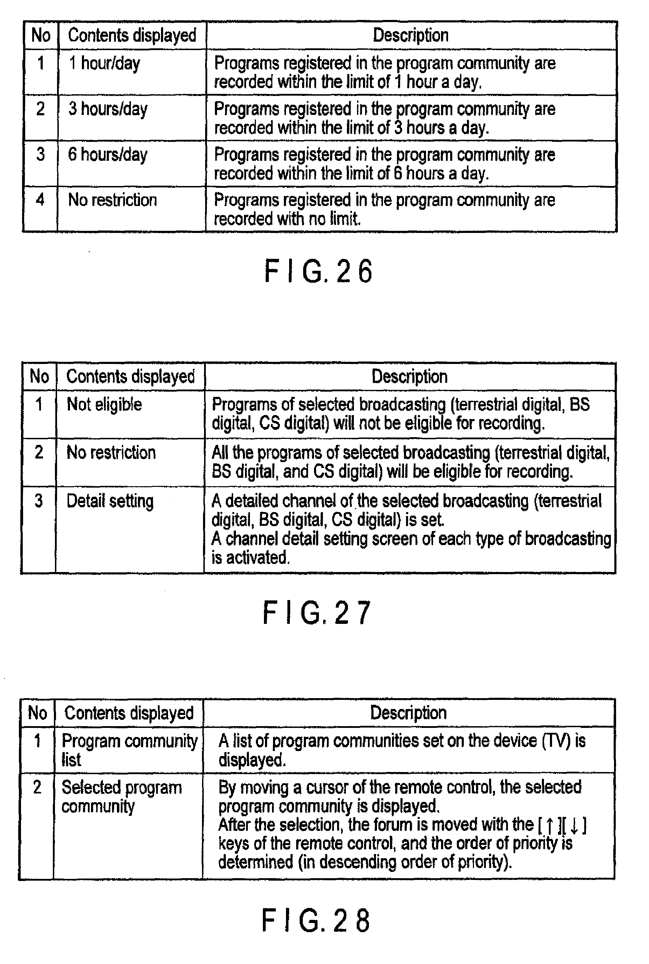

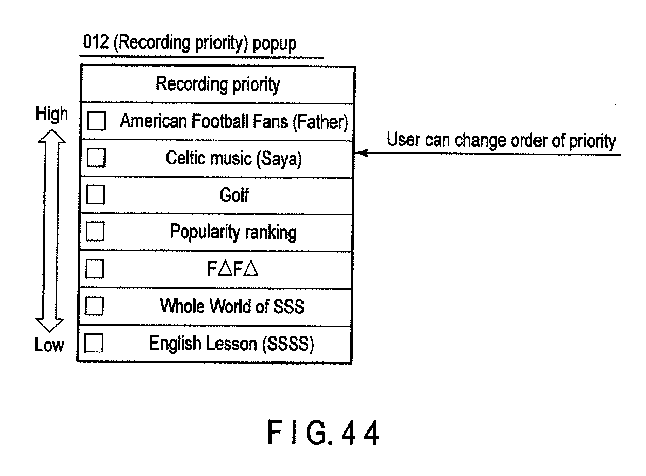

FIGS. 43 and 44 illustrate an example of setting the order of priority in scheduled automatic recording set in the television set 101. In the setting, an order of priority is set for each of a plurality of program communities in which a plurality of users registered in the television set 101 are registered. Personal accounts (Father) and (Saya) and a common account (no name) are registered in the television set 101, and are managed by the server 1001 in which a unique identifier is assigned to each account. Each of the accounts can be registered in an arbitrary program community, and can acquire an automatic recording list from each program community. The personal accounts "Father" and "Saya" may be registered in different devices. As for the setting method, a program community for which the order of priority should be changed is selected by operating the [↑] and [↓] keys on the cursor pad of a remote control so that (a display of) the program community is moved to a position to which the program community should be moved, thereby determining the order of priority, as shown in FIG. 28. A program community positioned on an upper side is given with a higher order of priority (more reliable recording can be expected).

By operating (turning on/pressing) an [Enter] key of the remote control unit once [first time], the target program community is selected. By operating (turning on/pressing) the [Enter] key of the remote control unit once more [second time], the selected program community is deselected.

As described with reference to FIG. 38, when two or more recording devices (television sets) are provided, a unified recording device (recording destination device) may be used for each program community. Further, as described with reference to FIG. 41, a program for which the user has already set scheduling is recorded with a higher priority.

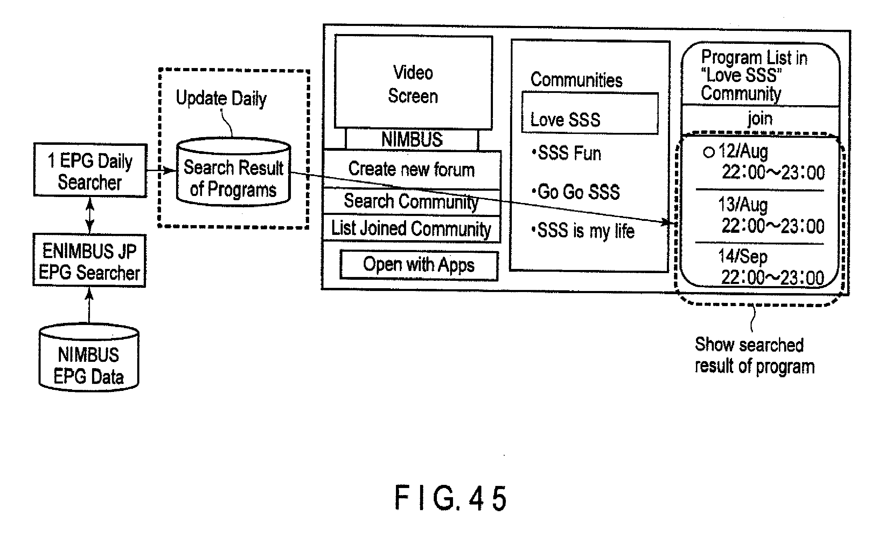

FIG. 45 illustrates a preview of an automatic recording schedule using a program community service.

In the television set 101, the user is capable of checking information on a program community to which a program to be recorded according to scheduled automatic recording using a program community service belongs, information on a relevant program community, a program list obtained by registering in the program community, and the like on a program community top screen. When the user is registered in a program community, the program community top screen displays a program proposed by the program community as a picture-in-picture (PinP) in a PinP display region, as exemplified in FIG. 5D.

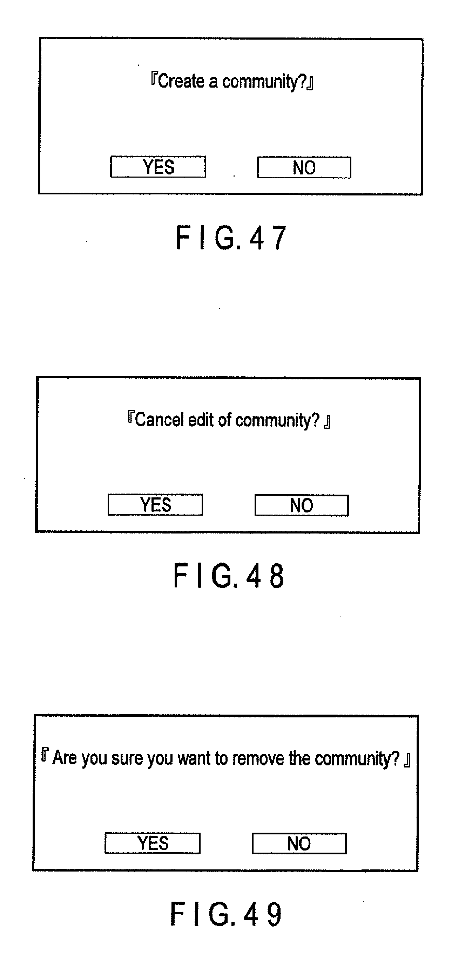

FIG. 48 illustrates a configuration of a program list processing application <Community Program List API> of the server (cloud service).

The program list processing application allows a plurality of user interfaces, such as agents <Agents> that function as signal processors configured to display a variety of screen displays or the like that shift according to selection by the user on a program community top screen shown in FIG. 5E, FIG. 5F, or FIG. 45, for example, to be shared. It is to be noted that "N" represents a positive integer.

The program list processing application is obtained by allowing individual agents <Agents>, i.e., the EPG searcher <EPG Daily Searcher>, a ranking injector <Timer Recording Ranking Injector>, a hot list injector <"+++" Hot List Injector>, and a user schedule setting part <Personalized Recommendation Injector>, which will be described with reference to FIG. 34 and the like, to be shared.

The EPG searcher is an application (program) which acquires data from a Nimbus EPG searcher <Nimbus EPG Searcher>, and the ranking injector similarly acquires data from a Cloud Log/HDEX Log Searcher <Cloud Log/HDEX Log Searcher>. The host list injector <"+++" Hot List Injector> acquires data from a Nimbus hot list application <Nimbus "+++" Hot List API>, and the user schedule setting part similarly acquires data from a recommendation engine <Recommendation Engine>.

A search result <Search Result of Programs> by the program list processing application is stored (recorded) in the recording device.

Next, an embodiment that achieves the above-described request will be described. FIGS. 11A to 29 illustrate screen display examples and processing examples in the television set 101.

### «Program Community Top»

FIG. 11A illustrates an exemplary screen display of a display device (display part of the television set 101) according to the embodiment, and is a display example of a program community top <"Community TOP"> screen display.

The program community top screen displays a list of program communities in which the logged-in user (user) participates.

The initial display of the program community top <"Community TOP"> screen display includes the following [1] to [4]:
[1] Program community menu
[2] Program community list
[3] Program community sub-menu
[4] Program community details

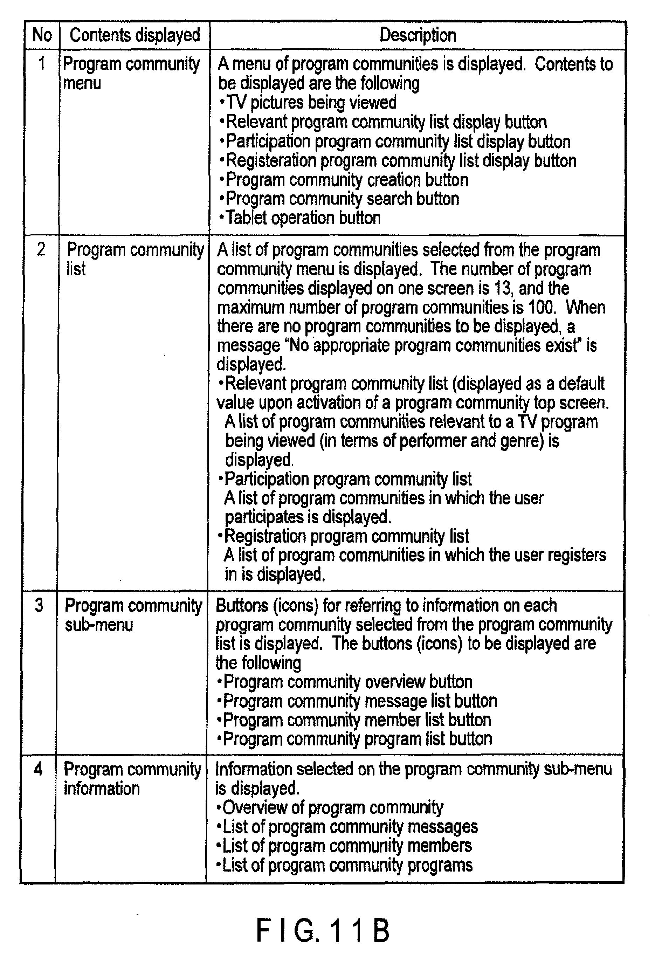

FIG. 11B is an exemplary diagram of the contents of the screen display shown in FIG. 11A, illustrating the contents displayed on the program community top screen display.

### [1] Program community menu

A menu of program communities is displayed.
- Television (TV) pictures being viewed [11]
- Relevant program community list display button [12]
- Participation program community list display button [13]
- Registration program community list display button [14]
- Program community generation button [15]
- Program community search button [16]
- Tablet operation button [17]

### [2] Program community list

A list of program communities selected from the program community menu is displayed.

The number of program communities displayed on one screen is 13, and the maximum number of program communities is 100.

When there are no program communities to be displayed, a message "No appropriate program communities exist" is displayed.
- Relevant program community list (program community top)

A relevant program community list is displayed as a default value upon activation of the screen.

A list of program communities relevant to a television program being viewed (in terms of the performer, the genre, and the like) is displayed.
- Participation program community list

A list of program communities in which the user participates is displayed.
- Registration program community list

A list of program communities in which the user registers is displayed.

### [3] Program community sub-menu

Buttons (icons) for referring to information on each program community selected in the program community list is displayed.

The buttons (icons) to be displayed on the program community sub-menu are as follows:
- Program community overview button
- Program community message list button
- Program community member list button
- Program community program list button

### [4] Program Community Details

Information selected on the program community sub-menu is displayed.
- Overview of program community
- List of program community messages
- List of program community members
- List of program community programs

### «New Program Community Creation "Create new Community"»

FIG. 12A is an exemplary diagram of a screen display of the display device according to the embodiment, illustrating the contents to be displayed on the new program community creation <"Create new Community"> screen display.

By selecting the new program community creation <"Create new Community"> from the participation program community list on the program community top screen display shown in FIG. 11A, a new program community creation screen is displayed as an on-screen display (OSD) over a pop-up <Pop Up> screen display ([screen currently being displayed]).

The new program community creation screen [036] includes the following:
- Program community name
- Friend <"Friend"> select
- Program community overview
- Program community type
- Cancel <"Cancel"> button
- Create <"Create"> button

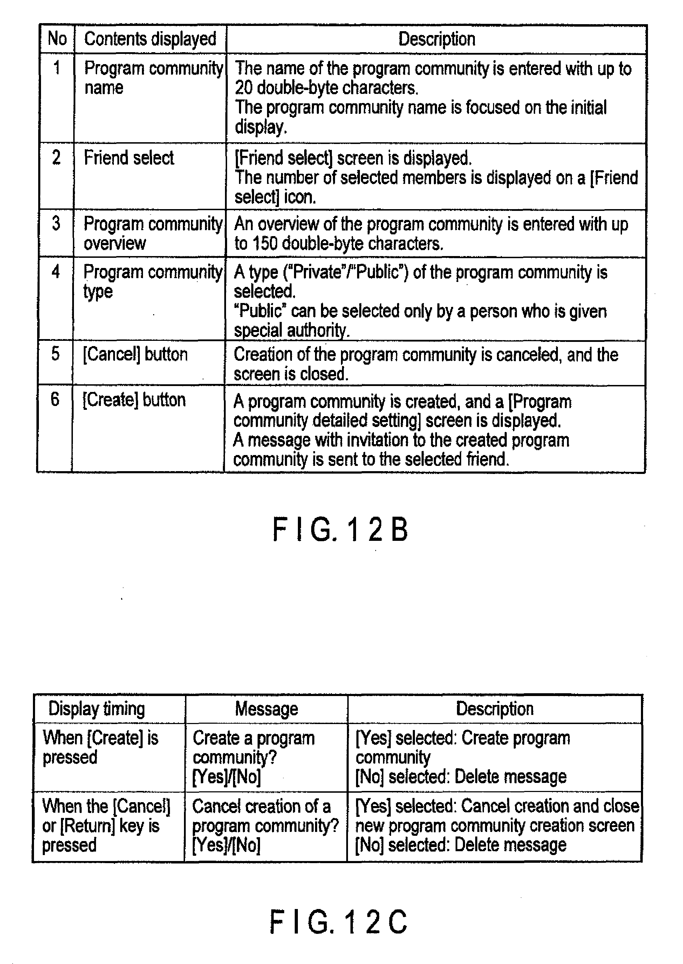

FIG. 12B illustrates the contents of display of the new program community creation <"Create new Community"> screen display [036] shown in FIG. 12A.

### [1] Program community name

The name of the program community is (can be) entered with up to 20 double-byte characters.

The program community name is focused on the initial display.

(A GUI [or character input] screen of a digital TV is used for inputting characters.)

### [2] Friend <"Friend"> select

A [Friend select] screen is displayed.

The number of selected members is displayed in a [Friend select] icon.

### [3] Program community overview

An overview of the program community is entered with up to 150 double-byte characters.

(A GUI [or character input] screen of a digital TV is used for inputting characters.)

### [4] Program community type

A type <"Private" or "Public"> of the program community can be selected.

"Public" can be selected only by a user who is given special authority.

### [5] Cancel <"Cancel"> button

Creation of the program community is canceled, and the screen is closed.

(A control signal for displaying a screen display associated as a [previous] screen display is output.)

### [6] Create <"Create"> button

A program community is created, and a [program community <"Community"> detail setting] screen is displayed.

An invitation message to the created program community is sent to the selected friend <Friend>.

FIG. 12C is an exemplary diagram of operations corresponding to button displays on the screen display shown in FIG. 12A, illustrating instructions entered with a remote control key and operations on the screen display of the new program community creation screen [036]. When [Create <"Create">] button is turned on (pressed), a message "Create a program community?" is displayed (see FIG. 47). Further, YES and NO buttons are displayed, as shown in [FIG. 47]. By selecting YES, i.e., by focusing on the button with the [←] and [→] keys and turning on the [Enter] button, the new program community creation screen [036] is displayed. By selecting NO, i.e., by focusing on the button with the [←] and [→] keys and turning on the [Enter] button, the message ([FIG. 61]) is deleted, the new program community creation screen [036] is closed, and a control signal configured to display a screen display associated as a [Previous] screen display is output.

### [Cancel <"Cancel">] key

The "new program community creation" screen is closed (A control signal for displaying a screen display associated as a [previous] screen display is output).

### <<Program Community Edit>>

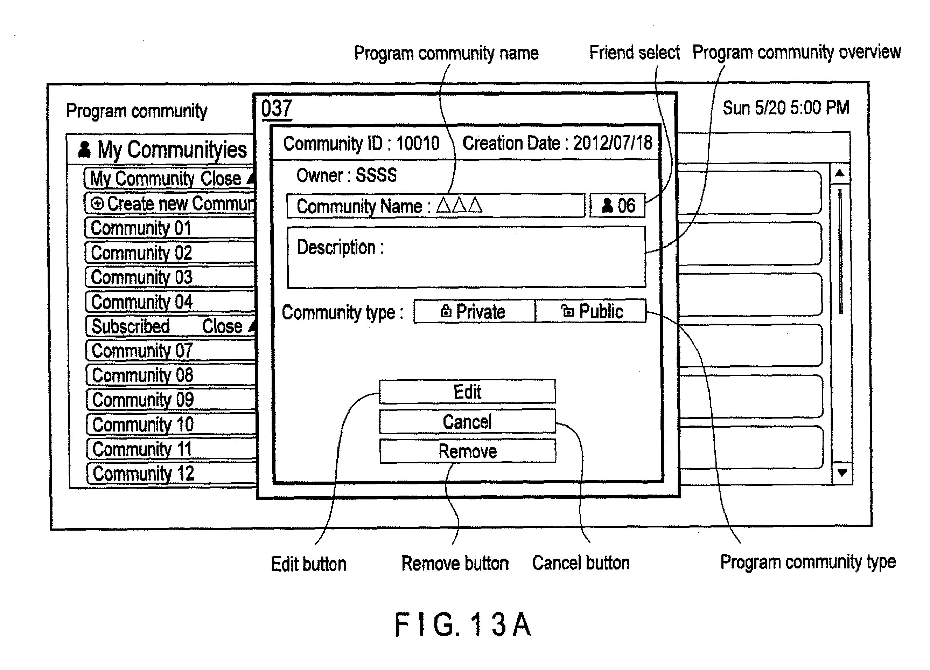

FIG. 13A is an exemplary diagram of a screen display of the display device according to the embodiment, illustrating the contents to be displayed on a screen display of a <Program Community Edit "Edit"> screen [037].

By selecting edit <"Edit"> on the display of the program community details screen shown in FIG. 11A, a program community edit screen [037] shown in FIG. 13A is displayed as a pop-up. The edit screen includes, for example, the following:
Edit <"Edit"> button
Cancel <"Cancel"> button
Remove <"Remove"> button
Program community name
Friend select button
Program community overview
Program community type

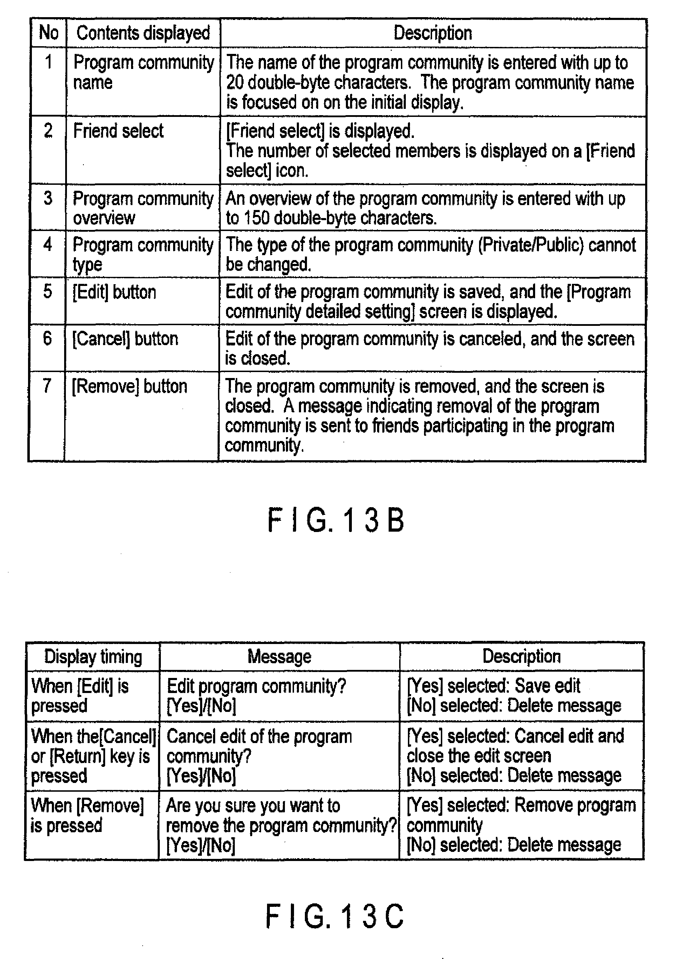

FIG. 13B is exemplary diagram of the contents of the screen display shown in FIG. 13A, illustrating the contents to be displayed on a screen display of the edit <"Edit"> screen.

### Edit button

An edit button is displayed only when the logged-in user is the master of the program community (the edit button is effective only for the master of the program community).

### Cancel button

Edit of the program community is canceled, and the screen is closed.

### Remove button

The program community is removed, and the screen is closed.

A message indicating removal of the program community is sent to friends participating in the program community.

### Program community name

The name of the program community is (can be) entered with up to 20 double-byte characters.

The program community name is focused on the initial display. (A GUI [character input] screen of a digital TV is used for inputting characters.)

### Friend select

A [friend screen] is displayed.

The number of selected members is displayed in a [Friend select] icon.

### Program community overview

An overview of the program community is entered with up to 150 double-byte characters (a GUI [character input] screen of a digital TV is used for inputting characters).

### Program community type

The program community type is invalidated (The type of the program community "private <"Private"> or public <"Public">" cannot be changed).

FIG. 13C illustrates exemplary operations corresponding to button displays on the screen display shown in FIG. 13A, in which operations on a screen display corresponding to control inputs by a remote control key is shown.

When the [Edit] key is turned on (pressed), a message "Edit program community?" and YES and NO buttons are displayed.

When YES is selected in response to the display, an "edit" screen is displayed such that the "program community name" and the "program community overview" can be edited. A GUI (character input) screen of the digital TV 101 is activated, and a character input is received.

When NO is selected in response to the display, the message (screen display) is deleted, and the [edit] screen is closed.

### [Cancel] key

A message such as "Cancel edit of the program community?" and YES and NO buttons, as shown in FIG. 48, are displayed.

When YES is selected, the edit is canceled and the [edit] screen is closed, and when NO is selected, the message ([FIG. 48]) is deleted.

### [Remove] key

A message such as "Do you really want to remove the program community?" and YES and NO buttons, as shown in FIG. 49, are displayed.

When the user selects YES in response to the YES and NO display, the program community is removed (the program community is removed). When the user selects NO, the message ([FIG. 49]) is deleted.

### <<Program Community Detail Settings "Community Detail Setting">>

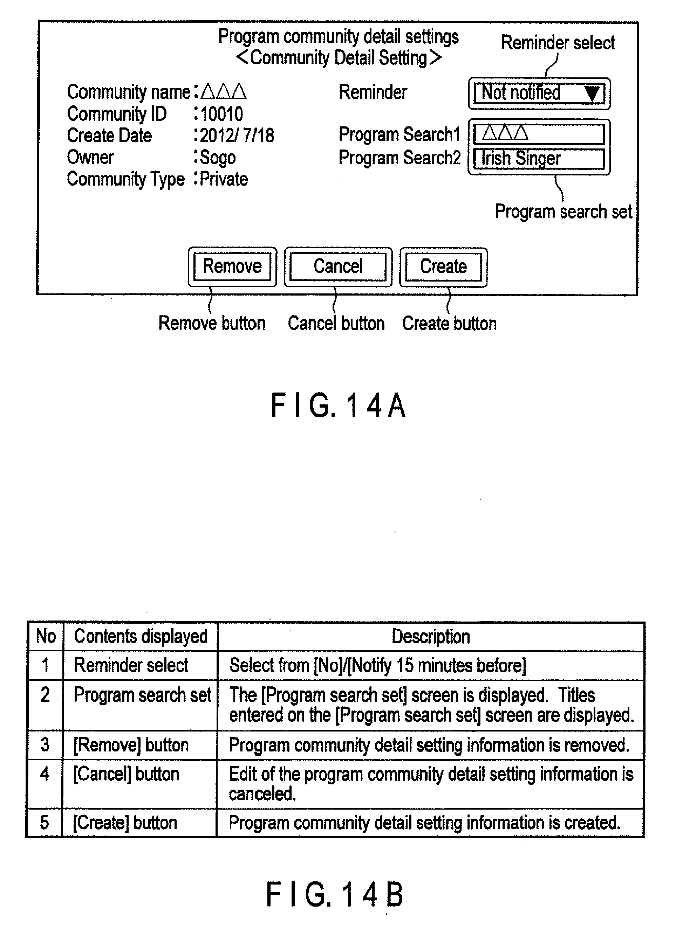

FIG. 14A is an exemplary diagram of a screen display of the display device according to the embodiment, illustrating an example of a [Program community detail settings <"Community Detail Setting">] screen.

The [program community detail setting] screen shown in FIG. 14A is displayed after the above-described creation of a new program community and edit of the program community, and includes the following select fields, input fields, and buttons:
Reminder <"Reminder"> select field
Program search set <"Program Search 1"> field A <[1]>
Program search set <"Program Search 2"> field B <[2]>
Remove <"Remove"> button
Cancel <"Cancel"> button
Create <"Create"> button

The "display" further includes the following:
[Program community name] <"Community Name"> field
[Program community ID] <"Community ID"> field
[Created date] <"yy (Year)/mm (Month)/dd (Day)"> field
[Program community master (Owner) name] <"Owner Name"> field
[Program community type] <"Community Type"> field

FIG. 14B is an exemplary diagram of the contents of the screen display shown in FIG. 14A, illustrating the contents of display in the reminder select field.

### [1] Reminder select field

Whether to enable a reminder or not can be selected (set), and one of [No] and [Notify 15 minutes before] is selected.

### [2] Program search set field

A program search set screen display is displayed.

Titles entered on the program search set screen display, such as a [genre] and an [artist name] are displayed.

### [3] Remove button

Program community detail setting information is removed.

### [4] Cancel button

Edit (input/setting) of the program community detail setting information is canceled (the screen is closed after the cancellation).

### [5] Create button

Program community detail setting information is created (entered/set).

In each of the program search sets, characters are (can be) entered with up to 20 double-byte characters (a GUI [character input] screen of a digital TV is used for inputting characters).

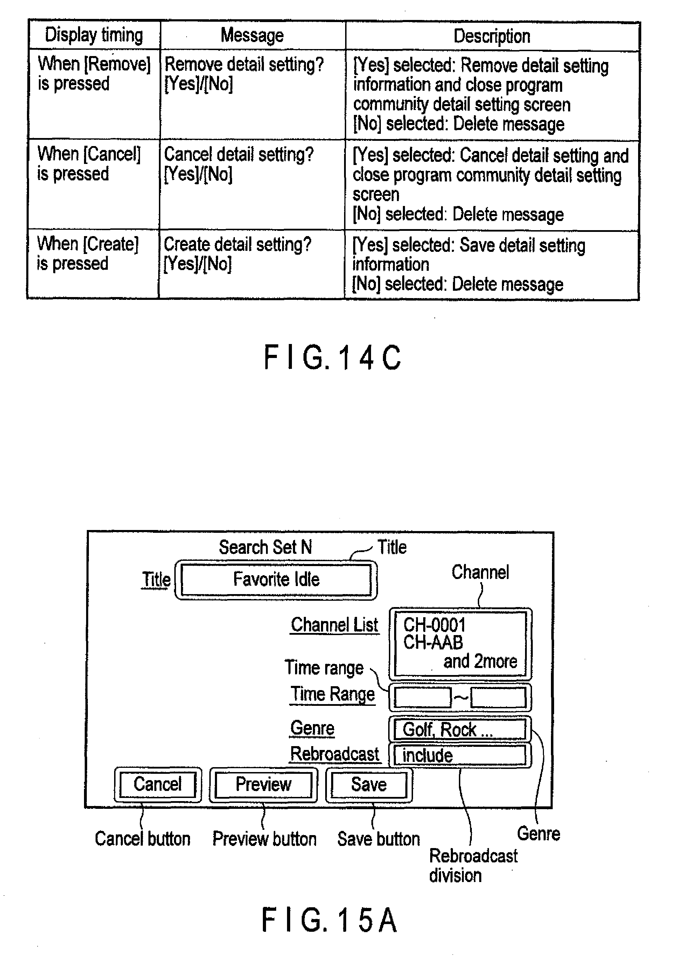

FIG. 14C illustrates operations on the screen display corresponding to control inputs made by a remote control key corresponding to button displays on the screen display shown in FIG. 14A.

### [Remove] button

A message "Remove program community detail setting?" and YES and NO buttons are displayed.

When YES is selected, detail setting information is removed, and the program community detail setting screen is closed.

When NO is selected, the message is deleted.

### [Cancel] button

A message such as "Cancel program community detail setting?" and buttons YES and NO are displayed, and when YES is selected, the program community detail setting is canceled and the program community detail setting screen is closed. When NO is selected, on the other hand, the message is deleted.

### [Create] button

Program community detail setting information is created (input/set).

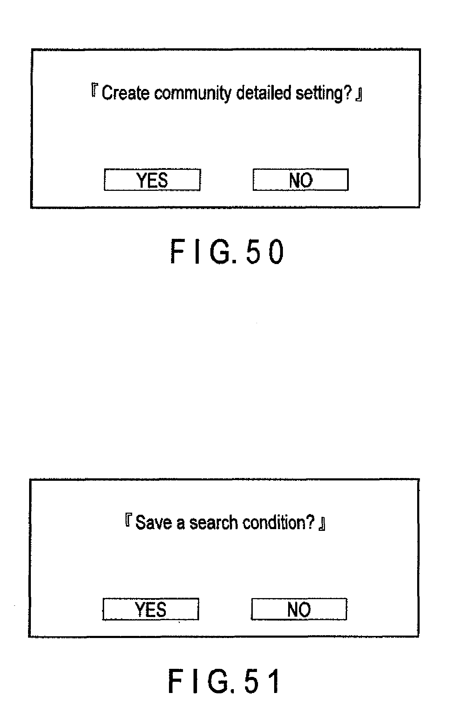

A message such as "Create program community detail setting?" and YES and NO buttons shown in [FIG. 50] are displayed, and when YES is selected, [program community detail setting] is saved. When NO is selected, the message ([FIG. 50]) is deleted.

### <<Program Search Set>

FIG. 15A is an exemplary diagram of a screen display of the display device according to the embodiment, illustrating a [program search set <"Search Set N">] screen.

The [program search set <"Search Set N">] screen includes the following:
Title <"Title">
Keyword <"Keyword">
Channel <"Channel List"> field
Time range <"Time Range"> field
Genre <"Genre"> field
Rebroadcast division <"Rebroadcast"> field
Cancel <"Cancel"> button
Preview <"Create"> button
Save <"Save"> button

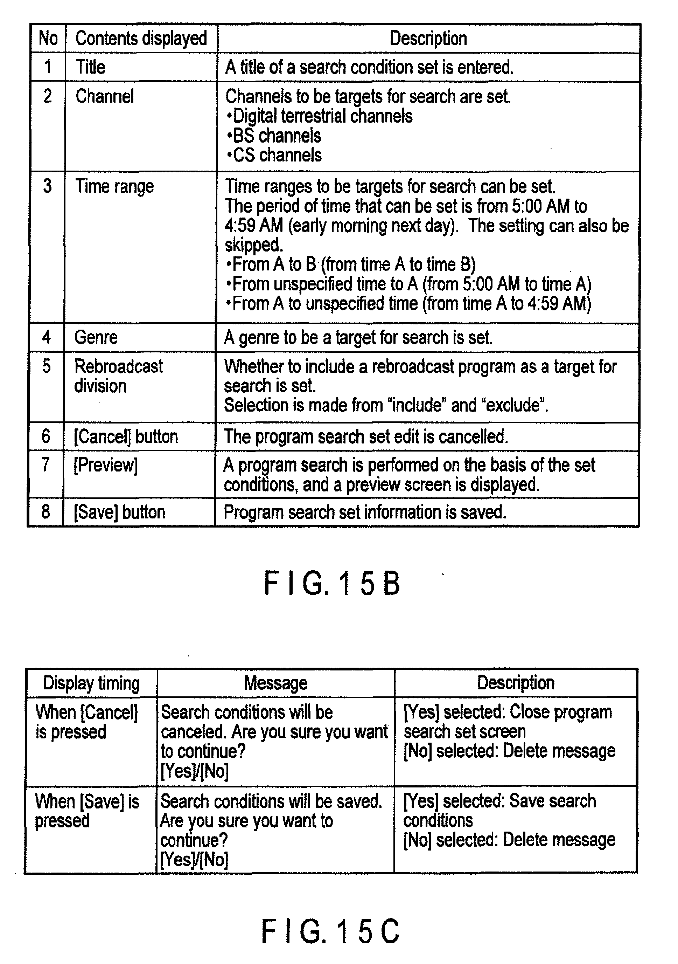

FIG. 15B is an exemplary diagram of the contents of the screen display shown in FIG. 15A, illustrating the contents of functions (displays) of fields and buttons on the [Program search set] screen.

### [1] Title

A title of a search condition set can be entered. The input method is by a direct input using a GUI (keyboard-type input screen).

### [2] Channel

Channels to be targets for search can be set from the following channels:
Terrestrial (digital broadcast) channels
BS (broadcasting satellite) channels
CS (communications satellite) channels

### [3] Time range

Time ranges to be targets for search can be set.

Time ranges that can be set are as follows:
a) From 5:00 a.m. to 4:59 a.m. (the next day)
   * When there is no input, it is regarded that the setting has been skipped, and all the time ranges (a) are automatically set.
b) From A to B (from time A to time B)
c) From an unspecified time to A (from 5:00 a.m. to time A)
d) From A to an unspecified time (from time A to 4:59 a.m.)

The input is performed directly using numerical (alphabetical) keys.

### [4] Genre

A genre to be a target for search can be set.

The setting is performed by a direct input (via a keyboard-type input screen) using a GUI or a direct input using numerical (alphabetical) keys.

### [5] Rebroadcast division

Whether to include a "rebroadcast" program as a target for search can be set, and whether to "include" or "exclude" rebroadcast programs can be selected by a scroll-type select display field (select is made by switching display between "include" and "exclude").

### [6] Cancel button

The program search set edit is cancelled.

### [87] Preview button

A program search is performed on the basis of the set conditions.

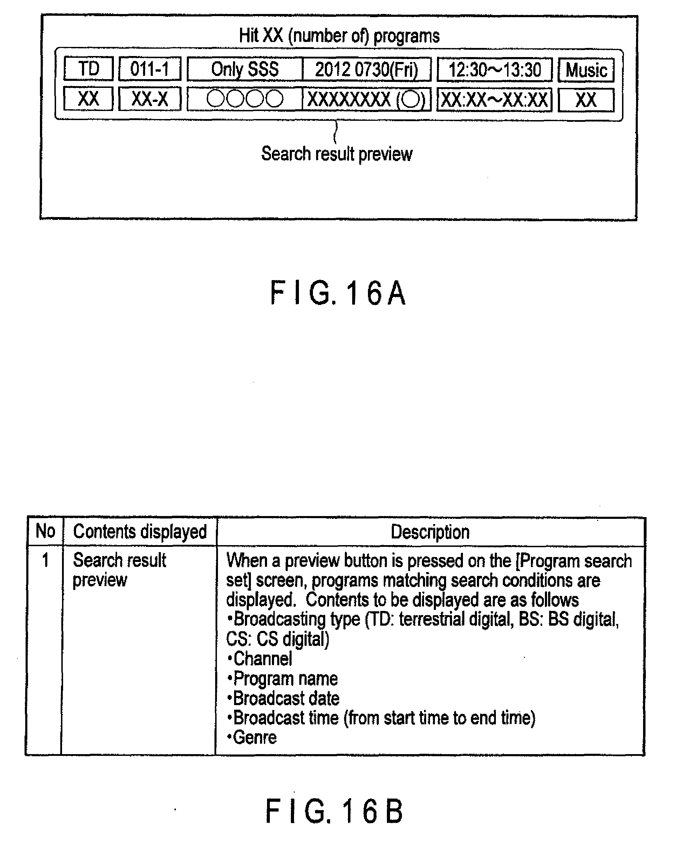

A preview screen [FIG. 16A <"Preview">] is displayed.

### [8] Save button

Program search set information is saved.

FIG. 15C illustrates an operation of a remote control key corresponding to a button display on a screen display shown in FIG. 15A, and an operation corresponding to a display on the [Program search set] screen display.

### [Cancel] button

For example, a message "Search conditions will be removed. Are you sure you want to continue?" and YES and NO buttons are displayed. When YES is selected, the [program search set] screen is closed. When NO is selected, the message is deleted.

### [Save] button

A message such as "Search conditions will be saved. Are you sure you want to continue?" and YES and NO buttons, which are shown by way of illustration in FIG. 51, are displayed.

When YES is selected in FIG. 51, a search result by the [Program search set] is saved, and the screen is closed.

When NO is selected in FIG. 51, the screen is deleted.

### <<Display of Program Search Result (Preview)>>

FIG. 16A is an exemplary diagram of a screen display of the display device according to the embodiment, illustrating an example of a [Program search result <"Preview">] screen.

The [Program search result <"Preview">] is displayed (the display is switched) when a preview button is turned on the [Program search set] screen shown in FIG. 15A.

### Search result screen display

At most N programs, for example, six programs, can be displayed on one screen display.

When the number of programs greater than six can be searched for, the programs can be displayed on the [Next] page.

FIG. 16B illustrates exemplary contents of the screen display (search result screen display) shown in FIG. 16A, including the following:
Broadcasting type ([TD)/[BS]/[CS] display) field

Examples of the broadcasting types to be displayed are as follows:
[TD]: Regular (digital) broadcasting
[BS]: Satellite broadcasting relayed by broadcast satellite
[CS]: Satellite broadcasting relayed by communication satellite

A program of regular broadcasting that is rebroadcast by a distributor (cable station) or the like is displayed as [TD].

### Channel field

A prescribed channel display is displayed.

### Program name field

A program name (title) acquired from electronic program guides (EPG) or a server (program community) is displayed.

Broadcast date: [yy (Year)/mm (Month)/dd (Day)] field

The broadcast date is displayed in the order of [yy (Year)/mm (Month)/dd (Day)].

Broadcast time: [hh (Hour)/mm (Minute) - hh (Hour)/mm (Minute)] field

The broadcast date is displayed in the order of [start <Leading end>: hh (Hour)/mm (Minute) - End <Termination end>: hh (Hour)/mm (Minute)]

### Genre field

An identifier (genre) acquired from the electronic program guides (EPG) or the server (program community) is displayed.

### «Member Select»

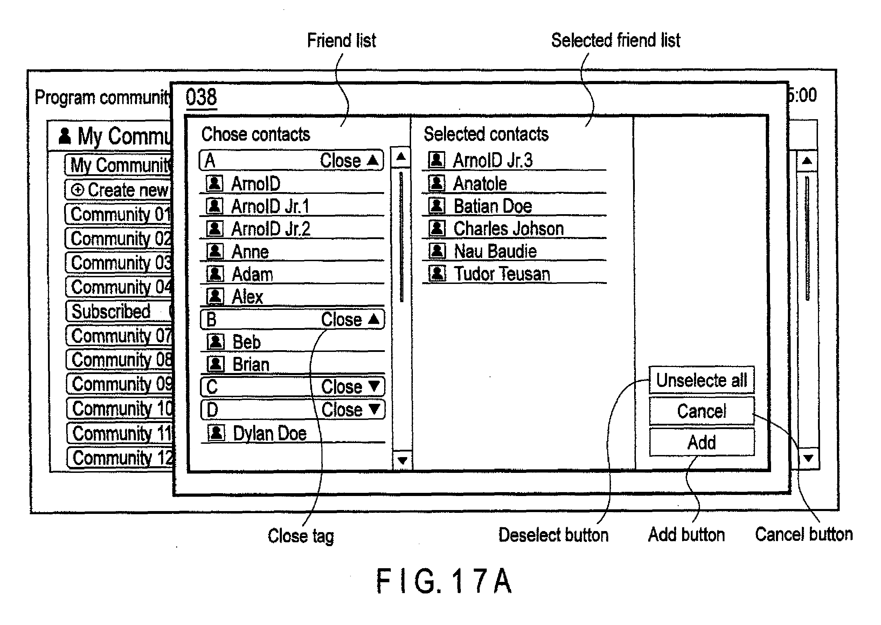

FIG. 17A is an exemplary screen display of a display device according to the embodiment, in which a [member select <"Selected Contacts">] screen is shown.

The [member select] screen display [038] shown in FIG. 17A includes the following:
Friend <"Friend"> list field
Close <"Close"> tag
Selected friend <"Friend Selected"> list field
Deselect <"Deselect all"> button
Cancel <"Cancel"> button
Edit <"Edit"> button
Add <"Add"> button

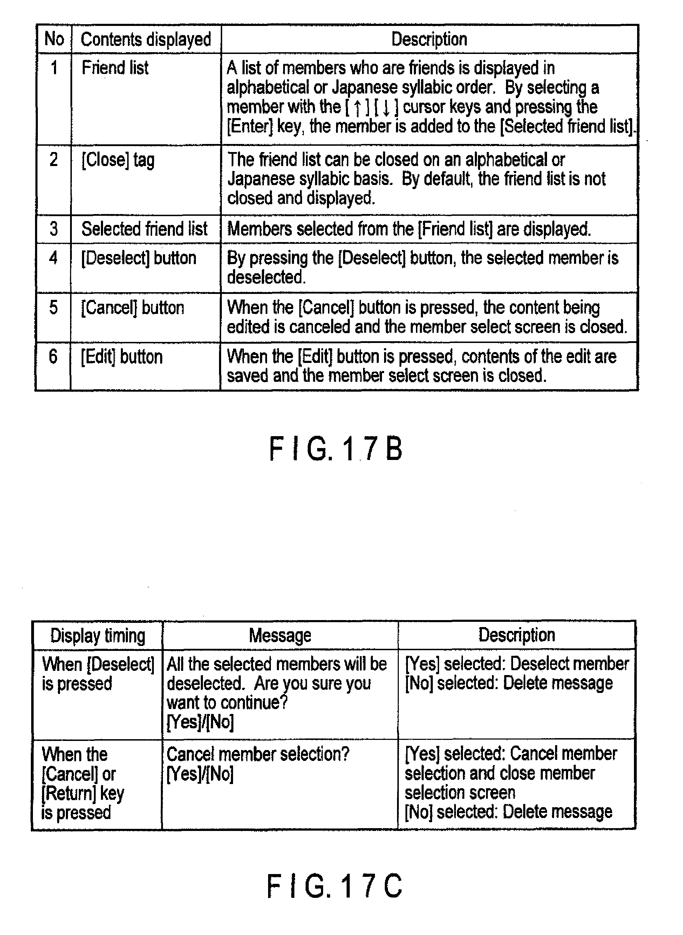

FIG. 17B is an exemplary diagram of the contents of the screen display shown in FIG. 17A, illustrating functions (displays) of fields and buttons on the [Member select] screen [038].

### [1] Friend list

A list of members who are friends is displayed in alphabetical or Japanese syllabic order.

By selecting (focusing on) a member displayed in the friend list with the [↑] and [↓] cursor keys and pressing (turning on) the [Enter] key, the member can be added to the [Selected friend list] (added as a member).

### [2] Close tag

The friend list can be closed on an alphabetical or Japanese syllabic basis.

By default, the friend list is not closed and displayed.

### [3] Selected friend list

Members selected from the [Friend list] are displayed.

### [4] Deselect

By pressing (turning on) the [Deselect] button, the selected member is deselected.

### [5] Cancel

When [Cancel] button is pressed (turned on), the content being edited is canceled and the member select screen is closed.

### [6-1] Edit

The members displayed as the selected friends can be edited (changed) one by one, and when the [Edit] button is pressed (turned on), the contents of the edit are saved and the member select screen is closed.

### [6] Add

A member is "added" to the members displayed in the selected friend list.

FIG. 17C illustrates control inputs corresponding to button displays on the screen display shown in FIG. 17A and displays and operations on the [Member select] screen display.

### [Deselect] button

A message such as "All the selected members will be deselected. Are you sure you want to continue?" and buttons YES and NO are displayed, and when YES is selected, the members are deselected. When NO is selected, on the other hand, the message (pop-up) is deleted.

### [Cancel] button

A message such as "Cancel member selection?" and YES and NO buttons are displayed, and when YES is selected, member selection is canceled, and the member select screen is closed. When NO is selected, the message (pop-up) is deleted. A similar operation is performed when "Return" key is pressed (turned on).

The program community will be described in detail with reference to FIG. 11A.

### «Program Community Overview»

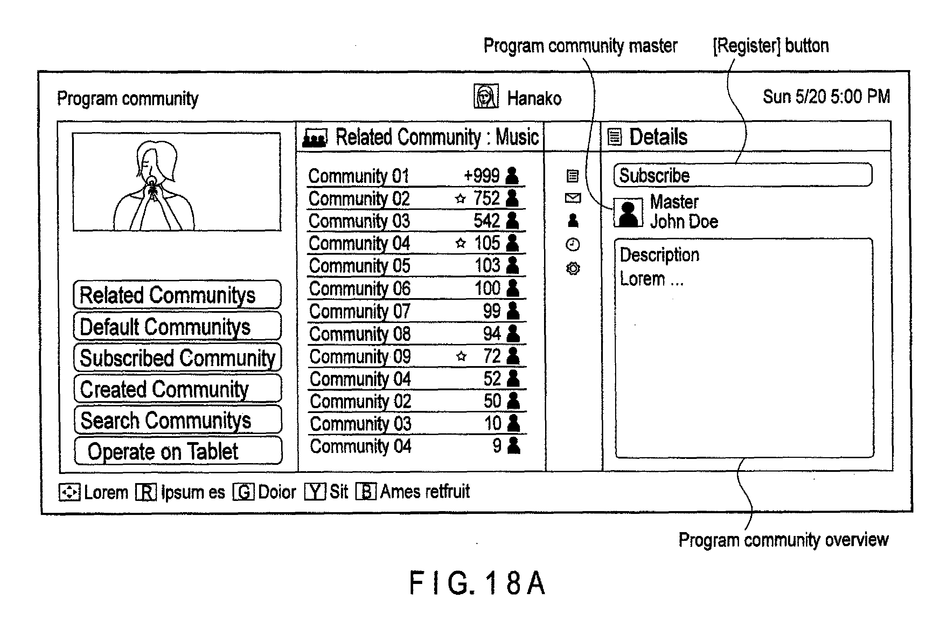

FIG. 18A illustrates an exemplary screen display of the display device according to the embodiment.

As shown in FIG. 18A, when the "Program community details" are focused on by operating a cursor key of a remote control device and turning on the enter button on the program community top screen display shown in FIG. 11A, a program community overview screen, on which the contents (overview) of a program community selected from a program community list can be checked, is displayed.

The program community overview screen displays the following:
[1] Register <"Subscribe"> button
[2] Program community master field
[3] Program community overview field

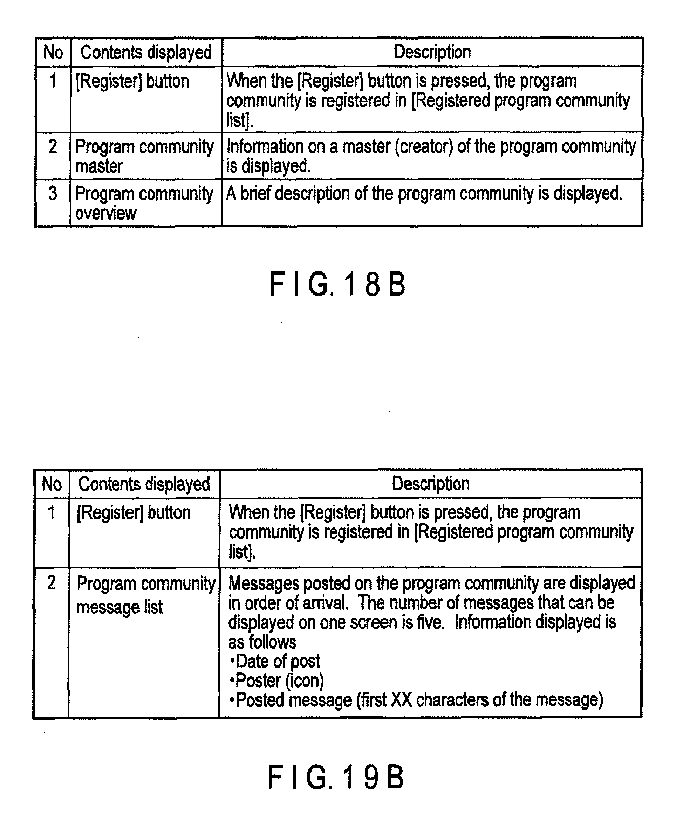

FIG. 18B is an exemplary diagram of the contents of the screen display shown in FIG. 18A, and illustrates the contents of items displayed on the [Program community overview] screen.

### [1] Register

When the [Register] button is pressed, the program community is registered in the [Registered program community list (the third row of FIG. 11A)].

### [2] Program community master

Information on a master (creator) of the program community is displayed.

### [3] Program community overview

A brief description of the program community is displayed. When the contents to be displayed cannot be contained on one screen, the screen can be scrolled page by page by operating a [∧] key (jump cursor key) and a [∨] key (jump cursor key).

### [Return] key

The program community top screen is closed, and the screen returns to the cloud home <"Cloud HOME"> screen.

### «Program Community Message List»

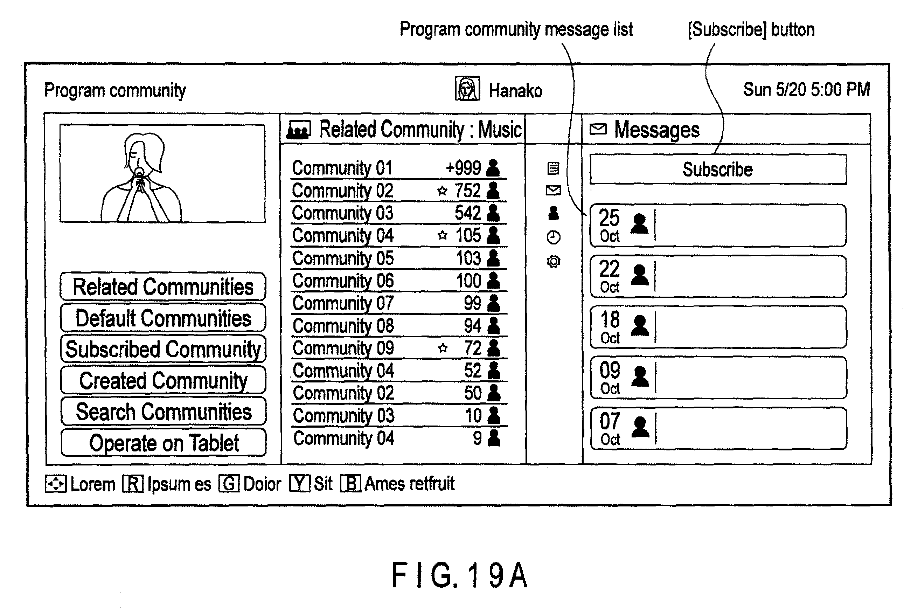

FIG. 19A illustrates an exemplary screen display of the display device according to the embodiment.

As shown in FIG. 19A, when the "program community message list" is focused on by operating a cursor key and turning on the enter button on the program community top screen display shown in FIG. 11A, a program community message list screen displaying messages from other users in the program community selected from the program community list is displayed.

The program community message list screen displays the following:
[1] Register <"Subscribe"> button
[2] Program community message list field

FIG. 19B is an exemplary diagram of the contents of the screen display shown in FIG. 19A, illustrating the contents of items displayed on the [Program community message list] screen.

### [1] Register

When the [Register] button is pressed, the program community is registered in the [Registered program community list (the third row of FIG. 11A)].

### [2] Program community message list

Messages posted on the program community are displayed in order of arrival.

The number of messages that can be displayed on one screen is five.

Information displayed by the message is as follows:
Date of post
Poster (icon)
Posted message (first XX (predetermined number of) characters of the message)

When the contents to be displayed cannot be contained on one screen, the screen can be scrolled line by line by operating the [↑] and [↓] keys.

When the contents to be displayed cannot be contained on one screen, the screen can be scrolled page by page by operating the [∧] key (jump cursor key) and the [v] key (jump cursor key).

### [Return] key

The detailed message screen is closed.

### «Program community detailed message»

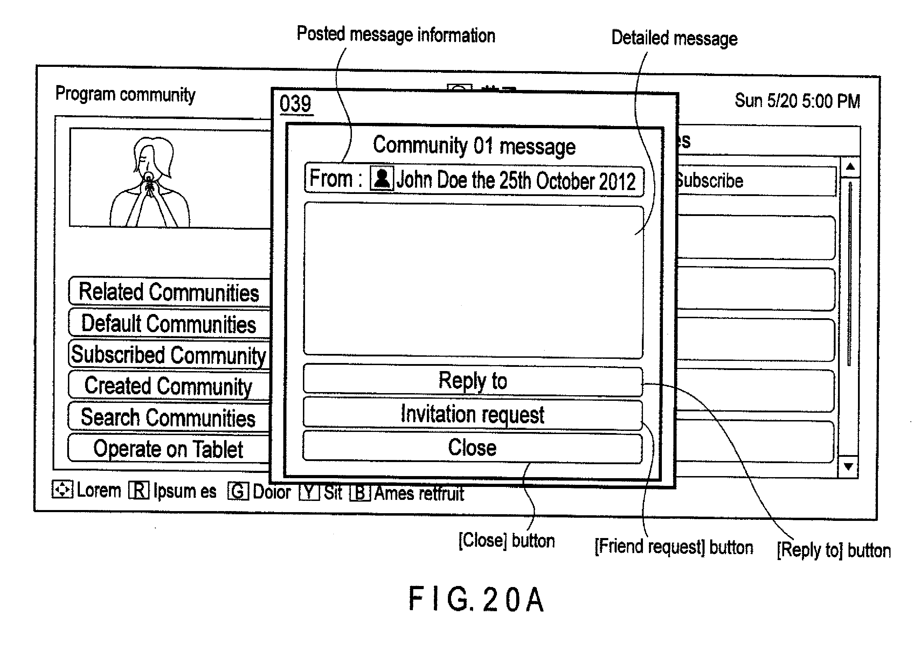

FIG. 20A is an exemplary screen display of the display device according to the embodiment, illustrating an exemplary screen display of the [Detailed message] screen [039]. When one "message" is focused on by operating a cursor key and turning an the enter button (selecting the message) on the program community message list screen display shown in FIG. 19A, a pop-up is displayed.

The detailed message screen [039] displays the following:
[1] Posted message information <"User name (ID), dd (Date), mm (Month), yy (Year)"> field
[2] Detail message <"Message (Text)"> field
[3] [Reply to <"Reply to">] button
[4] [Friend request <"Invitation request">] button
[5] [Close <"Close">] button

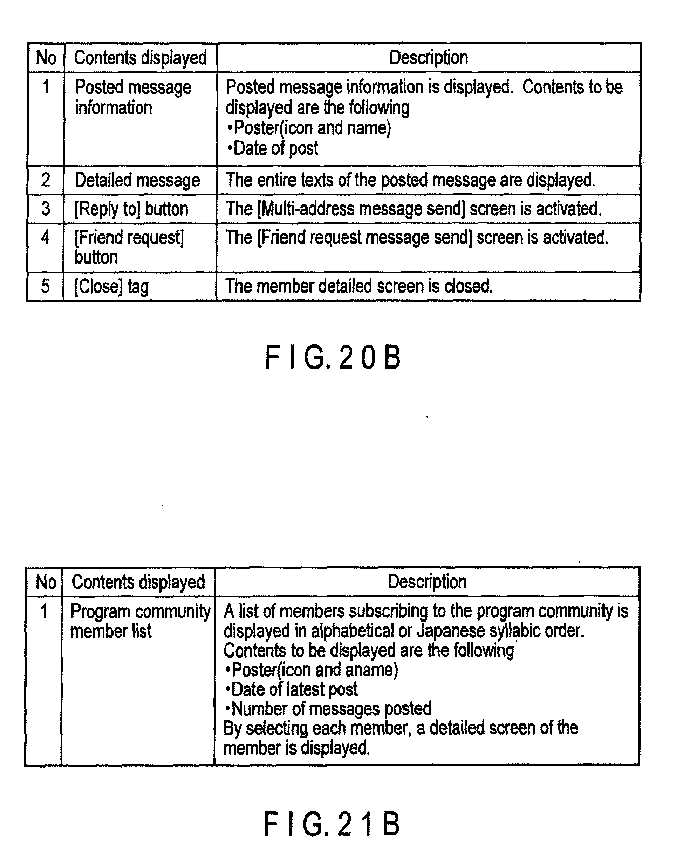

FIG. 20B is an exemplary diagram of the contents of the screen display shown in FIG. 20A, illustrating the contents of the screen display of the detailed message screen [039].

The detailed message screen displays the following:
[1] Posted message information <"User name (icon), dd (Date), mm (Month), yy (Year)">, i.e., the following:
   Poster <User name (icon)>
   Date of post <dd (Date), mm (Month), yy (Year)>
[2] Detailed message
   The entire texts of the posted message are displayed.
   When the contents to be displayed cannot be contained on one screen, the screen can be scrolled line by line by operating the [↑] and [↓] keys.
   When the contents to be displayed cannot be contained on one screen, the screen can be scrolled page by page by operating the [∧] key (jump cursor key) and the [∨] key (jump cursor key).
[3] [Reply to]
   A [Multi-address message send] screen is activated.
[4] [Friend request]
   A [Friend request message send] screen is activated.
   The [Friend request message send] screen is displayed when the logged-in user and a participating member selected from the [program community member list] screen are not friends.
[5] [Close] button
   The detailed message screen is closed.

### «Program community member list»

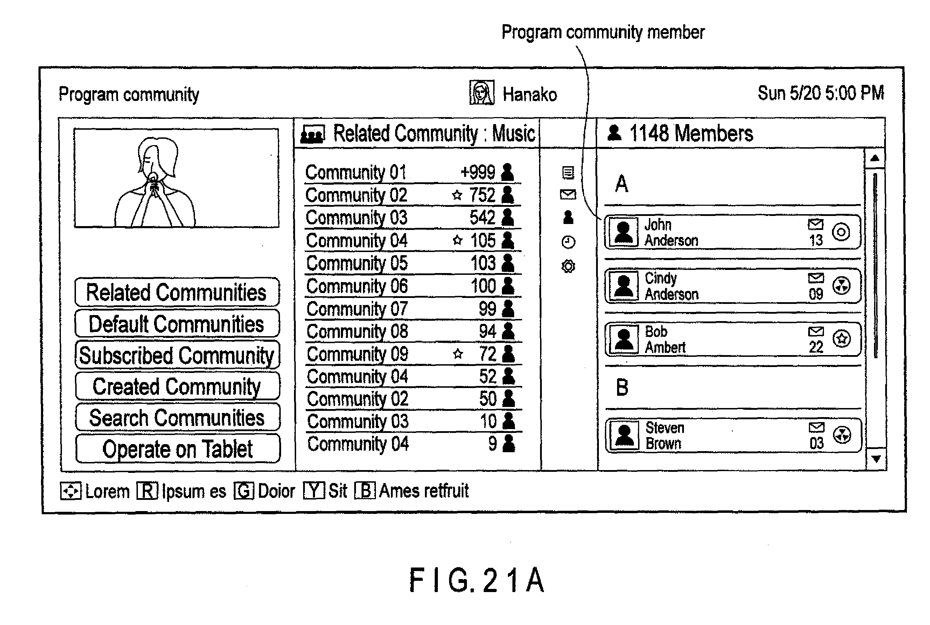

FIG. 21A is an exemplary screen display of the display device according to the embodiment, illustrating an example of a [Program community member (user) list] screen. By focusing on one program community by operating the cursor key and turning on the enter button (selecting a message) on the [Program community list] screen displayed by focusing on the [Program community list] by operating a cursor key and turning on the enter button on the program community top screen display shown in FIG. 11A, a pop-up is displayed.

FIG. 21B is an exemplary diagram of the contents of a screen display shown in FIG. 21A, illustrating the contents of a screen display of a program community member (user) list screen.

The program community member list screen displays a list of members registered in the program community in alphabetical or Japanese syllabic order, as shown in FIG. 21B.

The contents to be displayed for each member includes, for example, the following:
- Poster <User name (icon)>
- Date of latest post <dd (Date), mm (Month), yy (Year) /Latest>
- Date of latest post
- Number of messages posted

When (the number of) the program community members cannot be contained on one screen, the screen can be scrolled page by page by operating the [∧] key (jump cursor key) and the [∨] key (jump cursor key).

By selecting each member (one member), i.e., by focusing on the field of an arbitrary member and turning on the [enter] key, a detailed screen of the member is displayed.

By turning on the [Return] key, the program community top screen is closed.

### « Program Community Member Details»

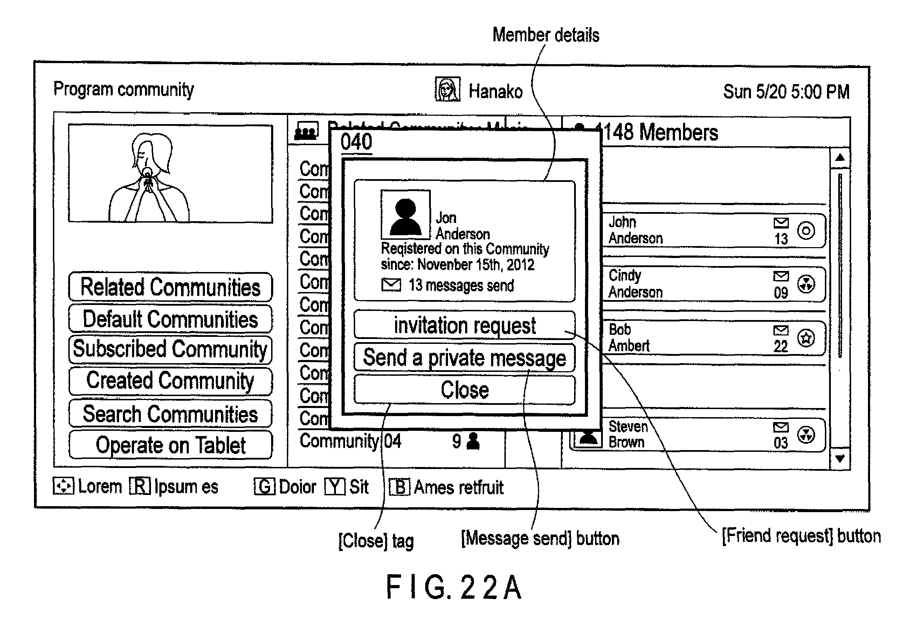

FIG. 22A is an exemplary diagram of a screen display of the display device according to the embodiment, illustrating an example of a [Member details <"Member (Selected Contacts)">] screen display.

By focusing on one member by operating a cursor key on the [Program community member list] screen display shown in FIG. 21A and turning on the enter key (selecting a member <"Member (Selected Contacts)">), the screen display of the [Member details] screen [40] shown in FIG. 22A is displayed as a pop-up.

The screen display of the [Member details] screen [040] includes the following:
[1] Member details <"Member (Selected Contacts)"> field
[2] [Friend request <"Invitation request">] button
[3] [Message send <"Send a private message">] button
[4] [Close <"Close">] button

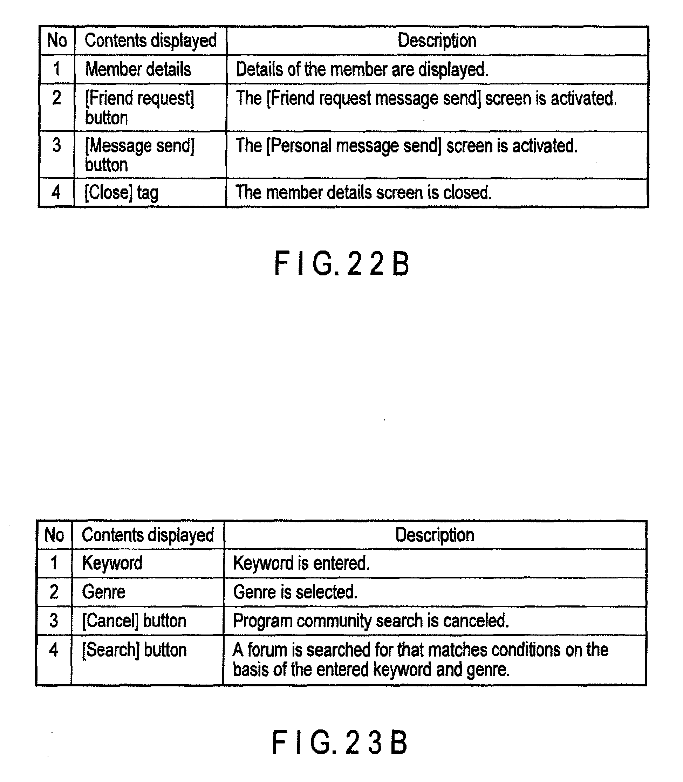

FIG. 22B is an exemplary diagram of the contents of the screen display shown in FIG. 22A, illustrating the contents to be displayed on the member details screen.

### [1] Member details

Details of the member are displayed.

### [2] [Friend request]

A [Friend request message send] (message send screen of INBOX [FIG. 35]) screen is activated. The display (activation of the screen) is displayed when the logged-in user and a participating member selected from the [program community member list] screen are not friends.

### [3] [Message send]

A [Personal message send] screen (message send screen of INBOX (FIG. 34) is activated.

### [4] [Close] button

The member details screen is closed.
[↑] key
[↓] key

Each of the arrow keys shifts [1] Member details, [2] [Friend request], and [3] [Message send] by one.

### [Enter] key

When a button is focused on, a function of the button is activated (a function of the button that is focused on is activated [a control signal for executing the function of the button is output]).

### «Program Community Search»

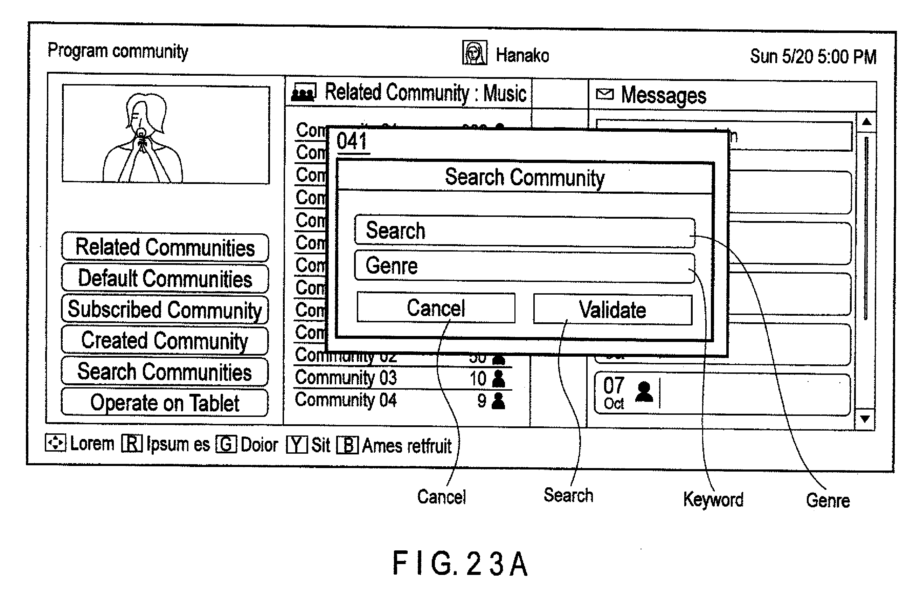

FIG. 23A is an exemplary diagram of a screen display of the display device according to the embodiment, illustrating a display example of the [Program community search] screen.

By focusing on the [Program community search] by operating a cursor key on the [Program community top] screen display shown in FIG. 11A and turning on the enter button, the screen display of the [Program community search] screen [041] shown in FIG. 23A is displayed as a pop-up.

The [Program community search <"Search Forum">] screen displays the following:
[1] Keyword <"Search"> field
[2] Genre <"Genre"> field
[3] [Cancel <"Cancel">] button
[4] [Search <"Validate">] button

FIG. 23B is an exemplary diagram of the contents of the screen display shown in FIG. 23A, illustrating the contents to be displayed on the screen display of the [Program community search] screen [041].

The program community search screen includes the following:

### [1] Keyword

A keyword is entered (a GUI [character input] screen of a digital TV is used for inputting characters).

### [2] Genre

A genre is selected.

### [3] [Cancel] button

[Program community search] is canceled.

### [4] [Search] button

A [program community] is searched for that better matches conditions on the basis of the entered keyword and genre.

### [Enter] key

In the case of a [keyword], characters are entered.

In the case of a [genre], a genre select screen is displayed.

When a button is focused on, a function of the button is activated.

### [Return] key

The [program community search] screen is closed.

### «Automatic Recording Basic Settings»

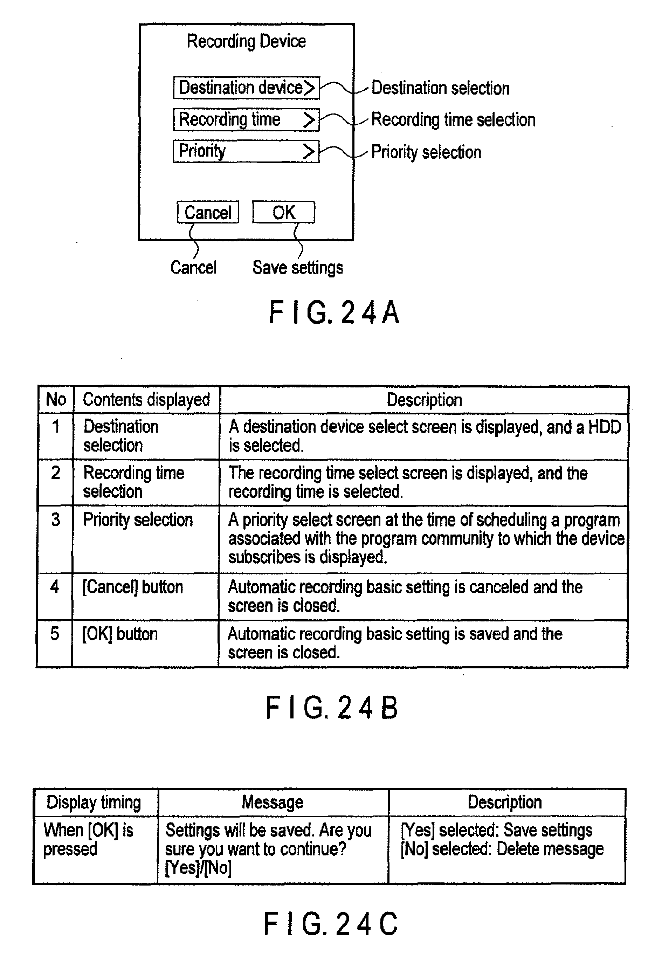

FIG. 24A is an exemplary diagram of a screen display of the display device according to the embodiment, illustrating an example of a screen display of the [Automatic recording basic settings] screen.

By focusing on the [Cloud menu <Cloud Menu>] by operating a cursor key and turning on the enter button on the [Home (HOME)] screen display shown in FIGS. 5A and 5B, the [automatic recording basic setting <"Auto REC Setting">] screen shown in FIG. 24A is displayed as a pop-up. The pop-up is also activated when the user wants to make the [Program community register <"Subscribe">] settings but has not made basic settings for the [Automatic recording <"Auto REC">].

The [Automatic recording basic setting] screen shown in FIG. 24A includes the following:
[1] Destination device select <"Target Device"> field
[2] Recording time select <"Available Recording Time"> field
[3] Priority select <"Priority"> field
[4] Cancel <"Cancel"> button
[5] [OK (Save settings)] <"OK <Save>">] button

FIG. 24B is an exemplary diagram of the contents of the screen display shown in FIG. 24A, illustrating items to be displayed on the [Automatic recording basic settings] screen.

### [1] Destination device select

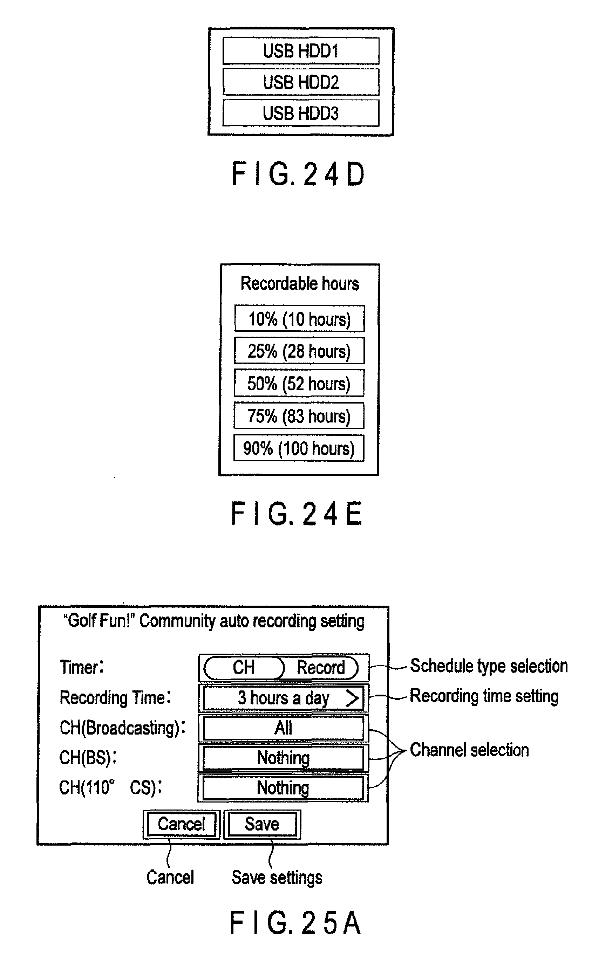

A destination device select screen (FIG. 24D) is displayed, and a HDD (recording device) is selected.

### [2] Recording time select

The recording time select screen (FIG. 24E) is displayed, and the recording time is selected. An approximate value of the recording time to be displayed is calculated on the basis of the effective capacity (which is not occupied by control information or management information, and can be used by the user to record [save] content) of the HDD and displayed.

### [3] Priority select

A priority select screen (FIG. 44) at the time of scheduling a program associated with the program community in which the user is registered is displayed.

### [4] [Cancel] button

The [Automatic recording basic setting] is canceled and the screen is closed.

### [5] [OK (Save settings)] button

The [automatic recording basic setting] is saved and the screen is closed.

By operating (turning on [pressing]) the [Enter] key of the remote control unit, the function of the button is activated (the function of the focused [button] is activated [a control signal that executes a function of the button is output]). That is, the above-described destination device select screen (FIG. 24D) is displayed in the [1] destination device select field. The above-described recording time select screen (FIG. 24E) is displayed in the [2] recording time select field. The above-described priority select screen (FIG. 44) is displayed in the [3] priority select field.

By operating (turning on [pressing]) the [Return] key of the remote control unit, the automatic recording basic settings are canceled, and the screen is closed.

Further, when the [OK (Save settings)] button displayed on the [Automatic recording basic settings] screen is turned on (pressed), as shown in FIG. 24C, an alert screen including a message to the effect that "Settings will be saved. Are you sure you want to continue?" and YES and NO buttons, for example, will be displayed as a pop-up.

When YES is selected in response to the alert screen (message screen) display, the settings are saved. When NO is selected, the alert screen (pop-up) is deleted.

### «Automatic recording condition settings»

FIG. 25A is an exemplary diagram of a screen display of the display device according to the embodiment, in which [Automatic recording condition settings <"'+++ community' community auto recording setting"> are made, i.e., conditions are set when a program recommended by a program community in which the user participates is recorded.

By focusing on the [Registered program community <"Subscribed Community">]] on the [Program community top] screen display shown in FIG. 11A by operating a cursor key and turning on the enter button, the "automatic recording condition settings" <"'+++ community' community auto recording setting">] screen shown in FIG. 25A is displayed as a pop-up.

The [Automatic recording condition settings] screen shown in FIG. 25A includes the following:
[1] Schedule type select <"Timer"> field
[2] Recording time setting <"Recording Time"> field
[3] Channel select <"CH (Broadcasting)"/"CH (BS)"/("CH (CS)")>] field
[4] Cancel <"Cancel">] button
[5] [OK (Save settings)] <"OK <Save>">] button

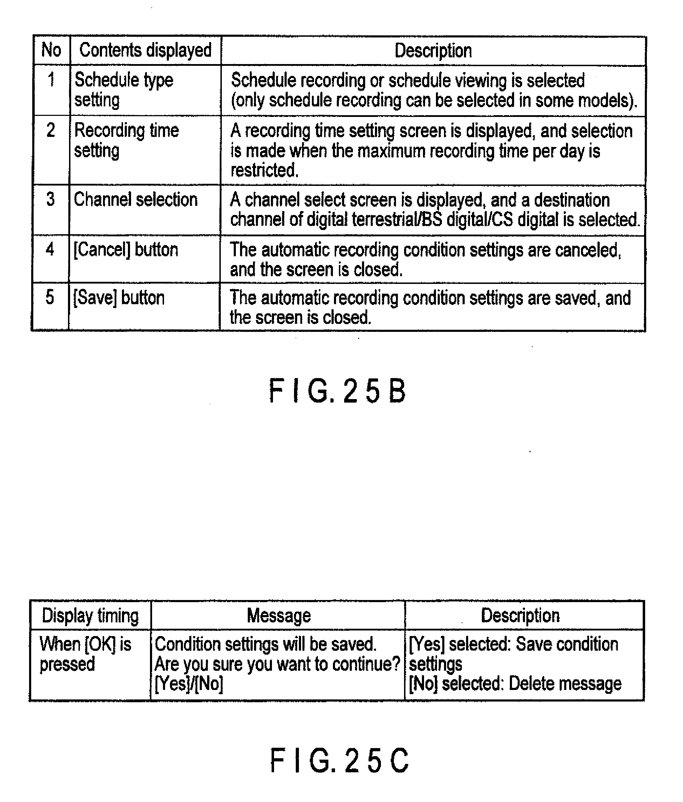

FIG. 25B is an exemplary diagram of the contents of the screen display shown in FIG. 25A, illustrating the contents of the [Automatic recording condition settings] screen.

### [1] Schedule type select

Scheduled recording or scheduled viewing is selected «only scheduled recording can be selected in some models»

### [2] Recording time setting

Selection (input) can be made on the recording time setting screen (FIG. 5F) when the maximum recording time per day is restricted.

### [3] Priority select

A channel select screen (FIG. 5E) is displayed, and a destination channel of each of regular broadcasting (terrestrial digital), BS (digital) broadcasting, and CS (digital) broadcasting can be selected (entered).

### [4] [Cancel] button

The automatic recording condition settings are canceled, and the screen is closed.

### [5] [Save] button

The automatic recording condition settings are saved, and the screen is closed.

By operating (turning on [pressing]) the [Enter] key of the remote control unit, the function of the button is activated (the function of the button of the focused [button] is activated [a control signal that executes the function of the button is output]). That is, a select screen of each setting value is displayed in selection of a variety of settings.

By operating (turning on [pressing]) the [Return] key of the remote control unit, the automatic recording basic settings are canceled, and the screen is closed.

When the [Save] button displayed on the automatic recording condition settings screen is turned on (pressed), for example, as shown in FIG. 25C, an alert screen including a message "Settings will be saved. Are you sure you want to continue?" and YES and NO buttons, for example, are displayed as a pop-up.

When YES is selected in response to the alert screen display, the settings are saved.

When NO is selected, on the other hand, the alert screen is deleted.

### «Schedule time setting»

FIG. 5F is an exemplary diagram of a screen display of the display device according to the embodiment, illustrating an exemplary screen display for making [schedule time settings "Recording" for "Timer on a day"], which are conditions per day for recording programs recommended by the program community in which the user participates, on the basis of the [Automatic recording condition settings] shown in FIG. 25A.

The [Schedule time setting] screen shown in FIG. 5F includes the following:
[1] 1 hour a day <"1 hour a day"> field
[2] 3 hours a day <"3 hours a day"> field
[3] 6 hours a day <"6 hours a day"> field
[4] No restriction <"All"> field

FIG. 26 is an exemplary diagram of the contents of the screen display shown in FIG. 5F, illustrating the contents to be displayed on the [Schedule time setting] screen.

### [1] 1 hour a day

Programs registered in the program community are recorded within the limit of 1 hour per day.

### [2] 3 hours a day

Programs registered in the program community are recorded within the limit of 3 hours per day.

### [3] 6 hours a day

Programs registered in the program community are recorded within the limit of 6 hours per day.

### [4] No restriction

Programs registered in the program community are recorded with no limit.

By operating (turning on [pressing]) the [Enter] key of the remote control unit, the selected schedule time is set (saved), and the screen is closed.

By operating (turning on [pressing]) the [Return] key of the remote control unit, the [schedule time setting] screen is closed.

FIG. 27 illustrates the contents to be displayed on the [Channel select] screen display shown in FIG. 5E.

### [1] Not Eligible

Programs of selected broadcasting (terrestrial digital, BS digital, or CS digital) will not be eligible for recording (will not be recorded).

### [2] No restriction

All the programs of selected broadcasting (terrestrial digital, BS digital, and CS digital) will be eligible for recording.

### [3] Detail settings

A detailed channel of the selected broadcasting (terrestrial digital, BS digital, or CS digital) is set.

By operating (turning on [pressing]) the [Enter] key of the remote control unit, selection of the selected channel is set.

By operating (turning on [pressing]) the [Return] key of the remote control unit, the [Channel select] screen is closed.

FIG. 44 illustrates a [Priority <"Recording Priority"> setting for program communities] screen when the [program community priority] is selected. The priority can be set by members including the user.

FIG. 28 illustrates the contents to be displayed on the [Priority] screen display shown in FIG. 44.

### [1] Program community list <"List">

A list of set program communities is displayed.

### [2] Selected program community <"Selected Community"> (display)

By moving a cursor of the remote control, the selected program community is displayed.

After the selection, the program community is moved with the [↑][↓] keys of the remote control, and the order of priority is determined (in descending order of priority).

By operating (turning on (pressing]) the [Enter] key of the remote control unit once [first time], the target program community is selected. By operating (turning on [pressing]) the [Enter] key once more [twice], the selected program community is deselected.

By operating (turning on [pressing]) the [Return] key of the remote control unit, the [program community priority] screen is closed.

When the [OK] button is turned on (pressed), an alert screen which prompts the user to make confirmation in accordance with an alert screen display is displayed, and one of the inputs YES and NO (from the user) is received.

The [Priority] screen shown in FIG. 44 further includes, as a program community which one of the family members, for example, the father subscribes to, the following:
[a] American football <"American football"> fan program community
   The [Priority] screen shown in FIG. 44 includes, as program communities which Saya (family member) subscribes to, for example, the following:
[b] Celtic music <"Celtic music"> program community
[c] Golf <"Golf fun"> program community
[d] Popularity ranking <"Ranking"> program community
[e] FΔFΔ <"Football"> program community

In the example shown in FIG. 44, the lastly set order of priority for the program communities is saved. That is, the [a] American football <"American football"> fan program community, which the father subscribes to, is given a higher priority than the [b] Celtic music <"Celtic music"> program community, which Saya subscribes to, for example.

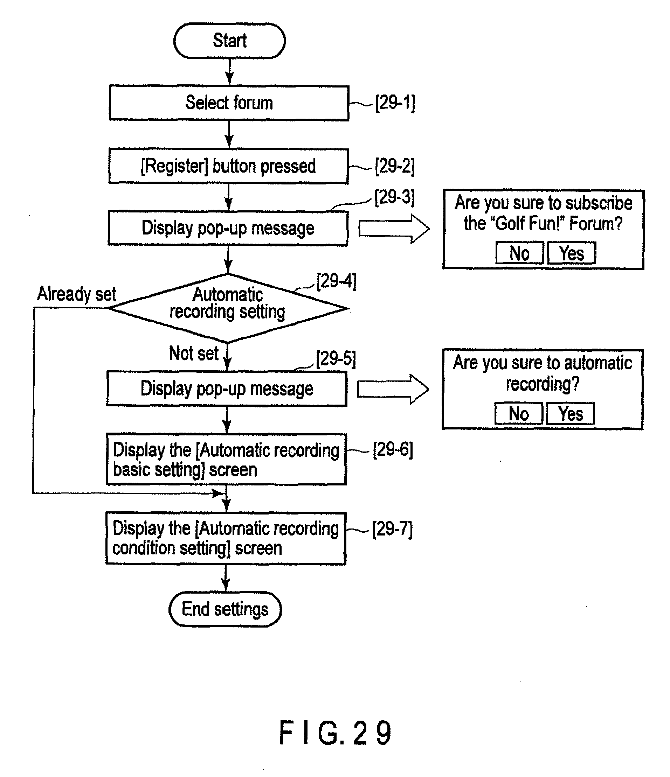

FIG. 29 illustrates an operation when [Automatic recording <"Auto Recording">] is not set (unset).

Scheduled recording or scheduled viewing by registration in a program community needs to be performed after setting automatic recording in the main body of the television set 101. Accordingly, when subscription settings are made from the program community list, it is necessary to check whether automatic recording settings have been made, display an alert message when the settings have not been made, and guide the user to make automatic recording settings.

As shown in FIG. 29, in the automatic recording settings, in association with registration in the program community, a program community is selected [29-1], the [Register] button is turned on (pressed) [29-2], a registration confirmation pop-up message is displayed [29-3], whether automatic recording settings have been made or not is determined [29-4], and it is confirmed that the automatic recording settings have been made [29-4-YES].

When the automatic recording settings have not been made [29-4-NO], a pop-up message confirming the intention to set automatic recording is displayed [29-5], and an "automatic recording basic settings" screen is displayed and the user is prompted to make automatic recording settings [29-6].

After that, the "Register/automatic recording" screen shown in FIG. 5D is displayed scheduled recording or scheduled viewing is enabled by registration in the program community, and thereby [Automatic recording] settings are completed.

By thus selecting (registering in) a program community (cluster group) on the basis of a cluster group (program community) in which a performer, a group, an arbitrary member of the group members, a genre, a co-star, and the like of a program stored in the television set (recorded program list) 101 are set as clusters, it is possible to present optimum and various program search results matching the user's viewing request (demand) (scheduled automatic recording), without the need to enter characters during viewing of a program being broadcast or a recorded program being played back.

Further, since the search result is displayed not as a list of programs but as a list of an arbitrary number of cluster groups, a high extensibility can be provided in a search procedure by a user (member).

Since the program community (cluster group) can be edited (modified) or added by registered members (users), each user's (member's) know-how on search is accumulated, and precision in search result is improved. Further, since the search result in which know-how on search is accumulated can be shared among the users (members) of the program community (cluster group), a proposal (refinement) made by a small number of well-informed people can be enjoyed by a number of users.

Moreover, since users with similar interests and preferences gather in a cluster group, communications are encouraged among the users with similar interests and preferences.

The above-described embodiments of the present invention are presented by way of example only, and are not intended to limit the scope of the invention. The novel embodiments may be carried out in various other forms, and various omissions, substitutions, and modifications may be performed within the range of not departing from the spirit of the invention. The embodiments and modifications thereof are included in the scope or spirit of the invention and in the appended claims and their equivalents.

## Claims

1. An electronic apparatus (101, 111, 201, 202) **characterized by** comprising:
a group specifying controller (101, 111) configured to specify a cluster group comprising clusters in content being played back;
an access controller (101, 111) configured to access a collection of arbitrary cluster groups related to the cluster group specified by the group specification controller;
a search controller (101, 111) configured to search for content specified by a first cluster group included in the collection accessed by the access controller; and
a content presentation controller (101, 111) configured to present a result of search by the search controller.

2. The electronic apparatus of claim 1, **characterized in that**
the collection of cluster groups specified by the group specification controller can be changed.

3. The electronic apparatus of claim 1, **characterized in that**
an order of search by the search controller can be changed.

4. The electronic apparatus of claim 3, **characterized in that**
the order of search by the search controller can be changed on the basis of a viewing history of the content.

5. The electronic apparatus of claim 3, **characterized in that**
the order of search by the search controller can be changed on the basis of popularity of the content.

6. The electronic apparatus of claim 1, **characterized by** further comprising:
a scheduling controller (121, 131(101)) configured to schedule recording of the content presented by the content presentation controller.

7. A program recommendation system (101, 111, 201, 202, 1001) **characterized by** comprising:
a group specification controller (101, 111) configured to specify a cluster group comprising clusters in content being played back;
an access controller (101, 111) configured to access a collection of arbitrary cluster groups related to the cluster group specified by the group specification controller;
a search controller (101, 111) configured to search for content specified by a first cluster group included in the collection accessed by the access controller; and
a content presentation controller (101, 111) configured to present a result of search by the search controller.

8. The program recommendation system of claim 7, **characterized in that**
the content of collection of the cluster groups specified by the group specification controller can be changed.

9. The program recommendation system of claim 7, **characterized in that**
an order of search by the search controller can be changed.

10. The program recommendation system of claim 9, **characterized in that**
the order of search by the search controller can be changed based on a viewing history of the content.

11. The program recommendation system of claim 9, **characterized in that**
the order of search by the search controller can be changed based on popularity of the content.

12. A program recommendation method **characterized by** comprising:
specifying a cluster group comprising clusters in content being played back;
accessing a collection of arbitrary cluster groups related to the specified cluster group and searching for a program specified by a first cluster group included in the accessed collection; and
presenting a result of search.

13. The program recommendation method of claim 12, **characterized in that**
the content of collection of the cluster groups specified by the group specification controller can be changed.

14. The program recommendation method of claim 12, **characterized in that**
an order of search by the search controller can be changed.

15. The program recommendation method of claim 14, **characterized in that**
the order of search by the search controller can be changed on the basis of a viewing history of the content.

16. The program recommendation system of claim 14, **characterized in that**
the order of search by the search controller can be changed on the basis of popularity of the content.

17. A program recommendation program **characterized by** comprising:
specifying a cluster group comprising clusters in content being played back;
accessing a collection of arbitrary cluster groups related to the specified cluster group and searching for a program specified by a first cluster group included in the accessed collection; and
presenting a result of search.
